(19) Europäisches Patentamt / European Patent Office / Office européen des brevets

(11) **EP 3 095 827 B1**

(12) **EUROPÄISCHE PATENTSCHRIFT**

(45) Veröffentlichungstag und Bekanntmachung des Hinweises auf die Patenterteilung:
**24.04.2019 Patentblatt 2019/17**

(51) Int Cl.:
***C09D 183/04*** *(2006.01)* ***C09D 5/10*** *(2006.01)*
***C08K 3/00*** *(2018.01)* ***C09D 183/10*** *(2006.01)*

(21) Anmeldenummer: **15168650.8**

(22) Anmeldetag: **21.05.2015**

(54) **ZUSAMMENSETZUNGEN AUF BASIS VON ORGANOSILICIUM-VERBINDUNGEN UND DEREN VERWENDUNG ALS BESCHICHTUNGSMITTEL, INSBESONDERE ZUM KORROSIONSSCHUTZ VON METALLEN**

COMPOSITIONS BASED ON ORGANOSILICON COMPOUNDS AND THEIR USE AS COATING MATERIAL, IN PARTICULAR FOR THE CORROSION PROTECTION OF METALS

COMPOSITIONS À BASE DE LIAISONS D'ORGANOSILICIUM ET LEUR UTILISATION EN TANT QU'AGENT DE REVÊTEMENT, EN PARTICULIER POUR LA PROTECTION CONTRE LA CORROSION DE MÉTAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.11.2016 Patentblatt 2016/47**

(73) Patentinhaber: **MIPA SE**
**84051 Essenbach (DE)**

(72) Erfinder:
- **Rohr, Uwe**
  **84051 Essenbach/Mirskofen (DE)**
- **Stempfhuber, Thomas**
  **84061 Ergoldsbach (DE)**

(74) Vertreter: **Müller, Christian Stefan Gerd**
**ZSP Patentanwälte PartG mbB**
**Hansastraße 32**
**80686 München (DE)**

(56) Entgegenhaltungen:
**DE-A1-102009 052 399** **US-A1- 2009 078 155**

EP 3 095 827 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine Beschichtungszusammensetzung, die ein Bindemittel, einen Härter sowie Partikel einer Legierung mit Zink und Magnesium umfasst, wobei das Bindemittel und der Härter auf Organosilicium-Verbindungen basieren und die Beschichtungszusammensetzung im Wesentlichen frei von Wasser und chromhaltigen Verbindungen, gegebenenfalls auch frei von Bisphenol A-Verbindungen ist.

## HINTERGRUND DER ERFINDUNG

Aufgrund von Korrosion von Metallen wie Eisen entstehen jedes Jahr allein in Deutschland Schäden in Milliardenhöhe. Die Korrosion ist ein langsamer Oxidationsprozess an der Oberfläche eines Metalls, wobei Sauerstoff aus der Umgebung (z.B. Luftsauerstoff) als Oxidationsmittel fungiert und Wasser zusammen mit darin gelösten Salzen und/oder Säuren die Korrosion unterstützen. Aus diesem Grund ist es wirtschaftlich notwendig, Korrosionsschutzmittel bereitzustellen, die in der Lage sind, Metalle wie z.B. Eisen oder andere unedle Metalle vor Oxidation zu schützen.

Häufig wurden zum Korrosionsschutz von bestimmten Metallen wie Aluminium und Eisen chromhaltige Mittel (insbesondere Mittel, die $Cr^{VI}$ enthalten) verwendet, da sie eine fest anhaftende Oxidschicht auf dem darunter liegenden Metall ausbilden und somit dieses Metall schützen. Allerdings wird aus gesundheitlichen und ökologischen Gesichtspunkten der Einsatz von chromhaltigen Korrosionsschutzmitteln immer weiter eingeschränkt und ab dem 21. September 2017 dürfen physiologisch bedenkliche Inhaltsstoffe (wie z.B. chromhaltige Verbindungen) nicht mehr in den Verkehr gebracht werden.

Auch kommen Zinkstaubfarben als Korrosionsschutzmittel zum Einsatz. Jedoch muss für einen ausreichenden Korrosionsschutz die Konzentration des Zinkstaubs sehr hoch gewählt werden, wodurch sich die Eigenschaften des auf dem Metall abgeschiedenen Lackfilms signifikant verschlechtern. Z.B. ist die Dichte des Lackfilms sehr hoch, was ungünstig für den Einsatz im Leichtbau ist, und/oder die Elastizität des Lackfilms ist gering, was zu einer schlechten Zwischenhaftung führen kann, und/oder die Pigmentvolumenkonzentration des Lackfilms ist hoch, was zu einer schlechten Spritznebelaufnahme führen kann.

Es besteht somit ein Bedarf an einer Beschichtungszusammensetzung, die keine physiologisch bedenklichen Inhaltsstoffe (insbesondere keine chromhaltigen Verbindungen) umfasst, jedoch den bewährten Korrosionsschutz beibehält und sicher angewendet werden kann. Außerdem wäre es wünschenswert, dass die Beschichtungszusammensetzung derart ausgestaltet ist, so dass (i) Lösungsmittelemissionen reduziert werden, (ii) die Dichte der Beschichtung, die sich nach Auftragung der Beschichtungszusammensetzung auf ein Metall ausbildet, gering ist, (iii) die Beschichtung energetisch und/oder zeitlich effizient erfolgen kann (z.B. Minimierung der Anzahl an Arbeitsschritten, und/oder der benötigten Energie) und/oder (iv) optimale mechanische Eigenschaften (z.B. Elastizität und/oder Zwischenhaftung) erreicht werden.

In einem ersten Aspekt wird daher zur Lösung einer oder mehreren der vorstehenden Aufgaben eine Beschichtungszusammensetzung, die die Merkmale von Anspruch 1 umfasst, bereitgestellt. In weiteren Aspekten werden die Verwendung einer Beschichtungszusammensetzung des ersten Aspekts zur Beschichtung einer metallischen Oberfläche sowie ein Verfahren zur Beschichtung einer metallischen Oberfläche bereitgestellt, wobei das Verfahren ein Aufbringen einer Beschichtungszusammensetzung des ersten Aspekts auf zumindest einen Teil der metallischen Oberfläche und gegebenenfalls ein Aushärten der Beschichtungszusammensetzung umfasst.

Weitere erfindungsgemäße Aspekte und Merkmale werden aus dem Folgenden ersichtlich.

Das Dokument DE 10 2009 052399 offenbart eine Zusammensetzung, die eine Zn/Mg Legierung enthält. Sie weist auch kein Wasser und keine Chromverbindung auf.

## KURZE BESCHREIBUNG DER ABBILDUNGEN

Abbildung 1 zeigt schematisch die Vorgänge, die sich an einer Eisenoberfläche unter Einwirkung von Sauerstoff und einer wässrigen Elektrolytlösung abspielen.

Abbildungen 2a und 2b sind Diagramme, die die Ergebnisse (Rostgrad, Blasengröße und Blasenmenge) von Salzsprühtests (nach DIN EN ISO 9227) zeigen, bei denen Metalle (a: Aluminium; b: Stahl), die mit verschiedenen Zusammensetzungen (Kontrolle 1 (2K-Zinkstaubfarbe; hellgrau); erfindungsgemäße Beschichtungszusammensetzung (BZ 1; dunkelgrau); Kontrolle 2 (herkömmlicher Chrom(VI)-Primer + 2K-EP-Grundierung; schwarz)) behandelt worden waren, mit Salz besprüht wurden. Abbildung 2c zeigt zwei Prüflinge, die mit entweder Kontrolle 1 (2K-Zinkstaubfarbe; links) oder erfindungsgemäßer Beschichtungszusammensetzung (rechts) beschichtet worden waren, jeweils eine Ritzlinie aufwiesen und Salzsprühtests für 1160 h unterzogen wurden.

Abbildungen 3a bis 3c sind Diagramme, die die Ergebnisse (Rostgrad, Blasengröße und Blasenmenge) von Kondenswassertests (QCT-Tests) nach DIN EN ISO 6270-2 zeigen, bei denen Metalle (a und b: Stahl c: Aluminium), die mit verschiedenen Zusammensetzungen (Kontrolle 1 (2K-Zinkstaubfarbe; hellgrau); erfindungsgemäße Beschichtungszusammensetzung (BZ 1; dunkelgrau); Kontrolle 2 (Chrom(VI)-Primer + 2K-EP-Grundierung; schwarz)) behandelt worden waren, Kondenswasser ausgesetzt wurden.

Abbildung 4 zeigt zwei Prüflinge, die mit entweder Kontrolle 1 (2K-Zinkstaubfarbe; links) oder erfindungsgemäßer Beschichtungszusammensetzung (rechts) beschichtet worden waren, jeweils eine Ritzlinie aufwiesen und Filiformkorrosionstests nach DIN EN ISO 4623-2 unterzogen wurden. Abbildung 5 ist ein Diagramm, das die Ergebnisse der Tiefungsprüfung von Aluminium-Substraten zeigt, die mit verschiedenen Zusammensetzungen (Kontrolle 1 (2K-Zinkstaubfarbe; hellgrau); erfindungsgemäße Beschichtungszusammensetzung (BZ 1; dunkelgrau); Kontrolle 2 (Chrom(VI)-Primer + 2K-EP-Grundierung; schwarz)) behandelt worden waren.

Abbildung 6 ist ein Diagramm, in dem das spezifische Gewicht von Beschichtungen dargestellt ist, die aus verschiedenen Zusammensetzungen (Kontrolle 1 (2K-Zinkstaubfarbe; hellgrau); erfindungsgemäße Beschichtungszusammensetzung (BZ 1; dunkelgrau); Kontrolle 2 (Chrom(VI)-Primer + 2K-EP-Grundierung; schwarz)) ausgebildet wurden.

Abbildung 7 ist ein Diagramm, das den Gehalt an flüchtigen organischen Substanzen (VOC) in Beschichtungen dargestellt, die aus verschiedenen Zusammensetzungen (Kontrolle 1 (2K-Zinkstaubfarbe; Säule 1); erfindungsgemäße Beschichtungszusammensetzung (BZ 1; Säule 2); Kontrolle 2 - Teil 1 (Chrom(VI)-Primer allein; Säule 3); Kontrolle 2 - Teil 2 (2K-EP-Grundierung allein; Säule 4)) ausgebildet wurden.

Abbildung 8 ist ein Diagramm, das die Farbveränderung ($\Delta E^*$) von Beschichtungen zeigt, die aus verschiedenen Zusammensetzungen (Kontrolle 1 (2K-Zinkstaubfarbe; hellgrau); erfindungsgemäße Beschichtungszusammensetzung (BZ 1; dunkelgrau); Kontrolle 2 (Chrom(VI)-Primer + 2K-EP-Grundierung; schwarz)) ausgebildet wurden.

Abbildung 9 zeigt den schematischen Aufbau von herkömmlichen Beschichtungen (1 und 3) und alternativen mittels erfindungsgemäßer Beschichtungszusammensetzungen (BZ 1) realisierbaren Beschichtungen (2 und 4). 2K-PU-Decklack: 2-Komponenten-Polyurethan-Decklack; 2K-EP-Grundierung: 2-Komponenten-Epoxyharz-Grundierung.

## GENAUE BESCHREIBUNG DER ERFINDUNG

Bei der Durchführung der vorliegenden Erfindung werden, wenn nicht anders angegeben, herkömmliche Verfahren der Chemie verwendet werden, die in der Literatur auf dem Fachgebiet erklärt sind (vgl. z.B. Organikum, Deutscher Verlag der Wissenschaften, Berlin 1990; Streitwieser/Heathcook, "Organische Chemie", VCH, 1990; Beyer/Walter, "Lehrbuch der Organischen Chemie", S. Hirzel Verlag Stuttgart, 1988; Carey/Sundberg, "Organische Chemie", VCH, 1995; March, "Advanced Organic Chemistry", John Wiley & Sons, 1985; Römpp Chemie Lexikon, Falbe/Regitz (Hrsg.), Georg Thieme Verlag Stuttgart, New York, 1989).

### *Definitionen*

Unter "Bindemittel" wird erfindungsgemäß eine Verbindung verstanden, durch die Partikel (z.B. in lamellarer Form) auf einem Substrat derart aufgebracht werden können, dass die Partikel zusammen mit dem Bindemittel (und gegebenenfalls mit weiteren Substanzen) auf dem Substrat haften. Vor der Auftragung auf das Substrat werden das Bindemittel und die Partikel (und gegebenenfalls weitere Substanzen) intensiv vermischt, damit sie sich gleichmäßig verteilen und alle Partikel gleichmäßig mit dem Bindemittel benetzt werden. Das Bindemittel weist vorzugsweise (i) mindestens eine funktionelle Gruppe auf, die fähig ist, mit einem Härter derart zu reagieren, dass sich ein dreidimensionales Netzwerk aus Bindemittel und Härter ergibt und/oder (ii) eine hydrolysierbare Gruppe auf, die sich mit Wasser zu einer freien OH-Gruppe umsetzt, die wiederum fähig ist, mit weiteren hydrolysierbaren Gruppen des Bindemittels derart zu reagieren, dass sich ein dreidimensionales Netzwerk aus dem Bindemittel ergibt.

Unter "Härter" oder "Vernetzungsmittel" wird erfindungsgemäß eine Verbindung verstanden, durch die eine Vielzahl einzelner Grundbausteine (z.B. eines Bindemittels) zu einem dreidimensionalen Netzwerk verknüpft wird. Der Härter weist vorzugsweise mindestens zwei funktionelle Gruppen auf, die fähig sind, mit einem Bindemittel zu reagieren, und gleich oder verschieden sein können.

Unter "Organosilicium-Verbindung" oder "siliciumorganische Verbindung" wird erfindungsgemäß eine Verbindung verstanden, die mindestens eine direkte Silicium-Kohlenstoff-Bindung (Si-C) aufweist. Organosilicium-Verbindungen mit nur einem Si-Atom können durch die allgemeine Formel $R'_nSiX_{4-n}$ (mit n von 1 bis 4) beschrieben werden, wobei R' jeweils unabhängig aus organischen Resten (wie z.B. ein Alkyl- Alkenyl-, Alkinyl-, Cycloalkyl-, Heterocycloalkyl-, Aryl- oder Heteroarylrest) ausgewählt wird und X jeweils unabhängig aus der Gruppe, bestehend aus -OH, Halogen (insbesondere -Cl) und -OR (wobei R eine monovalenter organischer Rest, insbesondere ein Alkylrest, wie $C_{1-8}$-Alkyl-, $C_{1-6}$-Alkyl- oder $C_{1-4}$-Alkylrest z.B. Methyl oder Ethyl, ist), ausgewählt wird. Z.B. können Organosilicium-Verbindungen der Formel $R'_nSiX_{4-n}$, wobei n 3 (2 bzw. 1) ist und X -OR ist (wobei R eine monovalenter organischer Rest, insbesondere ein Alkylrest, wie $C_{1-8}$-Alkyl-, $C_{1-6}$-Alkyl- oder $C_{1-4}$-Alkylrest z.B. Methyl oder Ethyl, ist), als Organomonoalkoxysilan (Organodialkoxysilan bzw. Organotrialkoxysilan) bezeichnet werden. Organosilicium-Verbindungen mit 2 Si-Atomen können durch die allgemeine Formel $(R')_s(Y)_{3-s}Si\text{-}R''\text{-}Si(R')_t(Y)_{3-t}$ (mit s von 1 bis 3 und t von 1 bis 3) beschrieben werden,

wobei R' jeweils unabhängig aus organischen Resten (wie z.B. ein Alkyl- Alkenyl-, Alkinyl-, Cycloalkyl-, Heterocycloalkyl-, Aryl- oder Heteroarylrest) ausgewählt wird, Y jeweils unabhängig aus der Gruppe, bestehend aus -OH, Halogen (insbesondere -Cl) und -OR (wobei R eine monovalenter organischer Rest, insbesondere ein Alkylrest, wie $C_{1-8}$-Alkyl-, $C_{1-6}$-Alkyl- oder $C_{1-4}$-Alkylrest z.B. Methyl oder Ethyl, ist), ausgewählt wird, und R" einen Rest darstellt, der ausgewählt wird aus der Gruppe, bestehend aus organischen divalenten Resten (z.B. Alkylen-, Alkenylen-, Alkinylen-, Cycloalkylen- und Heterocyclylenreste), -O- und -NH-.

Unter "Silikonharze" werden dreidimensionale Netzwerke verstanden, die durch hydrolytische Kondensation verschiedener Silicium-Verbindungen (z.B. einer oder mehrerer Organosilicium-Verbindungen (wie $R_nSiX_{4-n}$), gegebenenfalls in Gegenwart von einem oder mehreren Orthosilikaten (wie Tetraethylorthosilikat (TEOS))) entstehen. Beispielsweise kann eine Organosilicium-Verbindung der Formel $R'_nSiX_{4-n}$, worin X -Cl oder -OR (wobei R eine monovalenter organischer Rest, insbesondere ein Alkylrest, wie $C_{1-8}$-Alkyl-, $C_{1-6}$-Alkyl- oder $C_{1-4}$-Alkylrest z.B. Methyl oder Ethyl, ist) ist und R' ein organischer Rest ist, mit Wasser und/oder einem Alkohol (HOR, wobei R eine monovalenter organischer Rest, insbesondere ein Alkylrest, wie $C_{1-8}$-Alkyl-, $C_{1-6}$-Alkyl- oder $C_{1-4}$-Alkylrest z.B. Methyl oder Ethyl, ist) umgesetzt werden, wobei durch Hydrolysereaktionen (z.B. (schematisch) $SiCl + H_2O \rightarrow SiOH + HCl$; $SiCl + ROH \rightarrow SiOR + HCl$; und $SiOR + H_2O \rightarrow SiOH + HOR$) und Kondensationsreaktionen (z.B. (schematisch) $SiOH + SiOH \rightarrow Si\text{-}O\text{-}Si + H_2O$; und $SiOR + SiOH \rightarrow Si\text{-}O\text{-}Si + HOR$) Silkonharze ausgebildet werden, die keine Chloratome mehr enthalten, jedoch OH- und/oder OR-Endgruppen sowie organische Gruppen, die direkt an Si-Atome gebunden sind (direkte C-Si-Bindung), aufweisen. Silikonharze können beispielsweise die Formel $(R^6)_aSi(OR^7)_bO_{(4-a-b)/2}$ aufweisen, worin $R^6$ jeweils unabhängig ein monovalenter organischer Rest (insbesondere ausgewählt aus der Gruppe, bestehend aus monovalenten Alkyl- und Arylresten, wie $C_{1-10}$-Alkyl- und $C_{6-14}$-Arylresten) ist, $R^7$ ein monovalenter Alkylrest (wie ein monovalenter $C_{1-10}$-Alkylrest) ist, a einen Wert von 0,1 bis 2,0 aufweist und b einen Wert von 0,1 bis 1,0 aufweist. Vorzugsweise gilt $0,1 < a < 2,0$ und $0,1 < b < 1,0$. Das Molekulargewicht solcher Silkonharze kann durch die Reaktionsbedingungen und gegebenenfalls durch die Zugabe weiterer Verbindungen (z.B. Di-, Tri-, Tetra- oder Polyole, insbesondere Di-, Tri-, Tetra- oder Polyole mit einem Molekulargewicht von < 5000 g/mol, wie Glykole (wie Ethylenglykol oder Polyethylenglykol), Trimethylolpropan, Trimethylolethan oder Polyesterpolyole (insbesondere denjenigen mit einer Hydroxyfunktionalität von etwa 200 bis 600 mg/mol KOH/g Polyesterpolyol (OH-Zahl)) wie Bis(2,2-dihydroxymethyl)butylterephthalat), die zu einer weiteren Vernetzung führen können, gesteuert werden. Z.B. kann das Molekulargewicht von Silikonharzen im Bereich von 1000 bis 10 000 g/mol (wie 2000 bis 8000 g/mol, 2500 bis 7000 g/mol, 3000 bis 6000 g/mol, 4000 bis 5000 g/mol) liegen. Vorzugsweise weisen Silkonharze nahezu ausschließlich Si-OR-Endgruppen und kaum Si-OH-Gruppen auf.

Unter "funktionelle Gruppe" einer Verbindung wird erfindungsgemäß eine Atomgruppe der Verbindung verstanden, die die Stoffeigenschaften und das Reaktionsverhalten der Verbindung, die die funktionelle Gruppe trägt, maßgeblich bestimmt. Verbindungen, die die gleichen funktionellen Gruppen tragen, werden oft zu Stoffklassen, die ähnliche Eigenschaften aufweisen, zusammengefasst. Beispiele funktioneller Gruppen beinhalten Acyl- (z.B. gesättigt (wie Acetyl-) oder ungesättigt (z.B. Acryl-, Methacryl-)), Aldehyd-, Alkenyl- (z.B. Vinyl-), Alkoxysilyl-, Alkylsulfonyl-, Amino-, Azido-, Carboxyloxy- (d.h. R-C(O)O-, worin R ein organischer monovalenter Rest ist; z.B. Acryloxy-, Methacryloxy-), Carboxyl- (-COOH), Epoxy- (z.B. Glycidyl- oder Glycidyloxy-), Glykol-, Hydrazino-, Hydroxy-, Hydroxylamino-, Keto-, Mercapto-, Sulfonyl- und Ureidogruppen. Beispiele bevorzugter funktioneller Gruppen beinhalten Amino-, Epoxy-, Carboxyl-, Glykol-, Mercapto-, Hydroxy-, Alkoxysilyl-, Acryloxy-, Methacryloxy-, Ureido- und Vinylgruppen.

Unter "komplementären funktionellen Gruppen" werden erfindungsgemäß Paare von funktionellen Gruppen verstanden, die miteinander unter Ausbildung einer Bindung (insbesondere einer kovalenten Bindung) reagieren. Eine Vielzahl von komplementären funktionellen Gruppen ist bekannt. Die Auswahl eines spezifischen Paars von komplementären funktionellen Gruppen hängt von einer Vielzahl von Faktoren ab, die dem Fachmann bekannt sind. Beispiele solcher Paare beinhalten in nicht begrenzender Weise (wobei in Klammer hinter dem jeweiligen Paar die daraus resultierende kovalente Verknüpfung angegeben ist): Acylazide - Amine (Carbonsäureamide); Acylhalogenide - Alkohole (Ester); Acylhalogenide - Amine (Carbonsäureamide); Acylhalogenide - Thiole (Thioester); Acylnitrile - Alkohole (Ester); Acylnitrile - Amine (Carbonsäureamide); aktivierter Ester - Amine (Carbonsäureamide); Aldehyde - Amine (Imine); Aldehyde/Ketone - Hydrazine (Hydrazone); Aldehyde/Ketone - Hydroxylamine (Oxime); Alkoxysilane (z.B. Organomonoalkoxysilan, Organodialkoxysilan oder Organotrialkoxysilan) - Alkohole, z.B. Glykole (Siloxane); Alkylhalogenide - Thiole (Thioether); Alkylsulfonylhalogenide - Alkohole (Alkylsulfonate); Alkylsulfonylhalogenide - Amine (Alkylsulfonamide); Carbonsäureanhydride - Amine (Carbonsäureamide); Arylhalogenide - Amine (Arylamine); Arylhalogenide - Thiole (Arylthioether); Aziridine - Thiole (Thioether); Boronate - Glykole (Boronatester); Carbodiimide - Carbonsäuren (N-Acylharnstoffe oder -anhydride); Carbonsäuren - Alkohole (Ester); Carbonsäuren - Amine (Carbonsäureamide); Carbonsäuren - Hydrazine (Hydrazide); Diazoalkane - Carbonsäuren (Ester); Epoxide - Amine (Aminoalkohole); Epoxide - Ureidoverbindungen (beidseitig substituierte Harnstoffverbindungen); Epoxide - Alkohole, z.B. Glykole (Ether bzw. Etheralkohole); Epoxide - Thiole (Thioether); Halogenacetamide - Thiole (Thioether); Halogentriazine - Alkohole (Triazinylether); Halogentriazine - Amine (Aminotriazine); Imidoester - Amine (Amidine); Maleimide - Thiole (Thioether); Phosphoramidite - Alkohole (Phosphitester); Silylhalogenide - Alkohole (Silylether); Sulfonatester - Alkohole (Ether); Sulfonatester - Amine

(Alkylamine); Sulfonatester - Carbonsäuren (Ester); Sulfonatester - Thiole (Thioether); Sulfonylhalogenide - Alkohole (Sulfonatester); Sulfonylhalogenide - Amine (Sulfonamide). Daneben können auch zwei gleiche oder unterschiedliche ungesättigte Verbindungen (z.B. Verbindungen mit einer Vinyl-, (Meth)Acryl- oder (Meth)Acryloxgruppe) zu entsprechenden Polymeren (z.B. Polyvinyl-, Poly(meth)acyrlat-Poly(meth)acrylatoxypolymeren oder gemischten Polymeren) umgesetzt werden. Dem Fachmann sind die Bedingungen, unter denen die komplementären funktionellen Gruppen miteinander zu kovalenten Verknüpfungen reagieren können, bekannt. Bevorzugte Paare von komplementären funktionellen Gruppen beinhalten Epoxid - Amin (insbesondere primäres oder sekundäres Amin); Epoxid - Ureidoverbindung; Epoxid - Alkohol (wie Glykol); Epoxid - Thiol; Alkoxysilan - Alkohol (wie Glykol); Verbindung mit ethylenischer Ungesättigtheit (wie eine Verbindung mit einer Vinyl-, Acryloxy- oder Methacryloxygruppe) - Verbindung mit ethylenischer Ungesättigtheit (wie eine Verbindung mit einer Vinyl-, Acryloxy- oder Methacryloxygruppe); Carbonsäure - Alkohol; Carbonsäure - Amin.

Eine funktionelle Gruppe eines Bindemittels, die fähig ist, mit einem Härter zu reagieren, ist vorzugsweise eine funktionelle Gruppe (z.B. Epoxy-, Hydroxy-/Alkoxysilyl- oder Aminogruppe, wie Epoxy-, Hydroxy- oder Aminogruppe), die mit einer entsprechenden, komplementären funktionellen Gruppe (z.B. Amino-, Alkoxysilyl-/Hydroxy- oder Epoxygruppe, wie Amino-, Alkoxysilyl- oder Epoxygruppe) des Härters reagieren kann. Eine funktionelle Gruppe eines Härters, die fähig ist, mit einem Bindemittel zu reagieren, ist vorzugsweise eine funktionelle Gruppe (z.B. Amino-, Alkoxysilyl-/Hydroxy- oder Epoxygruppe, wie Amino-, Alkoxysilyl- oder Epoxygruppe), die mit einer entsprechenden, komplementären funktionellen Gruppe (z.B. Epoxy-, Hydroxy-/Alkoxysilyl- oder Aminogruppe, wie Epoxy-, Hydroxy- oder Aminogruppe) des Bindemittels reagieren kann.

Eine "organische Verbindung" ist eine Verbindung, die auf Kohlenstoff und mindestens einer weiteren Atomsorte (insbesondere ausgewählt aus H, O, S, N, Halogen, P, Si, Li, Na und K) basiert, wobei elementare Formen des Kohlenstoffs (d.h. Graphit, Diamant, Fullerene) und anorganische Verbindungen (wie wasserstofffreie Chalkogenide des Kohlenstoffs (d.h. Kohlenstoffmonoxid, Kohlenstoffdioxid, Schwefelkohlenstoff), die Kohlensäure ($H_2CO_3$), anorganische Salze der Kohlensäure (d.h. anorganische Carbonate z.B. $NaHCO_3$), Carbide sowie die ionischen Cyanide, Cyanate und Thiocyanate (wie NaCN, KOCN oder $(NH_4)SCN$)) nicht eingeschlossen sind. Beispiele organischer Verbindungen beinhalten Alkane, Alkene, Alkine, Cycloalkane, Heterocyclen, Aromaten und Heteroaromaten sowie substituierte Formen davon, in denen 1 Wasserstoffatom (oder mehrere Wasserstoffatome) durch eine funktionelle Gruppe (oder funktionelle Gruppen, die gleich oder verschieden sein können) ersetzt sind.

Ein "organischer Rest" ist ein Rest, der durch Entfernung mindestens eines Wasserstoffatoms von einer organischen Verbindung entsteht. Leitet sich der organische Rest durch Entfernung nur eines Wasserstoffatoms von der organischen Verbindung ab, ist der Rest monovalent, während durch Entfernung zweier Wasserstoffatome von einer organischen Verbindung ein bivalenter (oder divalenter) Rest (auch als Diradikal (allgemeine Endung "diyl") bezeichnet) entsteht, usw. Geminale Diradikale (Endung "yliden") sind Reste, in denen zwei Wasserstoffatome von demselben Kohlenstoffatom einer organischen Verbindung entfernt wurden. Beispiele monovalenter organischer Reste beinhalten Alkyl- Alkenyl-, Alkinyl-, Cycloalkyl-, Heterocyclyl-, Aryl- oder Heteroarylreste (d.h. abgeleitet durch die Entfernung eines Wasserstoffatoms von einem Alkan, Alken, Alkin, Cycloalkan, Heterocyclus, Aromaten bzw. Heteroaromaten). Beispiele divalenter organischer Reste beinhalten Alkylen- (wie Alkandiyl- oder Alkylidenreste), Alkenylen- (wie Alkendiyl- oder Alkenylidenreste), Alkinylen- (wie Alkindiylreste), Cycloalkylen- und Heterocyclylenreste. Beispiele geminaler Diradikale beinhalten Alkyliden- und Alkenylidenreste.

Die Begriffe "Alkylrest", "Alkylgruppe" und "Alkyl" werden hierin austauschbar verwendet und betreffen einen monovalenten Rest eines gesättigten geraden oder verzweigten Kohlenwasserstoffs (d.h. eines Alkans). Vorzugsweise umfasst der Alkylrest 1 bis 14 (wie 1 bis 12 oder 1 bis 10) Kohlenstoffatome, d.h. 1, 2, 3, 4, 5, 6, 7, 8, 9, 10, 11, 12, 13 oder 14 Kohlenstoffatome (wie 1, 2, 3, 4, 5, 6, 7, 8, 9, 10, 11 oder 12 Kohlenstoffatome), vorzugsweise 1 bis 8 Kohlenstoffatome, wie 1 bis 6 oder 1 bis 4 Kohlenstoffatome. Beispielhafte Alkylreste beinhalten Methyl-, Ethyl-, Propyl-, isoPropyl- (auch bekannt als 2-Propyl- oder 1-Methylethyl-), Butyl-, iso-Butyl-, tert-Butyl-, n-Pentyl-, iso-Pentyl-, sec-Pentyl-, neo-Pentyl-, 1,2-Dimethylpropyl-, iso-Amyl-, n-Hexyl-, iso-Hexyl-, sec-Hexyl-, n-Heptyl-, iso-Heptyl-, n-Octyl-, 2-Ethylhexyl-, n-Nonyl-, n-Decyl-, n-Undecyl-, n-Dodecyl-, n-Tridecyl-, n-Tetradecylreste und dergleichen.

Die Begriffe "Alkylenrest", "Alkylengruppe" und "Alkylen" werden hierin austauschbar verwendet und betreffen einen divalenten Rest eines gesättigten geraden oder verzweigten Kohlenwasserstoffs (d.h. eines Alkans). Vorzugsweise umfasst der Alkylenrest 1 bis 14 (wie 1 bis 12 oder 1 bis 10) Kohlenstoffatome, d.h. 1, 2, 3, 4, 5, 6, 7, 8, 9, 10, 11, 12, 13 oder 14 Kohlenstoffatome (wie 1, 2, 3, 4, 5, 6, 7, 8, 9, 10, 11 oder 12 Kohlenstoffatome), vorzugsweise 1 bis 8 Kohlenstoffatome, wie 1 bis 6 oder 1 bis 4 Kohlenstoffatome. Beispielhafte Alkylenreste beinhalten Methylen-, Ethylenreste (d.h. 1,1-Ethylen- (auch als Ethylidenrest bezeichnet), 1,2-Ethylen-), Propylenreste (d.h. 1,1-Propylen-(auch als Propylidenrest bezeichnet), 1,2-Propylen- ($-CH(CH_3)CH_2-$), 2,2-Propylen- ($-C(CH_3)_2-$) und 1,3-Propylenreste), die Butylenisomere (z.B., 1,1-, 1,2-, 2,2-, 1,3-Butylen-, 2,3-Butylen- (cis oder trans oder ein Gemisch davon), 1,4-Butylen-, 1,1-iso-Butylen-, 1,2-iso-Butylen- und 1,3-iso-Butylenreste), die Pentylenisomere (z.B. 1,1-, 1,2-, 1,3-, 1,4-, 1,5-Pentylen-, 1,1-iso-Pentylen-, 1,1-sec-Pentylen, 1,1-neo-Pentylenreste), die Hexylenisomere (z.B. 1,1-, 1,2-, 1,3-, 1,4-, 1,5-, 1,6-Hexylen- und 1,1-iso-Hexylenreste), die Heptylenisomere (z.B. 1,1-, 1,2-, 1,3-, 1,4-, 1,5-, 1,6-, 1,7-Heptylen- und 1,1-iso-Heptylenreste), die Octylensomere (z.B. 1,1-, 1,2-, 1,3-, 1,4-, 1,5-, 1,6-, 1,7-, 1,8-Octylen- und 1,1-iso-Octylenreste) und dergleichen. Die geraden Alkylenreste mit mindestens 3 Kohlenstoffatome und einer freien Valenz an jedem Ende können auch als ein Vielfaches eines Methylenrests bezeichnet werden (z.B. kann 1,4-Butylen auch als Tetramethylen bezeichnet werden). Allgemein kann man anstelle der Endung "ylen" für Alkylenreste, wie vorstehend spezifiziert, auch die Endung "diyl" verwenden (z.B. kann 1,2-Butylen auch als Butan-1,2-diyl bezeichnet werden).

Die Begriffe "Alkenylrest", "Alkenylgruppe" und "Alkenyl" werden hierin austauschbar verwendet und betreffen einen monovalenten Rest eines ungesättigten geraden oder verzweigten Kohlenwasserstoffs mit mindestens einer Kohlenstoff-Kohlenstoff-Doppelbindung (d.h. eines Alkens). Allgemein kann die maximale Anzahl von Kohlenstoff-Kohlenstoff-Doppelbindungen in der Alkenylgruppe gleich zu der ganzen Zahl sein, die dadurch berechnet wird, dass man die Kohlenstoffatome in der Alkenylgruppe durch 2 teilt und, falls die Anzahl der Kohlenstoffatome in der Alkenylgruppe ungerade ist, das Ergebnis der Division auf die nächst kleinere ganze Zahl abrundet. Beispielsweise ist für eine Alkenylgruppe mit 9 Kohlenstoffatomen die maximale Anzahl an Kohlenstoff-Kohlenstoff-Doppelbindungen 4. Vorzugsweise weist die Alkenylgruppe 1 bis 7 (wie 1 bis 4), d.h. 1, 2, 3, 4, 5, 6 oder 7, Kohlenstoff-Kohlenstoff-Doppelbindungen auf. Vorzugsweise umfasst die Alkenylgruppe 2 bis 14 (wie 2 bis 12 oder 2 bis 10) Kohlenstoffatome, d.h. 2, 3, 4, 5, 6, 7, 8, 9, 10, 11, 12, 13 oder 14 Kohlenstoffatome (wie 2, 3, 4, 5, 6, 7, 8, 9, 10, 11 oder 12 Kohlenstoffatome), mehr bevorzugt 2 bis 8 Kohlenstoffatome, wie 2 bis 6 Kohlenstoffatome oder 2 bis 4 Kohlenstoffatome. Folglich umfasst in einer bevorzugten Ausführungsform die Alkenylgruppe 2 bis 14 (z.B. 2 bis 10) Kohlenstoffatome und 1, 2, 3, 4, 5, 6 oder 7 (z.B. 1, 2, 3, 4 oder 5) Kohlenstoff-Kohlenstoff-Doppelbindungen, mehr bevorzugt umfasst sie 2 bis 8 Kohlenstoffatome und 1, 2, 3 oder 4 Kohlenstoff-Kohlenstoff-Doppelbindungen, wie 2 bis 6 Kohlenstoffatome und 1, 2 oder 3 Kohlenstoff-Kohlenstoff-Doppelbindungen oder 2 bis 4 Kohlenstoffatome und 1 oder 2 Kohlenstoff-Kohlenstoff-Doppelbindungen. Die Kohlenstoff-Kohlenstoff-Doppelbindung(en) kann (können) in cis (Z)- oder trans (E)-Konfiguration vorliegen. Beispielhafte Alkenylgruppen beinhalten Vinyl-, 1-Propenyl-, 2-Propenyl- (d.h. Allyl-), 1-Butenyl-, 2-Butenyl-, 3-Butenylreste, die Pentenylisomere (d.h. 1-, 2-, 3-, 4-Pentenyl), die Hexenylisomere (z.B. 1- 2-, 3-, 4- und 5-Hexenyl), die Heptenylisomere (z.B. 1-, 2-, 3-, 4-, 5- und 6-Heptenyl), die Octenylisoemer (z.B. 1-, 2-, 3-, 4-, 5-, 6- und 7-Octenyl), die Nonenylisomere (1-, 2-, 3-, 4-, 5-, 6-, 7- und 8-Nonenyl), die Decenylisomere (z.B. 1-, 2-, 3-, 4-, 5-, 6-, 7-, 8- und 9-Decenyl), die Undecenylisomere (z.B. 1-, 2-, 3-, 4-, 5-, 6-, 7-, 8-, 9- und 10-Undecenyl), die Dodecenylisomere (z.B. 1-, 2-, 3-, 4-, 5-, 6-, 7-, 8-, 9-, 10- und 11-Dodecenyl), die Tridecenylisomere (z.B. 1-, 2-, 3-, 4-, 5-, 6-, 7-, 8-, 9-, 10-, 11- und 12-Tridecenyl), die Tetradecenylisomere (z.B. 1-, 2-, 3-, 4-, 5-, 6-, 7-, 8-, 9-, 10-, 11-, 12- und 13-Tetradecenyl) und dergleichen. Falls eine Alkenylgruppe an ein Stickstoffatom gebunden ist, so kann die Doppelbindung nicht alpha-ständig zu dem Stickstoffatom sein.

Die Begriffe "Alkenylenrest", "Alkenylengruppe" und "Alkenylen" werden hierin austauschbar verwendet und betreffen einen divalenten Rest eines ungesättigten geraden oder verzweigten Kohlenwasserstoffs mit mindestens einer Kohlenstoff-Kohlenstoff-Doppelbindung (d.h. eines Alkens). Allgemein kann die maximale Anzahl von Kohlenstoff-Kohlenstoff-Doppelbindungen in der Alkenylengruppe gleich zu der ganzen Zahl sein, die dadurch berechnet wird, dass man die Kohlenstoffatome in der Alkenylengruppe durch 2 teilt und, falls die Anzahl der Kohlenstoffatome in der Alkenylengruppe ungerade ist, das Ergebnis der Division auf die nächst kleinere ganze Zahl abrundet. Beispielsweise ist für eine Alkenylengruppe mit 9 Kohlenstoffatomen die maximale Anzahl an Kohlenstoff-Kohlenstoff-Doppelbindungen 4. Vorzugsweise weist die Alkenylengruppe 1 bis 7 (wie 1 bis 4), d.h. 1, 2, 3, 4, 5, 6 oder 7, Kohlenstoff-Kohlenstoff-Doppelbindungen auf. Vorzugsweise umfasst die Alkenylengruppe 2 bis 14 (wie 2 bis 12 oder 2 bis 10) Kohlenstoffatome, d.h. 2, 3, 4, 5, 6, 7, 8, 9, 10, 11, 12, 13 oder 14 Kohlenstoffatome (wie 2, 3, 4, 5, 6, 7, 8, 9, 10, 11 oder 12 Kohlenstoffatome), mehr bevorzugt 2 bis 8 Kohlenstoffatome, wie 2 bis 6 Kohlenstoffatome oder 2 bis 4 Kohlenstoffatome. Folglich umfasst in einer bevorzugten Ausführungsform die Alkenylengruppe 2 bis 14 (z.B. 2 bis 10) Kohlenstoffatome und 1, 2, 3, 4, 5, 6 oder 7 (z.B. 1, 2, 3, 4 oder 5) Kohlenstoff-Kohlenstoff-Doppelbindungen, mehr bevorzugt umfasst sie 2 bis 8 Kohlenstoffatome und 1, 2, 3 oder 4 Kohlenstoff-Kohlenstoff-Doppelbindungen, wie 2 bis 6 Kohlenstoffatome und 1, 2 oder 3 Kohlenstoff-Kohlenstoff-Doppelbindungen oder 2 bis 4 Kohlenstoffatome und 1 oder 2 Kohlenstoff-Kohlenstoff-Doppelbindungen. Die Kohlenstoff-Kohlenstoff-Doppelbindung(en) kann (können) in cis (Z)- oder trans (E)-Konfiguration vorliegen. Beispielhafte Alkenylengruppe beinhalten Ethen-1,2-diyl, Vinyliden (auch als Ethenyliden bezeichnet), 1-Propen-1,2-diyl, 1-Propen-1,3-diyl, 1-Propen-2,3-diyl, Allyliden, 1-Buten-1,2-diyl, 1-Buten-1,3-diyl, 1-Buten-1,4-diyl, 1-Buten-2,3-diyl, 1-Buten-2,4-diyl, 1-Buten-3,4-diyl, 2-Buten-1,2-diyl, 2-Buten-1,3-diyl, 2-Buten-1,4-diyl, 2-Buten-2,3-diyl, 2-Buten-2,4-diyl, 2-Buten-3,4-diyl und dergleichen. Falls eine Alkenylengruppe an ein Stickstoffatom gebunden ist, so kann die Doppelbindung nicht alpha-ständig zu dem Stickstoffatom sein.

Die Begriffe "Alkinylrest", "Alkinylgruppe" und "Alkinyl" werden hierin austauschbar verwendet und betreffen einen monovalenten Rest eines ungesättigten geraden oder verzweigten Kohlenwasserstoffs mit mindestens einer Kohlenstoff-Kohlenstoff-Dreifachbindung (d.h. eines Alkins). Allgemein kann die maximale Anzahl von Kohlenstoff-Kohlenstoff-Dreifachbindungen in der Alkinylgruppe gleich zu der ganzen Zahl sein, die dadurch berechnet wird, dass man die Kohlenstoffatome in der Alkinylgruppe durch 2 teilt und, falls die Anzahl der Kohlenstoffatome in der Alkinylgruppe ungerade ist, das Ergebnis der Division auf die nächst kleinere ganze Zahl abrundet. Beispielsweise ist für eine Alkinylgruppe mit 9 Kohlenstoffatomen die maximale Anzahl an Kohlenstoff-Kohlenstoff-Dreifachbindungen 4. Vorzugsweise

weist die Alkinylgruppe 1 bis 7 (wie 1 bis 4), d.h. 1, 2, 3, 4, 5, 6 oder 7 (wie 1, 2, 3 oder 4), mehr bevorzugt 1 oder 2, Kohlenstoff-Kohlenstoff-Dreifachbindungen auf. Vorzugsweise umfasst die Alkinylgruppe 2 bis 14 (wie 2 bis 12 oder 2 bis 10) Kohlenstoffatome, d.h. 2, 3, 4, 5, 6, 7, 8, 9, 10, 11, 12, 13 oder 14 Kohlenstoffatome (wie 2, 3, 4, 5, 6, 7, 8, 9, 10, 11 oder 12 Kohlenstoffatome), mehr bevorzugt 2 bis 8 Kohlenstoffatome, wie 2 bis 6 Kohlenstoffatome oder 2 bis 4 Kohlenstoffatome. Folglich umfasst in einer bevorzugten Ausführungsform die Alkinylgruppe 2 bis 14 (z.B. 2 bis 10) Kohlenstoffatome und 1, 2, 3, 4, 5, 6 oder 7 (z.B. 1, 2, 3, 4 oder 5 (vorzugsweise 1, 2 oder 3)) Kohlenstoff-Kohlenstoff-Dreifachbindungen, mehr bevorzugt umfasst sie 2 bis 8 Kohlenstoffatome und 1, 2, 3 oder 4 (vorzugsweise 1 oder 2) Kohlenstoff-Kohlenstoff-Dreifachbindungen, wie 2 bis 6 Kohlenstoffatome und 1, 2 oder 3 Kohlenstoff-Kohlenstoff-Dreifachbindungen oder 2 bis 4 Kohlenstoffatome und 1 oder 2 Kohlenstoff-Kohlenstoff-Dreifachbindungen. Beispielhafte Alkinylgruppen beinhalten Ethinyl, 1-Propinyl, 2-Propinyl, 1-Butinyl, 2-Butinyl, 3-Butinyl, die Pentinylisomere (z.B. 1-, 2-, 3-, 4-Pentinyl), die Hexinylisomere (z.B. 1-, 2-, 3-, 4- und 5-Hexinyl), die Heptinylisomere (z.B. 1-, 2-, 3-, 4-, 5- und 6-Heptinyl), die Octinylisomere (z.B. 1-, 2-, 3-, 4-, 5-, 6- und 7-Octinyl), die Noninylisomere (z.B. 1-, 2-, 3-, 4-, 5-, 6-, 7- und 8-Noninyl), die Decinylisomere (z.B. 1-, 2-, 3-, 4-, 5-, 6-, 7-, 8- und 9-Decinyl) und dergleichen. Falls eine Alkinylgruppe an ein Stickstoffatom gebunden ist, so kann die Dreifachbindung nicht alpha-ständig zu dem Stickstoffatom sein.

Die Begriffe "Alkinylenrest", "Alkinylengruppe" und "Alkinylen" werden hierin austauschbar verwendet und betreffen einen divalenten Rest eines ungesättigten geraden oder verzweigten Kohlenwasserstoffs mit mindestens einer Kohlenstoff-Kohlenstoff-Dreifachbindung (d.h. eines Alkins). Allgemein kann die maximale Anzahl von Kohlenstoff-Kohlenstoff-Dreifachbindungen in der Alkinylengruppe gleich zu der ganzen Zahl sein, die dadurch berechnet wird, dass man die Kohlenstoffatome in der Alkinylengruppe durch 2 teilt und, falls die Anzahl der Kohlenstoffatome in der Alkinylengruppe ungerade ist, das Ergebnis der Division auf die nächst kleinere ganze Zahl abrundet. Beispielsweise ist für eine Alkinylengruppe mit 9 Kohlenstoffatomen die maximale Anzahl an Kohlenstoff-Kohlenstoff-Dreifachbindungen 4. Vorzugsweise weist die Alkinylengruppe 1 bis 7 (wie 1 bis 4), d.h. 1, 2, 3, 4, 5, 6 oder 7 (wie 1, 2, 3 oder 4), mehr bevorzugt 1 oder 2, Kohlenstoff-Kohlenstoff-Dreifachbindungen auf. Vorzugsweise umfasst die Alkinylengruppe 2 bis 14 (wie 2 bis 12 oder 2 bis 10) Kohlenstoffatome, d.h. 2, 3, 4, 5, 6, 7, 8, 9, 10, 11, 12, 13 oder 14 Kohlenstoffatome (wie 2, 3, 4, 5, 6, 7, 8, 9 oder 10 Kohlenstoffatome), mehr bevorzugt 2 bis 8 Kohlenstoffatome, wie 2 bis 6 Kohlenstoffatome oder 2 bis 4 Kohlenstoffatome. Folglich umfasst in einer bevorzugten Ausführungsform die Alkinylengruppe 2 bis 14 (z.B. 2 bis 10) Kohlenstoffatome und 1, 2, 3, 4, 5, 6 oder 7 (z.B. 1, 2, 3, 4 oder 5 (vorzugsweise 1, 2 oder 3)) Kohlenstoff-Kohlenstoff-Dreifachbindungen, mehr bevorzugt umfasst sie 2 bis 8 Kohlenstoffatome und 1, 2, 3 oder 4 (vorzugsweise 1 oder 2) Kohlenstoff-Kohlenstoff-Dreifachbindungen, wie 2 bis 6 Kohlenstoffatome und 1, 2 oder 3 Kohlenstoff-Kohlenstoff-Dreifachbindungen oder 2 bis 4 Kohlenstoffatome und 1 oder 2 Kohlenstoff-Kohlenstoff-Dreifachbindungen. Beispielhafte Alkinylengruppen beinhalten Ethin-1,2-diyl, 1-Propin-1,3-diyl, 1-Propin-3,3-diyl, 1-Butin-1,3-diyl, 1-Butin-1,4-diyl, 1-Butin-3,4-diyl, 2-butin-1,4-diyl und dergleichen. Falls eine Alkinylengruppe an ein Stickstoffatom gebunden ist, so kann die Dreifachbindung nicht alpha-ständig zu dem Stickstoffatom sein.

Die Begriffe "Arylrest", "Arylgruppe", "aromatischer Ring" und "Aryl" werden hierin austauschbar verwendet und betreffen einen monovalenten Rest eines aromatischen cyclischen Kohlenwasserstoffs (d.h. eines Aromaten). Vorzugsweise enthält die Arylgruppe 3 bis 14 (z.B. 5, 6, 7, 8, 9 oder 10, wie 5, 6 oder 10) Kohlenstoffatome, die in einem Ring (z.B. Phenyl) oder zwei oder mehr kondensierten Ringen (z.B. Naphthyl) angeordnet sein können. Beispielhafte Arylgruppen beinhalten Cyclopropenylium, Cyclopentadienyl, Phenyl, Indenyl, Naphthyl, Azulenyl, Fluorenyl, Anthryl und Phenanthryl. Vorzugsweise ist die Arylgruppe ein monocyclischer Ring mit 6 Kohlenstoffatomen oder ein aromatisches bicyclisches Ringsystem mit 10 Kohlenstoffatomen. Bevorzugte Beispiele sind Phenyl and Naphthyl. Aryl umfasst vorzugsweise keine Fullerene.

Die Begriffe "Heteroarylrest", "Heteroarylgruppe", "heteroaromatischer Ring" und "Heteroaryl" werden hierin austauschbar verwendet und betreffen eine wie vorstehend definierte Arylgruppe, in der ein oder mehrere Kohlenstoffatome in der Arylgruppe durch Heteroatome (wie O, S oder N) ersetzt sind. Vorzugsweise ist eine Heteroarylgruppe ein fünf- oder sechsgliedriger aromatischer monocyclischer Ring, wobei 1, 2 oder 3 Kohlenstoffatome durch das gleiche Heteroatom aus O, S oder N oder durch verschiedene Heteroatome, ausgewählt aus der Gruppe O, S und N, ersetzt sind. Alternativ kann eine Heteroarylgruppe ein aromatisches bicyclisches oder tricyclisches Ringsystem sein, wobei 1, 2, 3, 4 oder 5 Kohlenstoffatome durch das gleiche Heteroatom aus O, S oder N oder durch verschiedene Heteroatome, ausgewählt aus der Gruppe O, S und N, ersetzt sind. Vorzugsweise ist die maximale Anzahl an O-Atomen in jedem Ring der Heteroarylgruppe 1, die maximale Anzahl an S-Atomen in jedem Ring der Heteroarylgruppe ist 1 und die maximale Gesamtanzahl an O- und S-Atomen in jedem Ring der Heteroarylgruppe ist 2. Beispielsweise umfasst eine 3- bis 14-gliedrige Heteroarylgruppe monocyclische Heteroarylgruppen (z.B. 5- oder 6-gliedrig), bicyclische Heteroarylgruppen (z.B. 9- oder 10-gliedrig) und tricyclische Heteroarylgruppen (z.B. 13- oder 14-gliedrig). Beispielhafte Heteroarylgruppen beinhalten Furanyl, Thienyl, Oxazolyl, Isoxazolyl, Oxadiazolyl, Pyrrolyl, Imidazolyl, Pyrazolyl, Triazolyl, Tetrazolyl, Thiazolyl, Isothiazolyl, Thiadiazolyl, Pyridyl, Pyrimidinyl, Pyrazinyl, Triazinyl, Benzofuranyl, Indolyl, Isoindolyl, Benzothienyl, 1H-Indazolyl, Benzimidazolyl, Benzoxazolyl, Indoxazinyl, Benzisoxazolyl, Benzothiazolyl, Benzisothiazolyl, Benzotriazolyl, Chinolinyl, Isochinolinyl, Benzodiazinyl, Chinoxalinyl, Chinazolinyl, Benzotriazinyl, Pyridazinyl, Phenoxazinyl, Thiazolopyridinyl, Pyrrolothiazolyl, Phenothiazinyl, Isobenzofuranyl, Chromenyl, Xanthenyl, Phenoxathiinyl,

Pyrrolizinyl, Indolizinyl, Indazolyl, Purinyl, Chinolizinyl, Phthalazinyl, Naphthyridinyl, Cinnolinyl, Pteridinyl, Carbazolyl, Phenanthridinyl, Acridinyl, Perimidinyl, Phenanthrolinyl, Phenazinyl, Oxazolopyridinyl, Isoxazolopyridinyl, Pyrrolooxazolyl und Pyrrolopyrrolyl. Beispielhafte 5- oder 6-gliedrige Heteroarylgruppen beinhalten Furanyl, Thienyl, Oxazolyl, Isoxazolyl, Oxadiazolyl, Pyrrolyl, Imidazolyl, Pyrazolyl, Triazolyl, Thiazolyl, Isothiazolyl, Thiadiazolyl, Pyridyl, Pyrimidinyl, Pyrazinyl, Triazinyl und Pyridazinyl.

Die Begriffe "Cycloalkylrest", "Cycloalkylgruppe", "cycloaliphatisch" und "Cycloalkyl" werden hierin austauschbar verwendet und betreffen eine cyclische nicht-aromatische Version von "Alkylgruppe" oder "Alkenylgruppe" mit vorzugsweise 3 bis 14 Kohlenstoffatomen, wie 3 bis 12 oder 3 bis 10 Kohlenstoffatomen, d.h. 3, 4, 5, 6, 7, 8, 9, 10, 11, 12, 13 oder 14 Kohlenstoffatomen (wie 3, 4, 5, 6, 7, 8, 9 oder 10 Kohlenstoffatomen), mehr bevorzugt 3 bis 7 Kohlenstoffatomen. Beispielhafte Cycloalkylgruppen beinhalten Cyclopropyl, Cyclopropenyl, Cyclobutyl, Cyclobutenyl, Cyclopentyl, Cyclopentenyl, Cyclohexyl, Cyclohexenyl, Cycloheptyl, Cycloheptenyl, Cyclooctyl, Cyclooctenyl, Cyclononyl, Cyclononenyl, Cylcodecyl, Cylcodecenyl und Adamantyl. Der Begriff "Cycloalkyl" soll auch bicyclische und tricyclische Versionen davon betreffen. Falls bicyclische Ringe ausgebildet werden, ist es bevorzugt, dass die entsprechenden Ringe miteinander an zwei benachbarten Kohlenstoffatomen verbunden sind; alternativ können jedoch die zwei Ringe über das gleiche Kohlenstoffatom verbunden sein, d.h. sie bilden ein Spiroringsystem aus oder sie bilden ein verbrückendes Ringsystem aus. Bevorzugte Beispiele von Cycloalkylgruppen beinhalten $C_3$-$C_8$-Cycloalkyl, insbesondere Cyclopropyl, Cyclobutyl, Cyclopentyl, Cyclohexyl, Cycloheptyl, Cyclooctyl, Spiro[3,3]heptyl, Spiro[3,4]octyl, Spiro[4,3]octyl, Bicyclo[4.1.0]heptyl, Bicyclo[3.2.0]heptyl, Bicyclo[2.2.1]heptyl, Bicyclo[2.2.2]octyl, Bicyclo[5.1.0]octyl und Bicyclo[4.2.0]octyl. Cycloalkyl umfasst vorzugsweise keine Fullerene.

Die Begriffe "Cycloalkylenrest", "Cycloalkylengruppe" und "Cycloalkylen" werden hierin austauschbar verwendet und betreffen eine wie hierin vorstehend definierte Cycloalkylgruppe, in der ein weiteres Wasserstoffatom entfernt wurde, was zu einem divalenten Rest führt. In bestimmten Ausführungsformen ist die Cycloalkylengruppe (i) monocyclische oder polycyclisch (wie bi- oder tricyclisch) und/oder (ii) 3- bis 14-gliedrig (d.h. 3-, 4-, 5-, 6-, 7-, 8-, 9-, 10-, 11-, 12-, 13- oder 14-gliedrig, wie 3- bis 12-gliedrig oder 3- bis 10-gliedrig). In einer Ausführungsform ist die Cycloalkylengruppe eine mono-, bi- oder tricyclische 3- bis 14-gliedrige (d.h. 3-, 4-, 5-, 6-, 7-, 8-, 9-, 10-, 11-, 12-, 13- oder 14-gliedrige, wie 3- bis 12-gliedrige oder 3- bis 10-gliedrige) Cycloalkylengruppe. Der Begriff "Cycloalkylengruppe" soll auch teilweise oder vollständig hydrierte Formen (wie Dihydro-, Tetrahydro- oder Perhydroformen) der vorstehend beschriebenen Arylgruppen (vorzugsweise teilweise oder vollständig hydrierte Formen der vorstehend beschriebenen mono- oder bicyclischen Arylgruppen) umfassen, bei denen ein weiteres Wasserstoffatom entfernt wurde, was zu einem divalenten Rest führt. Folglich kann erfindungsgemäß eine Cycloalkylengruppe gesättigt oder ungesättigt sein (d.h. sie kann eine oder mehrere Doppelbindungen in dem Ring enthalten), aber sie kann nicht aromatisch sein. Beispielhafte Cycloalkylengruppen beinhalten Cyclohexylen, Cycloheptylen, Cyclopropylen, Cyclobutylen, Cyclopentylen, Cyclooctylen, Cyclohexenylen, Cycloheptenylen, Cyclopropenylen, Cyclobutenylen, Cyclopentenylen, Cyclooctenylen, Cicyclo[3.2.1]octylen, Bicyclo[3.2.2]nonylen und Adamantanylen (d.h. Tricyclo[3.3.1.1$^{3,7}$]decandiyl).

Die Begriffe "Heterocyclylrest", "Heterocyclylgruppe", "heterocyclischer Ring" und "Heterocyclyl" werden hierin austauschbar verwendet und betreffen eine wie hierin vorstehend definierte Cycloalkylgruppe, in der 1, 2, 3 oder 4 Kohlenstoffatome in der Cycloalkylgruppe durch Heteroatome (wie diejenigen, ausgewählt aus der Gruppe, bestehend aus O, S und N) ersetzt sind. Falls ein Ring der Heterocyclylgruppe lediglich eine Art an Heteroatom enthält, kann die maximale Anzahl an diesem Heteroatom in dem Ring der Heterocyclylgruppe wie folgt sein: 2 O-Atome (vorzugsweise 1 O-Atom); 2 S-Atome (vorzugsweise 1 S-Atom); und 4 N-Atome. Falls ein Ring der Heterocyclylgruppe zwei oder mehr Arten an Heteroatomen enthält, kann die maximale Anzahl dieser Heteroatome in dem Ring der Heterocyclylgruppe wie folgt sein: 1 O-Atom; 1 S-Atom; und/oder 2 N-Atome (vorzugsweise 1 N-Atom), wobei die maximale Gesamtanzahl von Heteroatomen in dem Ring der Heterocyclylgruppe 4 ist und die maximale Gesamtanzahl jedes Heteroatoms in dem Ring der Heterocyclylgruppe wie folgt ist: 1 O-Atom; 1 S-Atom; und/oder 1 oder 2 N-Atome. In einer Ausführungsform werden die Heteroatome der Heterocyclylgruppe ausgewählt aus der Gruppe, bestehend aus O, S und N. Vorzugsweise ist in dieser Ausführungsform in jedem Ring der Heterocyclylgruppe die maximale Anzahl an O-Atomen 1, die maximale Anzahl an S-Atomen ist 1 und die maximale Gesamtanzahl an O- und S-Atomen ist 2. Beispielsweise umfasst eine 3- bis 14-gliedrige Heterocyclylgruppe monocyclische Heterocyclylgruppen (z.B. 3-, 4-, 5-, 6- oder 7-gliedrig), bicyclische Heterocyclylgruppen (z.B. 8-, 9- oder 10-gliedrig) und tricyclische Heterocyclylgruppen (z.B. 12-, 13- oder 14-gliedrig). Der Begriff "Heterocyclylgruppe" soll auch teilweise oder vollständig hydrierte Formen (wie Dihydro-, Tetrahydro-, Hexahydro-, Octahydro-, Decahydro-, Dodecahydro-, etc. oder Perhydroformen) der vorstehend beschriebenen Heteroarylgruppen umfassen. Beispielhafte Heterocyclylgruppen beinhalten Morpholino, Isochromanyl, Chromanyl, Pyrrolidinyl, Imidazolidinyl, Pyrazolidinyl, Piperidinyl, Piperazinyl, Indolinyl, Isoindolinyl, Triazininanyl, Di- und Tetrahydrofuranyl, Di- und Tetrahydrothienyl, Di- und Tetrahydrooxazolyl, Di- und Tetrahydroisoxazolyl, Di- und Tetrahydrooxadiazolyl, Dihydropyrrolyl, Dihydroimidazolyl, Dihydropyrazolyl, Di- und Tetrahydrotriazolyl, Di- und Tetrahydrothiazolyl, Di- und Tetrahydrothiazolyl, Di- und Tetrahydrothiadiazolyl, Di- und Tetrahydropyridyl.

Die Begriffe "Heterocyclylenrest", "Heterocyclylengruppe" und "Heterocyclylen" werden hierin austauschbar verwendet und betreffen eine wie hierin vorstehend definierte Heterocyclylgruppe, die mindestens ein Ringheteroatom

(z.B. ausgewählt aus der Gruppe, bestehend aus O, S und N) enthält und in der weiteres Wasserstoffatom entfernt wurde, was zu einem divalenten Rest führt. In einer Ausführungsform werden die Heteroatome der Heterocyclylengruppe ausgewählt aus der Gruppe, bestehend aus O, S und N. Vorzugsweise ist in jedem Ring der Heterocyclylengruppe die maximale Anzahl an O-Atomen 1, die maximale Anzahl an S-Atomen ist 1 und die maximale Gesamtanzahl an O- und S-Atomen ist 2. Die Heterocyclylengruppe kann monocyclisch oder polycyclisch (wie bi- oder tricyclisch) sein. In einer Ausführungsform ist die Heterocyclylengruppe eine mono-, bi- oder tricyclische 4- bis 14-gliedrige (d.h. 4-, 5-, 6-, 7-, 8-, 9-, 10-, 11-, 12-, 13- oder 14-gliedrige, wie 4- bis 12-gliedrige oder 4- bis 10-gliedrige) Heterocyclylengruppe. Der Begriff "Heterocyclylengruppe" soll auch teilweise oder vollständig hydrierte Formen (wie Dihydro-, Tetrahydro-, Hexahydro-, Octahydro-, Decahydro-, Dodecahydro-, etc. oder Perhydroformen) der vorstehend beschriebenen Heteroarylgruppen (vorzugsweise teilweise oder vollständig hydrierte Formen der vorstehend beschriebenen mono-, bi- oder tricyclischen Heteroarylgruppen) umfassen, bei denen ein weiteres Wasserstoffatom entfernt wurde, was zu einem divalenten Rest führt. Folglich kann erfindungsgemäß eine Heterocyclylengruppe gesättigt oder ungesättigt sein (d.h. sie kann eine oder mehrere Doppelbindungen in dem Ring enthalten), aber sie kann nicht aromatisch sein.

Der Begriff "polycyclisch", wie hierin verwendet, bedeutet, dass die Struktur zwei oder mehr (wie 2, 3, 4, 5, 6, 7, 8, 9 oder 10), vorzugsweise 2, 3, 4 oder 5, mehr bevorzugt 2, 3 oder 4, Ringe aufweist. Folglich umfasst der Begriff "polycyclisch" nicht monocyclische Strukturen, d.h. Strukturen, die lediglich einen Ring enthalten. Beispiele polycyclischer Gruppen sind kondensierte Strukturen (wie Naphthyl oder Anthryl), Spiroverbindungen, Ringe, die über Einfach- oder Doppelbindungen verbunden sind (wie Biphenyl), und verbrückte Strukturen (wie Bornyl). Beispielhafte polycyclische Strukturen sind diejenigen Aryl-, Heteroaryl-, Cycloalkyl- und Heterocyclylgruppen, die vorstehend spezifiziert sind und mindestens zwei Ringe aufweisen.

Die Begriffe "Halogenatom", "Halogen" und "Halo" werden hierin austauschbar verwendet und betreffen Fluoratom, Chloratom, Bromatom oder Iodatom.

Der Begriff "Azido" betrifft die Gruppe $-N_3$.

Der Begriff "Amino" betrifft die Gruppen $-NH_2$ und $-NHR^8$, worin $R^8$ ein monovalenter organischer Rest ist. $R^8$ wird vorzugsweise ausgewählt aus der Gruppe, bestehend aus Alkylresten (z.B. $C_{1-14}$-Alkylresten, $C_{1-10}$-Alkylresten oder $C_{1-6}$-Alkylresten wie Methyl, Ethyl, Propyl, Isopropyl, Butyl, Pentyl und Hexyl), Cycloalkylresten (z.B. $C_{3-14}$-Cycloalkylresten, $C_{3-10}$-Cycloalkylresten oder $C_{3-7}$-Cycloalkylresten wie Cyclopropyl, Cyclopentyl und Cyclohexyl), Arylresten (z.B. $C_{3-14}$-Arylresten, $C_{6-10}$-Arylresten wie Phenyl und Naphthyl) und Heteroarylresten (z.B. $C_{3-14}$-Heteroarylresten, $C_{5-10}$-Heteroarylresten oder $C_{5-7}$-Heteroarylresten wie Furanyl, Thienyl, Oxazolyl, Isoxazolyl, Imidazolyl, Thiazolyl, Isothiazolyl, Pyridyl und Pyrimidinyl). Entsprechend weist erfindungsgemäß ein primäres Amin die Formel $H_2NR^8$ auf und ein sekundäres Amin weist die Formel $HN(R^8)_2$ auf, worin $R^8$ wie vorstehend definiert ist und unabhängig voneinander ausgewählt wird (d.h. die beiden $R^8$-Gruppen können in dem sekundären Amin gleich oder verschieden sein).

Der Begriff "Epoxy" betrifft die Gruppe

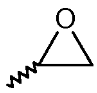

(auch als Oxiranyl bezeichnet). Bespiele für Reste, die eine Epoxygruppe enthalten, umfassen Glycidyl- und Glycidyloxyreste.

Der Begriff "Hydroxy" betrifft die Gruppe -OH.

Der Begriff "Polyol", wie hierin verwendet, betrifft eine organische Verbindung mit mindestens 2 (wie 2 oder mehr, 3 oder mehr, 4 oder mehr, 5 oder mehr, 6 oder mehr) und bis zu 3 (wie bis zu 4, bis zu 5, bis zu 6, bis zu 7, bis zu 8, bis zu 9, bis zu 10) Hydroxygruppen, wobei das Polyol vorzugsweise ein Molekulargewicht von weniger als 5000 g/mol aufweist. Insbesondere umfasst sind organische (insbesondere lineare oder verzweigte aliphatische) Verbindungen, die 2, 3, 4 Hydroxygruppen (d.h. Di-, Tri-, Tetraole) oder mehr und ein Molekulargewicht von weniger als 5000 g/mol aufweisen, wie Glykole (z.B. Ethylenglykol oder Polyethylenglykol), Trimethylolpropan, Trimethylolethan und Polyesterpolyole (insbesondere diejenigen mit einer Hydroxyfunktionalität von etwa 200 bis 600 mg/mol KOH/g Polyesterpolyol (OH-Zahl)) wie Bis(2,2-dihydroxymethyl)butylterephthalat.

Der Begriff "Alkoxysilan" betrifft Silicium-Verbindungen, in denen mindestens eine Alkoxygruppe (d.h. -OR, wobei R ein monovalenter organischer Rest (z.B. Alkylrest, wie $C_{1-8}$-Alkyl-, $C_{1-6}$-Alkyl- oder $C_{1-4}$-Alkylrest z.B. Methyl oder Ethyl) ist) direkt an ein Si-Atom gebunden ist. Beispiele für Alkoxysilane beinhalten Organomonoalkoxysilane, Organodialkoxysilane und Organotrialkoxysilane. Eine "Alkoxysilylrest" ist ein entsprechender monovalenter Rest eines Alkoxysilans, der mindestens eine direkt an ein Si-Atom gebundene Alkoxygruppe enthält.

Der Begriff "Ureido" betrifft den Harnstoff-Rest $-NH-C(O)-NH_2$. Demzufolge können Ureidoverbindungen als einseitig substituierte Harnstoffverbindungen bezeichnet werden.

Der Begriff "Isocyanat" betrifft Verbindungen, die eine oder mehrere Isocyanatgruppen (d.h. -N=C=O) enthalten.

Der Begriff "aromatisch", wie hierin im Zusammenhang mit Kohlenwasserstoffen verwendet, bedeutet, dass

das gesamte Molekül aromatisch sein muss. Beispielsweise wird, falls eine monocyclische Arylgruppe hydriert wird (entweder teilweise oder vollständig), die sich ergebende hydrierte cyclische Struktur erfindungsgemäß als Cycloalkyl klassifiziert. In ähnlicher Weise wird, falls eine bi- oder polycyclische Arylgruppe (wie Naphthyl) hydriert wird, die sich ergebende hydrierte bi- oder polycyclische Struktur (wie 1,2-Dihydronaphthyl) erfindungsgemäß als Cycloalkyl klassifiziert (selbst wenn ein Ring, wie in 1,2-Dihydronaphthyl, noch aromatisch ist). Eine ähnliche Unterscheidung wird erfindungsgemäß zwischen Heteroaryl und Heterocyclyl gemacht. Beispielsweise wird Indolinyl, d.h. eine Dihydrovariante von Indolyl, erfindungsgemäß als Heterocyclyl klassifiziert, da lediglich ein Ring der bicyclischen Struktur aromatisch ist und ein Ringatom ein Heteroatom ist.

Der Begriff "aliphatisch", wie hierin im Zusammenhang mit organischen Verbindungen verwendet, bedeutet, dass die organische Verbindung insgesamt nicht aromatisch ist, insbesondere auch keine aromatische Teilstruktur enthält. Aliphatische organische Verbindungen können acyclisch (d.h. ringfrei oder kettenförmig (linear oder verzweigt)) oder cyclisch (sog. alicyclische Verbindungen) sein. Sie können gesättigt oder ungesättigt sein und/oder sie können Heteroatome aufweisen.

Der Ausdruck "teilweise hydrierte Form" einer ungesättigten Verbindung oder Gruppe, wie hierin verwendet, bedeutet, dass ein Teil der Ungesättigtheit entfernt wurde, formal durch Addition von Wasserstoff an die anfangs ungesättigte Verbindung oder Gruppe, ohne alle ungesättigten Reste zu entfernen. Der Ausdruck "vollständig hydrierte Form" einer ungesättigten Verbindung oder Gruppe wird hierin mit dem Ausdruck "perhydro" verwendet und bedeutet, dass die gesamte Ungesättigtheit entfernt wurde, formal durch Addition von Wasserstoff an die anfangs ungesättigte Verbindung oder Gruppe. Beispielsweise beinhalten teilweise hydrierte Formen einer 5-gliedrigen Heteroarylgruppe (mit Doppelbindungen in dem Ring, wie Furan) Dihydroformen der 5-gliedrigen Heteroarylgruppe (wie 2,3-Dihydrofuran oder 2,5-Dihydrofuran), wohingegen die Tetrahydroform der 5-gliedrigen Heteroarylgruppe (z.B. Tetrahydrofuran, d.h. THF) eine vollständig hydrierte Form (oder Perhydroform) der 5-gliedrigen Heteroarylgruppe ist. In ähnlicher Weise beinhalten für eine 6-gliedrige Heteroarylgruppe mit 3 Doppelbindungen in dem Ring (wie Pyridyl) teilweise hydrierte Formen Di- und Tetrahydroformen (wie Di- und Tetrahydropyridyl), wohingegen die Hexahydroform (wie Piperidinyl in dem Fall der Heteroarylgruppe Pyridyl) die vollständig hydrierte Form (oder Perhydroform) der 6-gliedrigen Heteroarylgruppe ist.

Der Begriff "optional" oder "gegebenenfalls", wie hierin verwendet, bedeutet, dass das darauffolgende Ereignis, der darauffolgende Umstand oder die darauffolgende Bedingung auftreten oder nicht auftreten kann und dass die vorliegende Beschreibung Fälle, bei denen das Ereignis, der Umstand oder die Bedingung auftritt, und Fälle, bei denen das Ereignis, der Umstand oder die Bedingung nicht auftritt, enthält.

Unter einem "hydrolysierbaren Rest" wird erfindungsgemäß ein Rest verstanden, der durch Reaktion mit Wasser gespalten wird. Beispiele hydrolysierbarer Reste an einem Si-Atom beinhalten Halogenatome (insbesondere Cl) und Alkoxygruppen (z.B. -OR, worin R ein monovalenter organischer Rest (z.B. Alkylrest, wie $C_{1-8}$-Alkyl-, $C_{1-6}$-Alkyl- oder $C_{1-4}$-Alkylrest z.B. Methyl oder Ethyl) ist).

Das Epoxid-Äquivalentgewicht einer Verbindung ist diejenige Menge der Verbindung (in g), die 1 mol Epoxygruppen enthält.

Die Topfzeit ist diejenige Zeitspanne, in der ein Ansatz (z.B. eine erfindungsgemäße Beschichtungszusammensetzung) nach dem Mischen aller Bestandteile und/oder der Zugabe von Katalysatoren verarbeitbar bleibt. Verarbeitbar bedeutet in diesem Zusammenhang, dass der Ansatz (insbesondere eine erfindungsgemäße Beschichtungszusammensetzung) auf ein Substrat (insbesondere eine metallische Oberfläche) aufgebracht werden kann, z.B. noch so flüssig ist, um auf ein Substrat gespritzt werden zu können.

Der Begriff "Unterkreidung" betrifft den Abbau einer unteren Schicht einer Mehrschichtbeschichtung (z.B. durch Abbau des in der unteren Schicht vorhandenen Bindemittels), wodurch es zur Ablösung der über der unteren Schicht liegenden Schichten kommen kann.

Unter "Rostgrad" wird der Grad an Durchrostung einer Beschichtung auf einem metallischen Substrat verstanden und kann anhand von Vergleichsbildern (z.B. nach DIN EN ISO 4628-3: 2004-01) bestimmt werden. Eine Durchrostung beginnt gewöhnlich mit Unterrostung und Blasenbildung.

Unter "Partikel" werden erfindungsgemäß Materialien verstanden, die in einem Medium dispergiert werden können und sich vom umgebenden, kontinuierlichen Medium (das z.B. Bindemittel und/oder Härter umfasst) durch eine Phasengrenzfläche unterscheiden. Vorzugsweise weisen die Partikel eine Größenverteilung auf, wobei der $D_{50}$-Wert im Bereich von 1 bis 50 μm (wie 2 bis 40 μm, 3 bis 30 μm, 4 bis 25 μm, 5 bis 20 μm, 6 bis 18 μm, 7 bis 15 μm) liegt, und/oder der $D_{10}$-Wert im Bereich von 1,0 bis 10 μm (wie 1,2 bis 8 μm, 1,4 bis 7 μm, 1,6 bis 6 μm, 1,7 bis 5 μm, 1,8 bis 4,5 μm, 2,0 bis 4,0 μm) liegt und/oder der $D_{90}$-Wert im Bereich von 10 bis 50 μm (wie 11 bis 45 μm, 12 bis 40 μm, 13 bis 38 μm, 14 bis 36 μm, 16 bis 34 μm, 18 bis 32 μm) liegt. Der Anteil von Partikeln mit einer Größe von > 100 μm kann weniger als 1% (wie weniger als 0,1%, weniger als 0,01%, weniger als 0,001%) betragen; z.B. kann der Anteil von Partikeln mit einer Größe von < 50 μm mehr als 90% (wie mehr als 95%, mehr als 96%, mehr als 97%, mehr als 98%, mehr als 99%, mehr als 99,5%) betragen. Auch kann der Anteil von Partikeln mit einer Größe von < 45 μm mehr als 85% (wie mehr als 90%, mehr als 91%, mehr als 92%, mehr als 93%, mehr als 94%, mehr als 95%, mehr als 96%, mehr als 97%, mehr als 98%, mehr als 99%) betragen. Die Partikel können eine jegliche Form aufweisen, einschließlich

sphärisch, ellipsoid, kubisch, stäbchenförmig, plättchenförmig (lamellar), prismoid, etc. In einer Ausführungsform können die Partikel plättchenförmig (lamellar) sein, d.h. sie weisen 2 lange Dimensionen (die den Durchmesser bestimmen) und eine kurze Dimension (Dicke) auf. Der Formfaktor von solchen Partikeln ist das Verhältnis von Plättchendicke zu Plättchendurchmesser (nach DIN 66160: 1992-09) und kann zwischen 1:2 und 1:500 (wie 1:4 bis 1:400, 1:6 bis 1:300, 1:8 bis 1:200, 1:10 bis 1:150, 1:12 bis 1:100, 1:14 bis 1:50, 1:16 bis 1:40, 1:18 bis 1:30, 1:20 bis 1:25) liegen. Die Größenparameter (wie Größenverteilung, Dicke und Durchmesser) der Partikel können in herkömmlicher Weise (z.B. mittels Rasterelektronenmikroskopie oder Laserbeugung (z.B. CILAS-Verfahren)) bestimmt werden.

Die Pigmentvolumenkonzentration (PVK) ist das Verhältnis des Gesamtvolumens der Pigmente (Partikel) und/oder anderer nichtfilmbildender fester Teilchen in einer Zusammensetzung (wie einer erfindungsgemäßen Beschichtungszusammensetzung) zum Gesamtvolumen der nichtflüchtigen Anteile, ausgedrückt in Prozent.

Eine "Legierung" ist erfindungsgemäß ein metallisches, in makroskopischem Maßstab homogenes Material, das aus zwei oder mehr Elementen (insbesondere Metallen) besteht, die so verbunden sind, dass sie durch mechanische Mittel nicht ohne Weiteres getrennt werden können. Eine Legierung ist ein metallischer Werkstoff, dessen Ausgangsbestandteile metallurgisch miteinander in Wechselwirkung treten, wodurch sich eine oder mehrere neue Phasen ausbilden.

Unter "Beschichtungszusammensetzung" wird erfindungsgemäß eine Zusammensetzung verstanden, die dazu geeignet ist, dass sie, nach Mischen der Bestandteile der Beschichtungszusammensetzung und gegebenenfalls weiterer Verbindungen, auf ein Substrat (insbesondere eine metallische Oberfläche) aufgetragen werden kann (wodurch somit eine Beschichtung auf dem Substrat ausgebildet wird). Dies schließt auch die Möglichkeit ein, dass die Beschichtungszusammensetzung bis zum Mischen ihrer Bestandteile in mindestens 2 Komponenten vorliegt (sogenannte 2- oder Mehrkomponentenzusammensetzung), die räumlich voneinander getrennt sind (z.B. in mindestens 2 voneinander getrennten Behältern). Vorzugsweise umfasst eine Komponente das Bindemittel (A) und die Partikel (C), gegebenenfalls in Kombination mit einem oder mehreren Rheologiemodifizierungsmitteln und/oder einem oder mehreren Lösungsmitteln, und die andere Komponente umfasst den Härter (B), gegebenenfalls in Kombination mit einem Katalysator und/oder einem oder mehreren Lösungsmitteln. Weiterhin kann in einer Komponente oder in allen Komponenten ein Trocknungsmittel vorhanden sein. Die Beschichtungszusammensetzung kann aber auch als 1-Komponentenzusammensetzung vorliegen, d.h. alle Bestandteile der Beschichtungszusammensetzung liegen als Gemisch vor (so dass die Bestandteile ineinander verteilt sind).

Der Begriff "im Wesentlichen frei von X" bedeutet erfindungsgemäß, dass ein Gemisch (z.B. ein Bestanteil einer Zusammensetzung oder die Zusammensetzung als solche) derart frei von X sein soll, wie es praktisch und realistisch machbar ist. Wenn das Gemisch im Wesentlichen frei von X ist, kann die Menge an X in dem Gemisch weniger als 1 Gew.-% (z.B. weniger als 0,5 Gew.-%, weniger als 0,4 Gew.-%, weniger als 0,3 Gew.-%, weniger als 0,2 Gew.-%, weniger als 0,1 Gew.-%, weniger als 0,09 Gew.-%, weniger als 0,08 Gew.-%, weniger als 0,07 Gew.-%, weniger als 0,06 Gew.-%, weniger als 0,05 Gew.-%, weniger als 0,04 Gew.-%, weniger als 0,03 Gew.-%, weniger als 0,02 Gew.-%, weniger als 0,01 Gew.-%, weniger als 0,005 Gew.-%, weniger als 0,001 Gew.-%), bezogen auf das Gesamtgewicht des Gemisches, betragen. Wenn die erfindungsgemäße Beschichtungszusammensetzung im Wesentlichen frei von Wasser sein soll, beträgt die Menge an Wasser in der Beschichtungszusammensetzung weniger als 1 Gew.-% (z.B. weniger als 0,5 Gew.-%, weniger als 0,4 Gew.-%, weniger als 0,3 Gew.-%, weniger als 0,2 Gew.-%, weniger als 0,1 Gew.-%, weniger als 0,09 Gew.-%, weniger als 0,08 Gew.-%, weniger als 0,07 Gew.-%, weniger als 0,06 Gew.-%, weniger als 0,05 Gew.-%, weniger als 0,04 Gew.-%, weniger als 0,03 Gew.-%, weniger als 0,02 Gew.-%, weniger als 0,01 Gew.-%, weniger als 0,005 Gew.-%, weniger als 0,001 Gew.-%), bezogen auf das Gesamtgewicht der Beschichtungszusammensetzung. Wenn die erfindungsgemäße Beschichtungszusammensetzung im Wesentlichen frei von chromhaltigen Verbindungen sein soll, beträgt die Gesamtmenge an chromhaltigen Verbindungen in der Beschichtungszusammensetzung weniger als 1 Gew.-% (z.B. weniger als 0,5 Gew.-%, weniger als 0,4 Gew.-%, weniger als 0,3 Gew.-%, weniger als 0,2 Gew.-%, weniger als 0,1 Gew.-%, weniger als 0,09 Gew.-%, weniger als 0,08 Gew.-%, weniger als 0,07 Gew.-%, weniger als 0,06 Gew.-%, weniger als 0,05 Gew.-%, weniger als 0,04 Gew.-%, weniger als 0,03 Gew.-%, weniger als 0,02 Gew.-%, weniger als 0,01 Gew.-%, weniger als 0,005 Gew.-%, weniger als 0,001 Gew.-%), bezogen auf das Gesamtgewicht der Beschichtungszusammensetzung. Wenn die erfindungsgemäße Beschichtungszusammensetzung im Wesentlichen frei von Bisphenol A-Verbindungen sein soll, beträgt die Gesamtmenge an Bisphenol A-Verbindungen in der Beschichtungszusammensetzung weniger als 1 Gew.-% (z.B. weniger als 0,5 Gew.-%, weniger als 0,4 Gew.-%, weniger als 0,3 Gew.-%, weniger als 0,2 Gew.-%, weniger als 0,1 Gew.-%, weniger als 0,09 Gew.-%, weniger als 0,08 Gew.-%, weniger als 0,07 Gew.-%, weniger als 0,06 Gew.-%, weniger als 0,05 Gew.-%, weniger als 0,04 Gew.-%, weniger als 0,03 Gew.-%, weniger als 0,02 Gew.-%, weniger als 0,01 Gew.-%, weniger als 0,005 Gew.-%, weniger als 0,001 Gew.-%), bezogen auf das Gesamtgewicht der Beschichtungszusammensetzung. Wenn die erfindungsgemäße Beschichtungszusammensetzung im Wesentlichen frei von Isocyanaten sein soll, ist es bevorzugt, dass die Gesamtmenge an Isocyanaten in der Beschichtungszusammensetzung weniger als 1 Gew.-% (z.B. weniger als 0,5 Gew.-%, weniger als 0,4 Gew.-%, weniger als 0,3 Gew.-%, weniger als 0,2 Gew.-%, weniger als 0,1 Gew.-%, weniger als 0,09 Gew.-%, weniger als 0,08 Gew.-%, weniger als 0,07 Gew.-%, weniger als 0,06 Gew.-%, weniger als

0,05 Gew.-%, weniger als 0,04 Gew.-%, weniger als 0,03 Gew.-%, weniger als 0,02 Gew.-%, weniger als 0,01 Gew.-%, weniger als 0,005 Gew.-%, weniger als 0,001 Gew.-%), bezogen auf das Gesamtgewicht der Beschichtungszusammensetzung, beträgt.

Unter "chromhaltiger Verbindung" wird erfindungsgemäß eine jegliche Verbindung verstanden, die Chrom enthält, wobei die Oxidationsstufe von Chrom nicht relevant ist. Z.B. kann die chromhaltige Verbindung Chrom in einer Menge von mindestens 10 Gew.-% (z.B. mindestens 9 Gew.-%, mindestens 8 Gew.-%, mindestens 7 Gew.-%, mindestens 6 Gew.-%, mindestens 5 Gew.-%, mindestens 4 Gew.-%, mindestens 3 Gew.-%, mindestens 2 Gew.-%, mindestens 1 Gew.-%), bezogen auf das Gesamtgewicht der Verbindung, enthalten.

Unter einer "Bisphenol A-Verbindung" wird erfindungsgemäß eine jegliche Verbindung verstanden, die (i) Bisphenol A (d.h. 2,2-Bis-(4-hydroxyphenyl)propan) oder eine halogenierte Form davon (wie Tetrabrombisphenol A) ist, (ii) Bisphenol A oder eine halogenierte Form davon (wie Tetrabrombisphenol A) freisetzen kann und/oder (iii) Bisphenol A und/oder eine halogenierte Form davon (wie Tetrabrombisphenol A) als Teilstruktur (z.B. als Diolbestandteil in einem entsprechenden Polymer) umfasst.

Unter dem "molaren Verhältnis" zweier Atome oder Verbindungen in einem Molekül wird erfindungsgemäß der Quotient aus der Molmenge des ersten Atoms bzw. der ersten Verbindung in dem Molekül und der Molmenge des zweiten Atoms bzw. der zweiten Verbindung in dem Molekül verstanden. Beispielweise beträgt das molare Verhältnis von Zn und Mg in einer Zn-Mg-Legierung, die aus gleichen molaren Mengen von Zn und Mg besteht, 1:1 (während das Gewichtsverhältnis von Zn zu Mg in dieser Legierung ca. $65,38/24,31 \approx 2,69$ beträgt).

Unter "metallische Oberfläche" wird erfindungsgemäß die Oberfläche eines Metalls verstanden.

Der Begriff "Aufbringen" bedeutet erfindungsgemäß, dass eine Substanz (z.B. eine erfindungsgemäße Beschichtungszusammensetzung) auf ein Substrat (insbesondere eine metallische Oberfläche) aufgetragen wird. Das Aufbringen kann nach verschiedenen Verfahren erfolgen, z.B. durch Filmbildung aus flüssigen Zuständen (d.h. aus Lösungen, Dispersionen oder Schmelzen z.B. durch Spritzen, Rollen, Streichen, Gießen, Walzen, Tauchen, Drucken oder ein anderes Standardverfahren), durch Pulverbeschichtung oder durch *in-situ*-Polymerisation oder Plasmapolymerisation. Das Aufbringen kann auch ein oder mehrere zeitlich vorausgehende Schritte umfassen, wie z.B. ein Reinigen der Substratoberfläche (d.h. das Entfernen von Verunreinigungen auf der Substratoberfläche), das Aktivieren der Substratoberfläche und/oder das Ausbilden von haftvermittelnden Schichten. Die Reinigung von Metalloberflächen kann beispielweise mechanisch (z.B. durch Wischen, Schleifen, Polieren, Bürsten und/oder Sandstrahlen), thermisch (z.B. durch Flammstrahlen) und/oder chemisch (z.B. durch Beizen, Reinigen mit Lösungsmittel oder wässrigem Reiniger) erfolgen. Das Aktivieren einer Metalloberfläche kann beispielsweise durch Dekapieren (Aluminium), Phosphatieren, Zirconiumdioxid-Abscheidung, Phosphorsäure-Anodisieren, Chromatfreie Verfahren und/oder Nachpassivieren durchgeführt werden.

Unter "Aushärten" wird erfindungsgemäß eine Serie von Vorgängen, Reaktionsabläufen, Umwandlungen usw. verstanden, die mit dem Übergang einer verarbeitbaren, d.h. verformbaren (insbesondere flüssigen) Zusammensetzung (insbesondere der erfindungsgemäßen Beschichtungszusammensetzung) in einen festen ("harten"), am Substrat haftenden Film einhergehen. Aushärten kann eine physikalische Härtung (z.B. Trocknung durch Lösungsmittelabgabe und/oder Vernetzung durch Verschlaufungen und Koaleszenzphänomene) und/oder eine chemische Härtung (z.B. die Ausbildung eines dreidimensionalen Netzwerkes infolge von chemische Reaktionen) beinhalten. Beispiele chemischer Härtung sind die oxidative Härtung (d.h. unter Einfluss von Luftsauerstoff erfolgt eine Verknüpfung von Molekülen über Sauerstoff-Brücken an aliphatische Doppelbindungen), die Polykondensation (d.h. die Vernetzung unter Abspaltung niedermolekularer Verbindungen (wie Wasser oder Alkohol); evtl. auch Selbstvernetzung von funktionellen Gruppen, die erst nach Hydrolyse infolge von Feuchtigkeit entstehen (z.B. können Alkoxysilylgruppen durch Feuchtigkeit zu Silanolgruppen hydrolysiert werden, die ihrerseits mit Alkoxysilylgruppen zu Siloxanen reagieren können)), die Polymerisation (d.h. Vernetzung von Monomeren und/oder Oligomeren mit aliphatischen Doppelbindungen) und die Polyaddition (d.h. abspaltproduktfreie Umsetzung der im Bindemittel vorhandenen funktionellen Gruppen (z.B. Epoxy-Gruppen), wobei insbesondere zwei Grundformen existieren: (1) Vernetzung mittels hochreaktiver Härter z.B. in 2-Komponentensystemen (wie einem Epoxidharz-System als Komponente 1 und einem Amin (z.B. einem Amin mit einer weiteren funktionellen Gruppe, die fähig ist, mit dem Epoxidharz-System zu reagieren (insbesondere unter Ausbildung einer kovalenten Bindung)), Polyamin, Polyaminoamid oder Aminaddukt als Komponente 2) und (2) Verwendung reaktionsschwächerer Härter in 1-Komponentensystemen, die bei erhöhter Temperatur reagieren (wie ein entsprechend formuliertes Epoxidharz, in dem die Epoxy-Gruppen fähig sind, bei Wärmeeinwirkung Additionsreaktionen einzugehen (z.B. mit Hydroxymethyl-Gruppen unter Ether-Brückenbildung)).

Der Begriff "mit einem Überzug versehene Legierung" beinhaltet erfindungsgemäß eine Legierung, auf deren Oberfläche eine dünne Schicht (z.B. in einer Dicke von 0,001 bis 0,1 mm) eines Metalls (z.B. Zink) oder Nichtmetalls (z.B. eines Polymers) aufgebracht wurde. Das Aufbringen kann nach verschiedenen Verfahren erfolgen, z.B. durch Filmbildung aus flüssigen Zuständen (d.h. aus Lösungen, Dispersionen oder Schmelzen), Pulverbeschichtung oder durch *in-situ*-Polymerisation oder Plasmapolymerisation. Umfasst von dem Begriff "mit einem Überzug versehene Legierung" soll z.B. auch verzinkter Stahl sein.

Unter "Lewis-Säure" wird erfindungsgemäß ein Elektronenpaarakzeptor verstanden, d.h. ein Molekül oder Ion mit unvollständiger Edelgaskonfiguration, das ein Elektronenpaar (z.B. von einer Lewis-Base zur Verfügung gestellt) aufnehmen kann (wobei es mit der Lewis-Base ein sogenanntes Lewis-Addukt ausbilden kann). Eine Lewis-Säure ist elektrophil, während eine Lewis-Base nukleophil ist. Beispiele von Lewis-Säure beinhalten Bortrifluorid und dessen Komplexe (z.B. mit Ethylamin), die Bromide von Phosphor und Aluminium und die Chloride von Bor, Aluminium, Phosphor, Eisen, Zink und Zinn. Bevorzugte Lewis-Säuren sind diejenigen, die nicht korrosiv (insbesondere nicht korrosiv gegenüber Aluminium und/oder Eisen) sind.

Der Begriff "VOC" bedeutet flüchtige organische Verbindungen ("volatile organic compounds", VOC) und ist ein Sammelbegriff für organische Stoffe, die bei atmosphärischen Bedingungen flüchtig sind (d.h. einen signifikanten Dampfdruck aufweisen). Typischerweise ist der Siedepunkt der VOC kleiner als 260°C (wie kleiner als 250°C bis 260°C).

*Bestandteile der Beschichtungszusammensetzung*

Bindemittel (A)

Die erfindungsgemäße Beschichtungszusammensetzung enthält als Bestandteil (A) ein Bindemittel, das auf einem oder mehreren Organosilicium-Verbindungen $S_1$ basiert. In einer Ausführungsform umfasst das Bindemittel (A) eine Organosilicium-Verbindung $S_1$, die mindestens eine (wie 1 oder mehr, 2 oder mehr, 3, oder mehr, 4 oder mehr) funktionelle Gruppe aufweist, die fähig ist, mit dem Härter (B) zu reagieren. In einer Ausführungsform umfasst das Bindemittel (A) eine Organosilicium-Verbindung $S_1$, die (i) mindestens eine (wie 1 oder mehr, 2 oder mehr, 3, oder mehr, 4 oder mehr) funktionelle Gruppe aufweist, die fähig ist, mit dem Härter (B) zu reagieren, und (ii) ein oder mehrere Alkoxygruppen (die direkt an Si-Atome gebunden sind) aufweist. Diese Ausgestaltung ist besonders vorteilhaft, da zwei voneinander unabhängige Härtungsmechanismen beteiligt sind: zum einem kann eine Vernetzung über die funktionellen Gruppen des Bindemittels (z.B. Epoxygruppen) mit denen des Härters (z.B. Aminogruppen) erfolgen und andererseits können durch Luftfeuchtigkeit Alkoxygruppen eines Bindemittelmoleküls zu Silanolgruppen hydrolysiert werden, die wiederum mit anderen Bindemittelmolekülen (über deren (noch nicht hydrolysierte) Alkoxygruppen und/oder Silanolgruppen) und/oder, falls die Organosilicium-Verbindung $S_2$ des Härters (B) ebenfalls Alkoxygruppen (die direkt an Si-Atome gebunden sind) aufweist (was erfindungsgemäß bevorzugt ist), mit Alkoxygruppen und/oder Silanolgruppen des Härters (B) reagieren können.

Vorzugsweise ist die Organosilicium-Verbindung $S_1$ ein Harz (insbesondere ein bei 0°C bis 40°C flüssiges Harz), das ein Silikonharz mit Alkoxygruppen (die direkt an Si-Atome gebunden sind) und ein aliphatisches Polymer umfasst, wobei das aliphatische Polymer mindestens eine (wie 1 oder mehr, 2 oder mehr, 3, oder mehr, 4 oder mehr) funktionelle Gruppe aufweist, die fähig ist, mit dem Härter (B) zu reagieren. Beispielsweise können solche Harze dadurch hergestellt werden, dass ein aliphatisches Polymer, das neben der entsprechenden mindestens einen (wie 1 oder mehr, 2 oder mehr, 3 oder mehr, 4 oder mehr) funktionellen Gruppe, die fähig ist, mit dem Härter (B) zu reagieren, auch eine oder mehrere OH-Gruppen aufweist, mit einem entsprechenden Silikonharz mit Alkoxygruppen umgesetzt wird, wobei der bei der Umsetzung entstehende Alkohol aus dem Reaktionsansatz entfernt wird. Um die Umsetzung zu vereinfachen und/oder zu beschleunigen, kann sie in Gegenwart von mindestens einem Polyol durchgeführt werden, wobei das Polyol vorzugsweise ein Di-, Tri- oder Tetraol (insbesondere ein lineares oder verzweigtes aliphatisches Di-, Tri- oder Tetraol) ist, das ein Molekulargewicht von weniger als 5000 g/mol aufweist. Das mindestens eine Polyol kann in einer Menge von etwa 1 bis 20 Gew.-% (wie etwa 2 bis 15 Gew.-%), bezogen auf den Festkörperanteil des Reaktionsgemisches aus Silikonharz, aliphatischem Polymer und Polyol, in dem Reaktionsgemisch vorhanden sein. Vorzugsweise weist das Silikonharz mit Alkoxygruppen die Formel $(R^6)_aSi(OR^7)_bO_{(4-a-b)/2}$ auf, wobei $R^6$ jeweils unabhängig ein monovalenter organischer Rest (insbesondere ausgewählt aus der Gruppe, bestehend aus monovalenten Alkyl- und Arylresten, wie $C_{1-10}$-Alkyl- (z.B. $C_{1-8}$-Alkyl-) und $C_{6-14}$-Arylresten (z.B. Phenyl)) ist, $R^7$ ein monovalenter Alkylrest (wie ein monovalenter $C_{1-10}$-Alkyl-, $C_{1-8}$-Alkyl-, $C_{1-6}$-Alkyl- oder $C_{1-4}$-Alkylrest) ist, a einen Wert von 0,1 bis 2,0 aufweist und b einen Wert von 0,1 bis 1,0 aufweist. Vorzugsweise werden das Silikonharz mit Alkoxygruppen und das aliphatische Polymer, das neben der entsprechenden mindestens einen (wie 1 oder mehr, 2 oder mehr, 3 oder mehr, 4 oder mehr) funktionellen Gruppe, die fähig ist, mit dem Härter (B) zu reagieren, auch eine oder mehrere OH-Gruppen aufweist, in Mengenverhältnissen umgesetzt, so dass das Verhältnis von COH-Gruppen (aus dem aliphatischen Polymer) zu den direkt an Si gebundenen Alkoxygruppen (aus dem Silikonharz) gleich oder größer als 1 ist. In jeder der vor- oder nachstehenden Ausführungsformen ist es bevorzugt, dass das aliphatische Polymer ein aliphatisches Polymer ist, das (i) mindestens 2 (wie 2 oder mehr, 3 oder mehr, 4 oder mehr) funktionelle Gruppen (wie Epoxygruppen), die fähig sind, mit dem Härter (B) zu reagieren, und eine oder mehrere OH-Gruppen aufweist, (ii) kein Silicium enthält, (iii) ein Molekulargewicht von weniger als 5000 g/mol aufweist, (iv) mindestens 2 (wie 2 oder mehr, 3 oder mehr, 4 oder mehr) funktionelle Gruppen (wie Epoxygruppen), die fähig sind, mit dem Härter (B) zu reagieren, und eine oder mehrere OH-Gruppen aufweist und kein Silicium enthält, (v) mindestens 2 (wie 2 oder mehr, 3 oder mehr, 4 oder mehr) funktionelle Gruppen (wie Epoxygruppen), die fähig sind, mit dem Härter (B) zu reagieren, eine oder mehrere OH-Gruppen und ein Molekulargewicht von weniger

als 5000 g/mol, (vi) kein Silicium enthält und ein Molekulargewicht von weniger als 5000 g/mol aufweist oder (vii) mindestens 2 (wie 2 oder mehr, 3 oder mehr, 4 oder mehr) funktionelle Gruppen (wie Epoxygruppen), die fähig sind, mit dem Härter (B) zu reagieren, und eine oder mehrere OH-Gruppen aufweist, kein Silicium enthält und ein Molekulargewicht von weniger als 5000 g/mol aufweist. Beispiele geeigneter aliphatischer Polymere, die mindestens 2 Epoxygruppen, die fähig sind, mit dem Härter (B) zu reagieren, und eine oder mehrere OH-Gruppen aufweisen, beinhalten handelsübliche aliphatische Epoxidharze wie Eponex® 1513, Epodil® 757 und Epilox® M700. Die Umsetzung des Silikonharzes (insbesondere eines Silikonharzes mit Alkoxygruppen (die direkt an Si-Atome gebunden sind)) mit dem aliphatischen Polymer (insbesondere einem aliphatischen Polymer, das neben der entsprechenden mindestens einen (wie 1 oder mehr, 2 oder mehr, 3, oder mehr, 4 oder mehr) funktionellen Gruppe, die fähig ist, mit dem Härter (B) zu reagieren, auch eine oder mehrere OH-Gruppen aufweist), vorzugsweise in Gegenwart eines Polyols (insbesondere eines linearen oder verzweigten aliphatischen Di-, Tri- oder Tetraols mit einem Molekulargewicht von weniger als 5000 g/mol), kann allgemein bei Temperaturen erfolgen, die im Bereich von 100 °C bis 160°C liegen. Die Reaktion zwischen dem Silikonharz, dem aliphatischen Polymer und gegebenenfalls dem Polyol wird solange durchgeführt, bis der gewünschte Reaktionsumsatz (wie 20 bis 80%) erreicht ist, und kann durch Abkühlen des Reaktionsgemisches (z.B. auf unter 100°C) abgestoppt werden. Die Herstellung der Organosilicium-Verbindung $S_1$ und dessen Vorläufer (insbesondere der entsprechenden Silikonharze) ist dem Fachmann bekannt; vgl. z.B. DE 34 12 648 C, EP 1 174 467 A2 und US 2002/0028296. Vorzugsweise beträgt der Silikonharzanteil in der Organosilicium-Verbindung $S_1$ mindestens 30% (wie 35 bis 65%, vorzugsweise 40 bis 60%, mehr bevorzugt 45 bis 55%).

In jeder der vor- oder nachstehend genannten Ausführungsformen des Bindemittels (A) kann die funktionelle Gruppe, die fähig ist, mit dem Härter (B) zu reagieren, ausgewählt werden aus einem Teil eines Paars von komplementären funktionellen Gruppen, z.B. aus Amino-, Epoxy- (inkl. Glycidyloxy-), Carboxyl-, Glykol-, Hydroxy-, Alkoxysilyl-, Mercapto-, Acryl-, Methacryl-, Acryloxy-, Methacryloxy-, Ureido- und Vinylgruppen, insbesondere aus Amino-, Epoxy- (inkl. Glycidyloxy-), Hydroxy-, Mercapto-, Acryloxy-, Methacryloxy-, Ureido- und Vinylgruppen, mehr bevorzugt aus Amino-, Epoxy- (inkl. Glycidyloxy-), Hydroxy-, Mercapto-, Methacryloxy-, Ureido- und Vinylgruppen, noch mehr bevorzugt aus Amino-, Ureido-, Glycidyloxy- und Epoxygruppen. Z.B. kann in jeder der vor- oder nachstehend genannten Ausführungsformen des Bindemittels (A) die funktionelle Gruppe, die fähig ist, mit dem Härter (B) zu reagieren, eine Epoxygruppe, wie eine Glycidyloxygruppe sein.

In einer besonders bevorzugten Ausführungsform ist die Organosilicium-Verbindung $S_1$ ein Harz (insbesondere ein bei 0°C bis 40°C flüssiges Harz), das ein Silikonharz mit Alkoxygruppen (d.h. -OR, die direkt an Si-Atome gebunden sind und wobei R ein monovalenter organischer Rest (z.B. Alkylrest, wie $C_{1-10}$-Alkyl-, $C_{1-8}$-Alkyl-, $C_{1-6}$-Alkyl- oder $C_{1-4}$-Alkylrest z.B. Methyl oder Ethyl) ist) und ein aliphatisches Polymer umfasst, wobei das aliphatische Polymer eine oder mehrere (wie 1 oder mehr, 2 oder mehr, 3 oder mehr, 4 oder mehr) Epoxygruppen (wie eine oder mehrere (wie 1 oder mehr, 2 oder mehr, 3 oder mehr, 4 oder mehr) Glycidyloxygruppen) aufweist. Beispielweise kann die Organosilicium-Verbindung $S_1$ ein Harz sein, das, wie vorstehend beschrieben, das Reaktionsprodukt der Umsetzung eines Silikonharzes mit Alkoxygruppen, die direkt an Si-Atome gebunden sind, (insbesondere eines Silikonharzes der Formel $(R^6)_aSi(OR^7)_bO_{(4-a-b)/2}$) und eines aliphatischen Polymers (insbesondere eines der vorstehend beschriebenen aliphatischen Polymere (i) bis (vii) mit Epoxygruppen als die mindestens 2 funktionellen Gruppen, die fähig sind, mit dem Härter (B) zu reagieren), gegebenenfalls in Gegenwart mindestens eines Polyols (insbesondere eines linearen oder verzweigten aliphatischen Di-, Tri- oder Tetraols, das ein Molekulargewicht von weniger als 5000 g/mol aufweist) sein. In diesen Ausführungsformen und allen anderen Ausführungsformen der Organosilicium-Verbindung $S_1$ ist es bevorzugt, dass die Organosilicium-Verbindung $S_1$ ein Epoxy-Äquivalentgewicht von mindestens 200 g/Äq. (z.B. 200 bis 500 g/Äq., vorzugsweise 300 bis 500 g/Äq., mehr bevorzugt 400 bis 500 g/Äq., mehr bevorzugt 420 bis 480 g/Äq.) und/oder eine Viskosität (bei 25°C) von 1000 bis 2000 mPas (vorzugsweise 1200 bis 1800 mPas, mehr bevorzugt 1300 bis 1700 mPas, mehr bevorzugt 1400 bis 1600 mPas, wie etwa 1500 mPas) aufweist. Vorzugsweise weist die Organosilicium-Verbindung $S_1$ eine Dichte von etwa 700 bis 1500 g/cm$^3$ (z.B. etwa 800 bis 1400 g/cm$^3$, mehr bevorzugt etwa 900 bis 1300 g/cm$^3$, mehr bevorzugt etwa 950 bis 1250 g/cm$^3$, wie etwa 1000 bis 1200 g/cm$^3$) auf.

Organosilicium-Verbindungen $S_1$, die für die erfindungsgemäße Beschichtungszusammensetzung besonders geeignet sind, sind z.B. von Evonik unter dem Handelsnamen Silikopon® E (insbesondere Silikopon® EF) kommerziell erhältlich.

Das Bindemittel (A) kann neben der einen oder den mehreren Organosilicium-Verbindungen $S_1$ eine oder mehrere weitere Bindemittelverbindungen (insbesondere ein oder mehrere Organosilicium-Verbindungen) enthalten, die auf dem Fachgebiet bekannt und üblich sind. Diese eine oder mehreren weiteren Bindemittelverbindungen sollen bevorzugt jedoch diejenigen Bindemittelverbindungen nicht einschließen, die Bisphenol A (z.B. als Teilstruktur) enthalten (wie Bisphenol A-Epoxidharze (z.B. das Epoxidharz, das unter dem Handelsnamen Beckopox® EP 301/75X von Cytec Surface Specialties SA/NV erhältlich ist)). Generell ist es bevorzugt, dass das Bindemittel (A) kein Bisphenol A-Epoxidharz (wie Beckopox® EP 301/75X) und insbesondere keine Bisphenol A-Verbindungen umfasst. In einer Ausführungsform besteht das Bindemittel (A) aus der Organosilicium-Verbindung $S_1$.

Härter (B)

Die erfindungsgemäße Beschichtungszusammensetzung enthält als Bestandteil (B) einen Härter, der auf einer oder mehreren Organosilicium-Verbindungen $S_2$ basiert. In einer Ausführungsform umfasst der Härter (B) eine Organosilicium-Verbindung $S_2$, die mindestens eine (wie 1 oder mehr, 2 oder mehr, 3 oder mehr, 4 oder mehr) funktionelle Gruppe aufweist, die fähig ist, mit dem Bindemittel (A) zu reagieren. Z.B. kann die Organosilicium-Verbindung $S_2$, die mindestens eine (wie 1 oder mehr, 2 oder mehr, 3 oder mehr, 4 oder mehr) funktionelle Gruppe aufweist, die fähig ist, mit dem Bindemittel (A) zu reagieren, eine der nachstehenden allgemeinen Formeln aufweisen:

$$R^3{}_rSiY_{4-r} \qquad (I)$$

$$(R^3)_s(Y)_{3-s}Si\text{-}R^4\text{-}Si(R^3)_t(Y)_{3-t} \qquad (II)$$

worin

$R^3$ jeweils unabhängig ausgewählt wird aus organischen monovalenten Resten, wobei mindestens ein Rest $R^3$ eine funktionelle Gruppe aufweist, die fähig ist, mit dem Bindemittel (A) zu reagieren;
Y jeweils unabhängig ausgewählt wird aus hydrolysierbaren monovalenten Resten;
$R^4$ ausgewählt wird aus der Gruppe, bestehend aus organischen divalenten Resten, -O- und -NH-;
r eine ganze Zahl von 1 bis 3 ist;
s 1 oder 2 ist, und
t eine ganze Zahl von 1 bis 3 ist.

In einer Ausführungsform weist die Organosilicium-Verbindung $S_2$, die mindestens eine (wie 1 oder mehr, 2 oder mehr, 3 oder mehr, 4 oder mehr) funktionelle Gruppe aufweist, die fähig ist, mit dem Bindemittel (A) zu reagieren, eine der Formel (I) oder (II) auf, worin $R^3$ jeweils unabhängig ausgewählt wird aus der Gruppe, bestehend aus Alkyl-, Alkenyl-, Alkinyl-, Cycloalkyl-, Heterocycloalkyl-, Aryl- und Heteroarylresten, wobei mindestens ein Rest $R^3$ eine funktionelle Gruppe aufweist, die fähig ist, mit dem Bindemittel (A) zu reagieren. In einer Ausführungsform wird $R^3$ unabhängig ausgewählt aus der Gruppe, bestehend aus Alkyl-, Alkenyl-, Alkinyl- und Cycloalkylresten, wobei mindestens ein Rest $R^3$ eine funktionelle Gruppe aufweist, die fähig ist, mit dem Bindemittel (A) zu reagieren. In einer Ausführungsform wird $R^3$ unabhängig aus Alkylresten (vorzugsweise Alkylresten, die 1, 2, 3, 4, 5, 6, 7, 8, 9, 10, 11, 12, 13 oder 14 Kohlenstoffatome aufweisen) ausgewählt, wobei mindestens ein Rest $R^3$ eine funktionelle Gruppe aufweist, die fähig ist, mit dem Bindemittel (A) zu reagieren. In jeder der vor- oder nachstehend genannten Ausführungsformen der Formel (I) kann (i) r in 1 oder 2 sein und/oder (ii) Y jeweils unabhängig ausgewählt werden aus $-OR^5$, wobei $R^5$ ausgewählt wird aus der Gruppe, bestehend aus Alkylresten und -Alkylen-(T-alkylen)$_v$-H, wobei T jeweils unabhängig ausgewählt wird aus der Gruppe, bestehend aus -O-, -S- und -NH-, und v eine ganze Zahl von 1 bis 5 ist. In jeder der vor- oder nachstehend genannten Ausführungsformen der Formel (II) kann (i) s 1 sein, (ii) t 1 oder 2 sein, (iii) Y jeweils unabhängig ausgewählt werden aus $-OR^5$, wobei $R^5$ ausgewählt wird aus der Gruppe, bestehend aus Alkylresten und -Alkylen-(T-alkylen)$_v$-H, wobei T jeweils unabhängig ausgewählt wird aus der Gruppe, bestehend aus -O-, -S- und -NH-, und v eine ganze Zahl von 1 bis 5 ist, und/oder (iv) $R^4$ ausgewählt werden aus der Gruppe, bestehend aus Alkylenresten (insbesondere denjenigen mit 1 bis 10 (wie 1 bis 6 oder 1, 2, 3, 4) Kohlenstoffatomen) und -O-. In jeder der vor- oder nachstehend genannten Ausführungsformen der Formeln (I) und (II) kann die funktionelle Gruppe, die fähig ist, mit dem Bindemittel (A) zu reagieren, ausgewählt werden aus einem Teil eines Paars von komplementären funktionellen Gruppen, z.B. aus Amino-, Epoxy- (inkl. Glycidyloxy-), Carboxyl-, Glykol-, Hydroxy-, Alkoxysilyl-, Mercapto-, Acryl-, Methacryl-, Acryloxy-, Methacryloxy-, Ureido- und Vinylgruppen, insbesondere aus Amino-, Epoxy- (inkl. Glycidyloxy-), Hydroxy-, Mercapto-, Acryloxy-, Methacryloxy-, Ureido- und Vinylgruppen, mehr bevorzugt aus Amino-, Epoxy- (inkl. Glycidyloxy-), Hydroxy-, Mercapto-, Methacryloxy-, Ureido- und Vinylgruppen, noch mehr bevorzugt aus Amino-, Ureido-, Glycidyloxy- und Epoxygruppen. Z.B. kann in jeder der vor- oder nachstehend genannten Ausführungsformen der Formeln (I) und (II) die funktionelle Gruppe, die fähig ist, mit dem Bindemittel (A) zu reagieren, eine Amino- oder Ureidogruppe, bevorzugt eine Aminogruppe sein.

In einer Ausführungsform weist die Organosilicium-Verbindung $S_2$, die mindestens eine (wie 1 oder mehr, 2 oder mehr, 3 oder mehr, 4 oder mehr) funktionelle Gruppe aufweist, die fähig ist, mit dem Bindemittel (A) zu reagieren, eine der nachstehenden Formeln auf:

$$(R^{11})_{x1}(R^{12})_{y1}SiY_{4-x1-y1} \qquad (Ia)$$

$$(R^{11})(R^{12})_{y2}(Y)_{2-y2}Si\text{-}R^{14}\text{-}Si(R^{11})_{x3}(R^{12})_{y3}(Y)_{3-x3-y3} \qquad (IIa)$$

worin

$R^{11}$ -L-Z oder ein Alkenylrest ist, wobei L ein organischer divalenter Rest ist und Z die funktionelle Gruppe ist, die fähig ist, mit dem Bindemittel (A) zu reagieren;
$R^{12}$ ein Alkylrest ist;
Y jeweils unabhängig ausgewählt wird aus $-OR^{15}$, wobei $R^{15}$ ausgewählt wird aus der Gruppe, bestehend aus Alkylresten und -Alkylen-(T-alkylen)$_v$-H, wobei T jeweils unabhängig ausgewählt wird aus der Gruppe, bestehend aus -O-, -S- und -NH-, und v eine ganze Zahl von 1 bis 5 ist;
$R^{14}$ ausgewählt wird aus der Gruppe, bestehend aus organischen divalenten Resten, -O- und -NH-; x1 1 oder 2 ist;
y1 0 oder 1 ist, wobei, wenn x1 2 ist, y1 0 ist;
y2 0 oder 1;
x3 0 oder 1 ist; und
y3 0 oder 1.

In einer Ausführungsform der Formeln (Ia) und (IIa) wird L ausgewählt aus der Gruppe, bestehend aus Alkylen- (z.B. $C_{1-10}$-Alkylen-), Alkenylen- (z.B. $C_{2-10}$-Alkenylen-), Alkinylen- (z.B. $C_{2-10}$-Alkinylen-) und Cycloalkylenresten (z.B. $C_{3-10}$-Cycloalkylenresten), insbesondere aus Alkylen-, Alkenylen- und Cycloalkylenresten (wie aus Alkylen- und Cycloalkylenresten), mehr bevorzugt aus Alkylenresten, wobei die Alkylen-, Alkenylen- und Alkinylenreste mit 1 bis 5 (d.h. 1, 2, 3, 4 oder 5) Gruppen, ausgewählt aus -O-, -S- und -NH-, unterbrochen sein können (wobei Reste, in denen 2 oder mehr Gruppen, ausgewählt aus -O-, -S- und -NH-, direkt miteinander verknüpft sind (z.B. -O-O-), ausgeschlossen sind). In jeder der vor- oder nachstehend genannten Ausführungsformen der Formeln (Ia) und (IIa) kann $R^{12}$ ein Alkylrest mit 1 bis 10 (wie 1 bis 6 oder 1 bis 3) Kohlenstoffatomen, wie Methyl oder Ethyl, sein. In jeder der vor- oder nachstehend genannten Ausführungsformen der Formeln (Ia) und (IIa) kann $R^{15}$ ausgewählt werden aus der Gruppe, bestehend aus Alkylresten mit 1 bis 10 (wie 1 bis 6 oder 1 bis 4) Kohlenstoffatomen (z.B. Methyl, Ethyl oder Propyl) und -($C_{1-4}$-Alkylen-[O-($C_{1-4}$-alkylen)]$_v$-H, wobei v 1, 2, 3 oder 4, vorzugsweise 1, 2 oder 3 ist. In jeder der vor- oder nachstehend genannten Ausführungsformen der Formel (Ia) kann (i) x1 1 oder 2 sein und y1 0 sein oder (ii) x1 1 sein und y1 1 sein. In jeder der vor- oder nachstehend genannten Ausführungsformen der Formel (IIa) kann (i) y2 0 sein, x3 1 sein und y3 0 sein, (ii) y2 0 sein, x3 0 sein und y3 1 sein, (iii) y2 0 sein, x3 1 sein und y3 1 sein, (iv) y2 1 sein, x3 1 sein und y3 0 sein, (v) y2 1 sein, x3 0 sein und y3 1 sein oder (vi) y2 1 sein, x3 1 sein und y3 1 sein. In jeder der vor- oder nachstehend genannten Ausführungsformen der Formel (IIa) kann $R^{14}$ ausgewählt werden aus der Gruppe, bestehend aus Alkylenresten (insbesondere denjenigen mit 1 bis 10 (wie 1 bis 16 oder 1, 2, 3, 4) Kohlenstoffatomen) und -O-. In jeder der vor- oder nachstehend genannten Ausführungsformen der Formeln (Ia) und (IIa) kann Z ausgewählt werden aus einem Teil eines Paars von komplementären funktionellen Gruppen, z.B. aus Amino-, Epoxy- (inkl. Glycidyloxy-), Carboxyl-, Glykol-, Hydroxy-, Alkoxysilyl-, Mercapto-, Acryl-, Methacryl-, Acryloxy-, Methacryloxy-, Ureido- und Vinylgruppen, insbesondere aus Amino-, Epoxy- (inkl. Glycidyloxy-), Hydroxy-, Mercapto-, Acryloxy-, Methacryloxy-, Ureido- und Vinylgruppen, mehr bevorzugt aus Amino-, Epoxy- (inkl. Glycidyloxy-), Hydroxy-, Mercapto-, Methacryloxy-, Ureido- und Vinylgruppen, noch mehr bevorzugt aus Amino-, Ureido-, Glycidyloxy- und Epoxygruppen. Z.B. kann in jeder der vor- oder nachstehend genannten Ausführungsformen der Formeln (Ia) und (IIa) Z eine Amino- oder Ureidogruppe, mehr bevorzugt eine Aminogruppe sein.

In einer Ausführungsform weist die Organosilicium-Verbindung $S_2$, die mindestens eine (wie 1 oder mehr, 2 oder mehr, 3 oder mehr, 4 oder mehr) funktionelle Gruppe aufweist, die fähig ist, mit dem Bindemittel (A) zu reagieren, die nachstehende Formel auf:

$$(R^{21})(R^{22})_{y4}SiY_{3-y4} \qquad \text{(Ib)}$$

worin

$R^{21}$ -Alkylen-(D-alkylen)$_w$-Z oder -Z ist, wobei D jeweils unabhängig ausgewählt wird aus der Gruppe, bestehend aus -O-, -S- und -NH-, w eine ganze Zahl von 0 bis 5 ist und Z die funktionelle Gruppe ist, die fähig ist, mit dem Bindemittel (A) zu reagieren, wobei, wenn $R^{21}$ -Z ist, -Z eine Vinylgruppe ist;
$R^{22}$ ein Alkylrest ist;
Y jeweils unabhängig ausgewählt wird aus $-OR^{25}$, wobei $R^{25}$ ausgewählt wird aus der Gruppe, bestehend aus Alkylresten und -Alkylen-(T-alkylen)$_v$-H, wobei T jeweils unabhängig ausgewählt wird aus der Gruppe, bestehend aus -O-, -S- und -NH-, und v eine ganze Zahl von 1 bis 5 ist; und
y4 0 oder 1 ist.

In einer Ausführungsform der Formel (Ib) ist $R^{21}$ -Alkylen-(D-alkylen)$_w$-Z, worin (i) D jeweils unabhängig -O- oder -NH- ist, (ii) die Alkylenreste jeweils unabhängig 1 bis 10 (wie 2 bis 8 oder 2 bis 6, bevorzugt 2, 3 oder 4) Kohlenstoffatome aufweisen und/oder (iii) w 0, 1, 2, 3 oder 4 (bevorzugt 0, 1 oder 2) ist. In jeder der vor- oder nachstehend genannten Ausführungsformen der Formel (Ib) kann $R^{22}$ ein Alkylrest mit 1 bis 10 (wie 1 bis 6 oder 1 bis 3) Kohlenstoffatomen, wie Methyl oder Ethyl, sein. In jeder der vor- oder nachstehend genannten Ausführungsformen der Formel (Ib) kann $R^{25}$ ausgewählt werden aus der Gruppe, bestehend aus Alkylresten mit 1 bis 10 (wie 1 bis 6 oder 1 bis 4) Kohlenstoffatomen (z.B. Methyl, Ethyl oder Propyl) und -($C_{1-4}$-Alkylen)-[O-($C_{1-4}$-alkylen)]$_v$-H, wobei v 1, 2, 3 oder 4, vorzugsweise 1, 2 oder 3 ist. In jeder der vor- oder nachstehend genannten Ausführungsformen der Formel (Ib) kann Z ausgewählt werden aus einem Teil eines Paars von komplementären funktionellen Gruppen, z.B. aus Amino-, Epoxy- (Glycidyloxy-), Carboxyl-, Glykol-, Hydroxy-, Alkoxysilyl-, Mercapto-, Acryl-, Methacryl-, Acryloxy-, Methacryloxy-, Ureido- und Vinylgruppen, insbesondere aus Amino-, Epoxy- (inkl. Glycidyloxy-), Hydroxy-, Mercapto-, Acryloxy-, Methacryloxy-, Ureido- und Vinylgruppen, noch mehr bevorzugt aus Amino-, Epoxy-(inkl. Glycidyloxy-), Hydroxy-, Mercapto-, Methacryloxy-, Ureido- und Vinylgruppen, noch mehr bevorzugt aus Amino-, Ureido-, Glycidyloxy- und Epoxygruppen. Z.B. kann in jeder der vor- oder nachstehend genannten Ausführungsformen der Formel (Ib) Z eine Amino- oder Ureidogruppe, mehr bevorzugt eine Aminogruppe sein.

In einer Ausführungsform weist die Organosilicium-Verbindung $S_2$, die mindestens eine (wie 1 oder mehr, 2 oder mehr, 3 oder mehr, 4 oder mehr) funktionelle Gruppe aufweist, die fähig ist, mit dem Bindemittel (A) zu reagieren, die nachstehende Formel auf:

$$(R^{31})(R^{32})_{y5}SiY_{3-y5} \qquad (Ic)$$

worin

$R^{31}$-(Alkylen)-[D-(alkylen)]$_w$-Z oder -Z ist, wobei die Alkylenreste jeweils unabhängig 1 bis 6 (wie 1, 2, 3 oder 4 für den "Alkylenrest" und 2, 3 oder 4 für den "alkylen"-Rest in der Gruppe "[D-(alkylen)]$_w$") Kohlenstoffatome aufweisen, D -O- oder -NH- ist, w 0, 1, 2 oder 3 ist und Z die funktionelle Gruppe ist, die fähig ist, mit dem Bindemittel (A) zu reagieren, und ausgewählt wird aus der Gruppe, bestehend aus Amino-, Epoxy-, Glycidyloxy-, Hydroxy-, Mercapto-, Acryloxy-, Methacryloxy-, Ureido- und Vinylgruppen, wobei, wenn $R^{31}$ -Z ist, -Z eine Vinylgruppe ist;
$R^{32}$ Methyl ist;
Y jeweils unabhängig ausgewählt wird aus -$OR^{35}$, wobei $R^{35}$ ausgewählt wird aus der Gruppe, bestehend aus $C_{1-3}$-Alkylresten und -($C_{1-4}$-Alkylen)-[O-($C_{2-4}$-alkylen)]$_v$-H, wobei v 1, 2 oder 3 ist; und y5 0 oder 1 ist.

In einer Ausführungsform der Formel (Ic) wird $R^{31}$ ausgewählt aus der Gruppe, bestehend aus -($C_{1-4}$-Alkylen)-[NH-($C_{2-4}$-alkylen)]$_w$-$NH_2$, -($C_{1-4}$-Alkylen)-[NH-($C_{2-4}$-alkylen)]$_w$-NH-C(O)-$NH_2$, -($C_{1-4}$-Alkylen)-[O-($C_{2-4}$-alkylen)]$_w$-OH und -($C_{1-4}$-Alkylen)-Z, wobei w 0, 1 oder 2 ist und Z ausgewählt wird aus der Gruppe, bestehend aus Epoxy-, Glycidyloxy-, Mercapto-, Acryloxy-, Methacryloxy- und Vinylgruppen, insbesondere aus Epoxy-, Glycidyloxy-, Mercapto-, Methacryloxy- und Vinylgruppen, mehr bevorzugt aus Glycidyloxy- und Epoxygruppen, und wobei vorzugsweise $C_{1-4}$-Alkylen aus der Gruppe, bestehend aus Methylen, Ethan-1,2-diyl, Propan-,1,3-diyl und Butan-1,4-diyl (bevorzugt Methylen, Ethan-1,2-diyl und Propan-,1,3-diyl), ausgewählt wird. In jeder der vor- oder nachstehend Ausführungsformen der Formel (Ic) kann y5 0 sein. In einer Ausführungsform der Formel (Ic) ist y5 0 und $R^{31}$ wird ausgewählt aus der Gruppe, bestehend aus -($C_{1-4}$-Alkylen)-$NH_2$, -($C_{1-4}$-Alkylen)-NH-($C_{2-4}$-alkylen)-$NH_2$ und -($C_{1-4}$-Alkylen)-NH-($C_{2-4}$-alkylen)-NH-($C_{2-4}$-alkylen)-$NH_2$, worin jeder der $C_{1-4}$- und $C_{2-4}$-Alkylenreste gerade ist, jeder $C_{1-4}$-Alkylenrest unabhängig 1, 2, 3 oder 4 Kohlenstoffatome (vorzugsweise 1, 2 oder 3 Kohlenstoffatome) aufweist und jeder $C_{2-4}$-Alkylenrest unabhängig 2, 3 oder 4 Kohlenstoffatome (vorzugsweise 2 oder 3 Kohlenstoffatome) aufweist. In jeder der vor- oder nachstehend Ausführungsformen der Formel (Ic) kann $R^{35}$ ausgewählt werden aus der Gruppe, bestehend aus Methyl, Ethyl und 2-Methoxyethyl (insbesondere aus Methyl und Ethyl).

Beispiele für die Organosilicium-Verbindung $S_2$, die mindestens eine funktionelle Gruppe aufweist, die fähig ist, mit dem Bindemittel (A) zu reagieren, beinhalten die folgenden Verbindungen: $H_2N-(CH_2)_3-Si(OCH_3)_3$

$H_2N-(CH_2)_3-Si(OCH_2CH_3)_3$

$H_2N-(CH_2)_3-Si(CH_3)(OCH_2CH_3)_2$

$H_2N-(CH_2)_2-NH-(CH_2)_3-Si(OCH_3)_3$

$H_2N-(CH_2)_2-NH-(CH_2)_3-Si(CH_3)(OCH_3)_2$

$H_2N-(CH_2)_2-NH-(CH_2)_2-NH-(CH_2)_3-Si(OCH_3)_3$

$H_2N-C(O)-NH-(CH_2)_3-Si(OCH_3)_3$

$H_2N-C(O)-NH-(CH_2)_3-Si(OCH_2CH_3)_3$

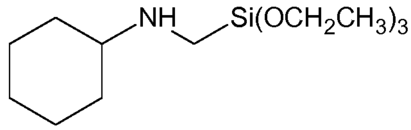

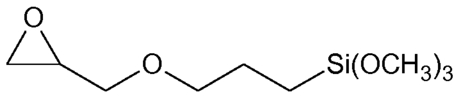

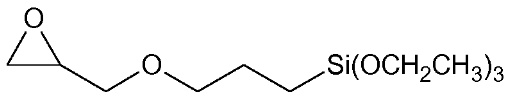

$HO-(CH_2)_3-Si(OCH_3)_3$

$HS-(CH_2)_3-Si(OCH_3)_3$

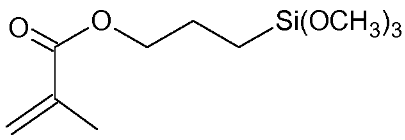

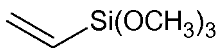

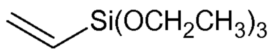

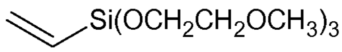

Bevorzugte Organosilicium-Verbindung $S_2$, die mindestens eine funktionelle Gruppe aufweist, die fähig ist, mit dem Bindemittel (A) zu reagieren (insbesondere wenn das Bindemittel Epoxygruppen (wie Glycidyloxygruppen) enthält), beinhalten die folgenden Verbindungen:

$H_2N-(CH_2)_3-Si(OCH_3)_3$

$H_2N-(CH_2)_3-Si(OCH_2CH_3)_3$

$H_2N-(CH_2)_3-Si(CH_3)(OCH_2CH_3)_2$

$H_2N-(CH_2)_2-NH-(CH_2)_3-Si(OCH_3)_3$

$H_2N-(CH_2)_2-NH-(CH_2)_3-Si(CH_3)(OCH_3)_2$

$H_2N-(CH_2)_2-NH-(CH_2)_2-NH-(CH_2)_3-Si(OCH_3)_3$

$H_2N-C(O)-NH-(CH_2)_3-Si(OCH_3)_3$

$H_2N-C(O)-NH-(CH_2)_3-Si(OCH_2CH_3)_3$

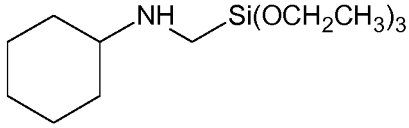

Die Organosilicium-Verbindungen $S_2$ sind kommerziell erhältlich, beispielsweise von der Firma Evonik unter dem Handelsnamen Dynasylan® (wie Dynasylan® AMMO für $H_2N-(CH_2)_3-Si(OCH_3)_3$; Dynasylan® AMEO für $H_2N-(CH_2)_3-Si(OCH_2CH_3)_3$; Dynasylan® DAMO für $H_2N-(CH_2)_2-NH-(CH_2)_3-Si(OCH_3)_3$; Dynasylan® 1411 für $H_2N-(CH_2)_2-NH-(CH_2)_3-Si(CH_3)(OCH_3)_2$; Dynasylan® MTMO für $HS-(CH_2)_3-Si(OCH_3)_3$; etc.) und weiteren Firmen (z.B. Wacker Chemie AG).

Partikel (C)

Die Partikel (C) der erfindungsgemäßen Beschichtungszusammensetzung bestehen aus einer Legierung, die Zn und Mg umfasst. Neben Zn und Mg kann die Legierung weitere Metalle (z.B. Al) enthalten, wobei die Gesamtmenge an Metallen neben Zn und Mg in der Legierung jedoch maximal 10 Gew.-% (wie maximal 9 Gew.-%, maximal 8 Gew.-%, maximal 7 Gew.-%, maximal 6 Gew.-%, maximal 5 Gew.-%) betragen kann. In einer Ausführungsform besteht die Legierung der Partikel (C) im Wesentlichen aus Zn, Mg und einem weiterem Metall (z.B. Al), wobei die Menge des weiteren Metalls neben Zn und Mg in der Legierung maximal 10 Gew.-% (wie maximal 9 Gew.-%, maximal 8 Gew.-%, maximal 7 Gew.-%, maximal 6 Gew.-%, maximal 5 Gew.-%) beträgt. In einer Ausführungsform besteht die Legierung der Partikel (C) im Wesentlichen aus Zn und Mg, d.h. weitere Metalle (neben Zn und Mg) und/oder Nichtmetalle (z.B. Lösungsmittel) sind in der Legierung entweder nicht vorhanden oder lediglich in geringer Menge. Beispielsweise kann in dieser Ausführungsform (i) die Menge an weiterem Metall neben Zn und Mg (insbesondere die Menge aller weiteren Metalle neben Zn und Mg) weniger als 5 Gew.-% (z.B. weniger als 4 Gew.-%, weniger als 3 Gew.-%, weniger als 2 Gew.-%, weniger als 1 Gew.-%, weniger als 0,5 Gew.-%, weniger als 0,1 Gew.-%), hinsichtlich des Gesamtgewichts der Legierung, betragen und/oder (ii) die Menge an Nichtmetall (insbesondere die Menge aller in der Legierung vorhandenen Nichtmetalle) weniger als 10 Gew.-% (z.B. weniger als 9 Gew.-%, 8 Gew.-%, 7 Gew.-%, 6 Gew.-%, 5 Gew.-%, 4 Gew.-%, 3 Gew.-%, 2 Gew.-%, 1 Gew.-%, 0,9 Gew.-%, 0,8 Gew.-%, 0,7 Gew.-%, 0,6 Gew.-%, 0,5 Gew.-%, 0,4 Gew.-%, 0,3 Gew.-%, 0,2 Gew.-%, 0,1 Gew.-%), hinsichtlich des Gesamtgewichts der Legierung, betragen. In einer Ausführungsform besteht die Legierung der Partikel (C) aus Zn und Mg. D.h. die Menge an jeglicher weiterer Verbindung (wie z.B. die Menge eines weiteren Metalls (neben Zn und Mg) und/oder Lösungsmittels) in der Legierung (insbesondere die Menge aller Verbindungen neben Zn und Mg in der Legierung) kann maximal 2 Gew.-% (wie maximal 1 Gew.-%, maximal 0,5 Gew.-%, maximal 0,4 Gew.-%, maximal 0,3 Gew.-%, maximal 0,2 Gew.-%, maximal 0,1 Gew.-%, maximal 0,09 Gew.-%, maximal 0,08 Gew.-%, maximal 0,07 Gew.-%, maximal 0,06 Gew.-%, maximal 0,05 Gew.-%, maximal 0,04 Gew.-%, maximal 0,03 Gew.-%, maximal 0,02 Gew.-%, maximal 0,01 Gew.-%), hinsichtlich des Gesamtgewichts der Legierung, betragen.

In jeder der vor- oder nachstehenden Ausführungsformen kann das molare Verhältnis von Zn zu Mg in der Legierung der Partikel (C) 3:1 bis 1:3 betragen. Vorzugsweise beträgt das molare Verhältnis von Zn zu Mg in der Legierung der Partikel (C) 2,726:1 bis 1:1,448, mehr bevorzugt 1,952:1 bis 1:1,386, mehr bevorzugt 1,487:1 bis 1:1,266, mehr bevorzugt 1,318:1 bis 1:1,153, wie 1,177:1 bis 1:1,046 oder 1,058:1 bis 1:1,046. Alternativ kann der Anteil von Zn in der Legierung der Partikel (C) 65 bis 88 Gew.-%, vorzugsweise 66 bis 84 Gew.-%, mehr bevorzugt 68 bis 80 Gew.-%, mehr bevorzugt 70 bis 78 Gew.-%, wie 72 bis 76 Gew.-% oder 72 bis 74 Gew.-%, betragen. Der Anteil von Mg in der Legierung der Partikel (C) kann 12 bis 35 Gew.-%, vorzugsweise 16 bis 34 Gew.-%, mehr bevorzugt 20 bis 32 Gew.-%, mehr bevorzugt 22 bis 30 Gew.-%, wie 24 bis 28 Gew.-% oder 26 bis 28 Gew.-%, betragen.

In jeder der vor- oder nachstehenden Ausführungsformen können die Partikel (C) eine Größenverteilung derart aufweisen, dass der $D_{50}$-Wert im Bereich von 1 bis 50 $\mu$m (wie 2 bis 40 $\mu$m, 3 bis 30 $\mu$m, 4 bis25 $\mu$m, 5 bis 20 $\mu$m, 6 bis 18 $\mu$m, 7 bis 15 $\mu$m, vorzugsweise 7 bis 9 $\mu$m, wie etwa 8 $\mu$m) liegt, und/oder der $D_{10}$-Wert im Bereich von 1,0 bis 10 $\mu$m (wie 1,2 bis 8 $\mu$m, 1,4 bis 7 $\mu$m, 1,6 bis 6 $\mu$m, 1,7 bis 5 $\mu$m, 1,8 bis 4,5 $\mu$m, vorzugsweise 2,0 bis 4,0 $\mu$m) liegt und/oder der $D_{90}$-Wert im Bereich von 10 bis 50 $\mu$m (wie 11 bis 45 $\mu$m, 12 bis 40 $\mu$m, 13 bis 38 $\mu$m, 14 bis 36 $\mu$m, 16 bis 34 $\mu$m, vorzugsweise 18 bis 32 $\mu$m) liegt. Vorzugsweise beträgt der Anteil von Partikeln (C) mit einer Größe von > 100 $\mu$m weniger als 1 Gew.-% (wie weniger als 0,1 Gew.-%, weniger als 0,01 Gew.-%, weniger als 0,001 Gew.-%), bezogen auf das Gesamtgewicht aller Partikel; z.B. kann der Anteil von Partikeln (C) mit einer Größe von < 50 $\mu$m mehr als 90 Gew.-% (wie mehr als 95 Gew.-%, mehr als 96 Gew.-%, mehr als 97 Gew.-%, mehr als 98 Gew.-%, mehr als 99 Gew.-%, mehr als 99,5 Gew.-%), bezogen auf das Gesamtgewicht aller Partikel, betragen. Auch kann der Anteil von

Partikeln (C) mit einer Größe von < 45 μm mehr als 85 Gew.-% (wie mehr als 90 Gew.-%, mehr als 91 Gew.-%, mehr als 92 Gew.-%, mehr als 93 Gew.-%, mehr als 94 Gew.-%, mehr als 95 Gew.-%, mehr als 96 Gew.-%, mehr als 97 Gew.-%, mehr als 98 Gew.-%, mehr als 99 Gew.-%), bezogen auf das Gesamtgewicht aller Partikel, betragen. Die Größenparameter (wie Größenverteilung, Dicke und Durchmesser) der Partikel können in herkömmlicher Weise (z.B. mittels Rasterelektronenmikroskopie oder Laserbeugung (z.B. CILAS-Verfahren)) bestimmt werden.

In jeder der vor- oder nachstehenden Ausführungsformen können die Partikel (C) eine jegliche Form aufweisen, einschließlich sphärisch, ellipsoid, kubisch, stäbchenförmig, plättchenförmig (lamellar), prismoid, etc. Es konnte jedoch gezeigt werden (vgl. Beispiel 1), dass eine plättchenförmige (lamellare) Form der Partikel (C) gegenüber anderen Formen vorteilhaft ist, da sie eine Barrierewirkung (passiver Korrosionsschutz) erzielen, die bei anderen Formen nicht erreicht wird. Der Formfaktor von solchen Partikeln liegt vorzugsweise zwischen 1:2 und 1:100 (wie 1:5 bis 1:80, 1:8 bis 1:60, 1:10 bis 1:50, 1:12 bis 1:40, 1:14 bis 1:35, 1:16 bis 1:30, 1:18 bis 1:28, 1:20 bis 1:25).

Die Partikel (C) sind kommerziell erhältlich, beispielsweise von der Firma Eckart unter dem Handelsnamen STAPA (z.B. sind Partikel "STAPA 15 ZnMg26" Flocken einer Zn-Mg-Legierung, in der das molare Verhältnis von Zn zu Mg etwa 1:1 (Mg-Anteil: 26 ± 2 Gew.-%) ist) und weiteren Firmen (z.B. Sun Chemical).

<u>optionale Bestandteile</u>

Die erfindungsgemäße Beschichtungszusammensetzung kann zusätzlich weitere Bestandteile enthalten, so z.B. einen oder mehrere Katalysatoren, ein oder mehrere Rheologiemodifizierungsmittel (inkl. Dispergierhilfsmittel, Netzmittel, Verlaufsmittel), ein oder mehrere Lösungsmittel, ein oder mehrere Trocknungsmittel und/oder ein oder mehrere Füllstoffe.

*Katalysator*

Um die Hydrolyse- und/oder Kondensationsreaktionen zwischen dem Bindemittel (A) und dem Härter (B) zu beschleunigen, kann die erfindungsgemäße Beschichtungszusammensetzung einen oder mehrere Katalysatoren umfassen. Diese Katalysatoren sind dem Fachmann bekannt und können z.B. aus Lewis-Säuren und Zinn-Verbindungen ausgewählt werden. Beispielhafte Katalysatoren beinhalten Bortrifluorid und dessen Komplexe (z.B. mit Ethylamin) und organische Zinn-Verbindungen (z.B. diejenigen, die von der Firma TIB Chemicals AG kommerziell erhältlich sind). Bevorzugte Katalysatoren sind Bortrifluorid/Ethylamin-Komplex und organische Zinnverbindungen (wie Dioctylzinndicarboxylat, das z.B. von TIB Chemicals AG unter dem Handelsnamen TIB KAT 318 erhältlich ist).

*Rheologiemodifizierungsmittel*

Rheologiemodifizierungsmittel werden für verschiedene Zwecke eingesetzt, insbesondere um ein Absetzen von Partikeln in einer Suspension zu verhindern und/oder das Standvermögen einer flüssigen Zusammensetzung während und nach dem Auftrag auf ein Substrat zu verbessern (Thixotropierung). Rheologiemodifizierungsmittel sind dem Fachmann bekannt und beinhalten verschiedenste Substanzen, wie Cellulose-Derivate (z.B. Ethylcellulose, Carboxymethylcellulose, Nitrocellulose, Ethylnitrocellulose), Styrenallylalkohol, Polyalkylencarbonate, Schichtsilikate, pyrogene Kieselsäuren, hydrierte Rizinusöle und Polyacrylate. Beispielhafte Rheologiemodifizierungsmittel beinhalten Bentone (von Elementis Specialties, Inc.), Byk® P 104 (von BYK-Chemie GmbH), N20 (von Wacker Chemie AG), Luvotix® R-RF (von Lehmann & Voss & Co.) und Solthix® 250 (von Lubrizol). Vorzugsweise sind ein oder mehrere (z.B. 2, 3, 4, 5 oder 6, mehr bevorzugt 2, 3 oder 4) verschiedene Rheologiemodifizierungsmittel in der erfindungsgemäßen Beschichtungszusammensetzung vorhanden.

*Lösungsmittel*

Die erfindungsgemäße Beschichtungszusammensetzung kann ein oder mehrere Lösungsmittel enthalten. Zumindest teilweise können Lösungsmittel durch Bestandteile der Beschichtungszusammensetzung (d.h. die Bestandteile (A), (B), (C) und/oder die optionalen Bestandteile) in die Beschichtungszusammensetzung eingebracht werden (z.B. kann eine Suspension von Partikeln in einem Lösungsmittel verwendet werden, wodurch dieses Lösungsmittel in die erfindungsgemäße Beschichtungszusammensetzung eingebracht wird). Beispielhafte Lösungsmittel, die in der erfindungsgemäßen Beschichtungszusammensetzung allein oder in einem Gemisch verwendet werden können, beinhalten Ester-Lösungsmittel (wie Butylacetat), Keton-Lösungsmittel (wie Cyclohexanon oder Methylisobutylketon), aromatische Lösungsmittel (wie Xylol), Alkohol-Lösungsmittel (wie iso-Butanol oder Methoxypropanol) und Glykolether-Lösungsmittel, insbesondere Butylacetat, Cyclohexanon, Methylisobutylketon, Xylol, iso-Butanol und Methoxypropanol. Ein bevorzugtes Lösungsmittel ist ein aliphatisches (d.h. nicht-aromatisches) Lösungsmittel (z.B. Butylacetat), entweder allein oder in Kombination mit einem oder mehreren der vorstehenden (insbesondere aliphatischen) Lösungsmitteln. Z.B.

kann, falls zum Einbringen der Partikel (C) eine Suspension von Partikeln in einem Lösungsmittel (z.B. Testbenzin ("mineral spirit")) verwendet wird, die erfindungsgemäße Beschichtungszusammensetzung als Lösungsmittel ein aliphatische Lösungsmittel (z.B. Butylacetat) und Testbenzin, gegebenenfalls in Kombination mit einem oder mehreren anderen, insbesondere aliphatischen, Lösungsmitteln (z.B. Cyclohexanon, Methylisobutylketon, iso-Butanol und Methoxypropanol) enthalten.

*Trocknungsmittel*

Trocknungsmittel sind fähig, Feuchtigkeit und Restwasser zu binden, um somit Probleme zu vermeiden, die bei Anwesenheit von Wasser (selbst in geringer Menge) auftreten würden. Solche Probleme umfassen z.B. eine Reaktion von Wasser mit metallischen Partikeln (wie Partikeln aus einer Legierung, die Zn und Mg umfasst), was zu der Freisetzung von Wasserstoffgas und der Zerstörung der Partikel führen würde, sowie eine Hydrolyse von Verbindungen beispielsweise bei deren Lagerung. Beispielhafte Trocknungsmittel beinhalten natürliche und synthetische Zeolithe (auch als Molekularsiebe bezeichnet). Ein bevorzugtes Trocknungsmittel ist ein Zeolith, dessen Porenweite für die Adsorption von Wasser geeignet ist, wie z.B. Zeolithe mit einer Porenweite von 3 bis 4 Å (z.B. Sylosiv®A3; von Grace Davison).

*Füllstoffe*

Füllstoffe können dazu dienen, andere Bestandteile der Beschichtungszusammensetzung teilweise zu ersetzen (um somit die Formulierungskosten zu senken) und/oder die Eigenschaften der Beschichtung (z.B. Glanzgrad, Oberflächenstruktur, mechanische Eigenschaften) zu verbessern. Beispiele für häufig eingesetzte Füllstoffe sind Talk, Bariumsulfat, Kreide, Kaolin, Aluminiumsilikat und Calciumcarbonat. Talk ist ein bevorzugter Füllstoff, da dieser die Haftung und/oder Barrierewirkung der Beschichtung, die aus der Beschichtungszusammensetzung erzeugt wird, verbessern kann. Füllstoffe können in der erfindungsgemäßen Beschichtungszusammensetzung in üblichen Mengen enthalten sein, wobei sich die Mengen je nach gewünschten Zweck unterscheiden können.

*<u>Beschichtungszusammensetzung</u>*

In einem ersten Aspekt wird erfindungsgemäß eine Beschichtungszusammensetzung bereitgestellt, die folgende Bestandteile umfasst: (A) ein Bindemittel, das auf einem oder mehreren Organosilicium-Verbindungen $S_1$ basiert (insbesondere umfasst das Bindemittel (A) eine der vor- oder nachstehend explizit beschriebenen Organosilicium-Verbindungen $S_1$), (B) einen Härter, der auf einem oder mehreren Organosilicium-Verbindungen $S_2$ basiert (insbesondere umfasst der Härter (B) eine der vor- oder nachstehend explizit beschriebenen Organosilicium-Verbindungen $S_2$, wie diejenigen der Formel (I), (II), (Ia), (IIa), (Ib) oder (Ic)), und (C) Partikel einer Legierung, die Zn und Mg umfasst (insbesondere bestehen die Partikel (C) aus einer der Legierungen, die vor- oder nachstehend explizit beschrieben sind).

In einer Ausführungsform umfasst die erfindungsgemäße Beschichtungszusammensetzung neben den vorstehenden Bestandteilen (A), (B) und (C) auch einen oder mehrere (oder alle) der folgenden Bestandteile:

- ein oder mehrere Lösungsmittel;
- einen Katalysator;
- ein oder mehrere Rheologiemodifizierungsmittel; und
- ein Trocknungsmittel.

Zusätzlich kann die erfindungsgemäße Beschichtungszusammensetzung auch ein oder mehrere Füllstoffe enthalten.

Die erfindungsgemäße Beschichtungszusammensetzung kann als 1-Komponentenzusammensetzung, 2-Komponentenzusammensetzung oder Mehrkomponentenzusammensetzung vorliegen. Liegt die erfindungsgemäße Beschichtungszusammensetzung als 1-Komponentenzusammensetzung vor, ist es bevorzugt, dass die reaktiven funktionellen Gruppen des Bindemittels und/oder des Härters derart ausgestaltet sind, dass sie bei Lagerung der Beschichtungszusammensetzung nicht miteinander reagieren. Beispielsweise können die reaktiven funktionellen Gruppen des Bindemittels und/oder des Härters in der 1-Komponentenzusammensetzung mit spezifischen Gruppen blockiert sein und erst bei Änderung der Bedingungen (z.B. durch Temperaturerhöhung und/oder Reaktion mit Luftfeuchtigkeit) die eigentliche(n) funktionelle(n) Gruppe(n) freisetzen. Alternativ sind die spezifischen funktionellen Gruppen des Bindemittels und/oder des Härters in der 1-Komponentenzusammensetzung unter Standardbedingungen (z.B. Raumtemperatur) nicht ausreichend reaktiv, damit eine Vernetzung zwischen Bindemittel und Härter stattfindet; in diesem Fall muss die 1-Komponentenzusammensetzung erst erwärmt werden (z.B. auf mindestens 50°C, aber beispielweise höchstens 150°C, wie 60 bis 120°C oder 70° bis 100°C), um eine Reaktion zwischen Bindemittel und dem Härter auszulösen. Vorzugsweise liegt die erfindungsgemäße Beschichtungszusammensetzung als 2- oder Mehrkomponentenzusammensetzung vor, wobei z.B. eine Komponente das Bindemittel (A) und die Partikel (C), gegebenenfalls in Kombination mit

einem oder mehreren Rheologiemodifizierungsmitteln und/oder einem oder mehreren Lösungsmitteln, in einem Behälter und eine andere Komponente den Härter (B), gegebenenfalls in Kombination mit einem Katalysator und/oder einem oder mehreren Lösungsmitteln, in einem anderen Behälter umfasst. Weiterhin kann in einer Komponente oder in allen Komponenten ein Trocknungsmittel vorhanden sein. Eine 2- oder Mehrkomponentenzusammensetzung, in der das Bindemittel (A) in einer anderen Komponente als der Härter (B) vorhanden ist, weist gegenüber der 1-Komponentenzusammensetzung den Vorteil auf, dass die reaktiven funktionellen Gruppen des Bindemittels und/oder des Härters nicht besonders ausgestaltet sein müssen, bevor sie miteinander reagieren, da die reaktiven funktionellen Gruppen des Bindemittels von denen des Härters in der 2- oder Mehrkomponentenzusammensetzung räumlich getrennt sind.

In jeder der vor- oder nachstehenden Ausführungsformen der erfindungsgemäßen Beschichtungszusammensetzung ist es bevorzugt, dass die erfindungsgemäße Beschichtungszusammensetzung im Wesentlichen frei von (i) Wasser und (ii) chromhaltigen Verbindungen ist. In einer Ausführungsform ist die erfindungsgemäße Beschichtungszusammensetzung im Wesentlichen frei von (i) Wasser, (ii) chromhaltigen Verbindungen und (iii) Bisphenol A-Verbindungen. In einer weiteren Ausführungsform ist die erfindungsgemäße Beschichtungszusammensetzung im Wesentlichen frei von (i) Wasser, (ii) chromhaltigen Verbindungen und (iii) Isocyanaten. In einer Ausführungsform ist die erfindungsgemäße Beschichtungszusammensetzung im Wesentlichen frei von (i) Wasser, (ii) chromhaltigen Verbindungen, (iii) Bisphenol A-Verbindungen und (iv) Isocyanaten. Falls die erfindungsgemäße Beschichtungszusammensetzung als 2- oder Mehrkomponentenzusammensetzung vorliegt, können eine, mehrere oder alle Komponenten der Beschichtungszusammensetzung im Wesentlichen frei von (i) Wasser, (ii) chromhaltigen Verbindungen, (iii) Bisphenol A-Verbindungen und/oder (iv) Isocyanaten sein. Es ist z.B. bevorzugt, dass alle Komponenten der Beschichtungszusammensetzung im Wesentlichen frei von chromhaltigen Verbindungen und Isocyanaten sind. Auch ist es bevorzugt, dass zumindest die Komponente, die die Partikel (C) enthält, im Wesentlichen frei von Wasser ist (was z.B. durch das Vorhandensein eines Trocknungsmittels in dieser Komponente erreicht werden kann). In einer Ausführungsform liegt die erfindungsgemäße Beschichtungszusammensetzung als 2- oder Mehrkomponentenzusammensetzung vor, wobei alle Komponenten der Beschichtungszusammensetzung im Wesentlichen frei von Wasser, chromhaltigen Verbindungen und Isocyanaten sind.

In jeder der vor- oder nachstehenden Ausführungsformen der erfindungsgemäßen Beschichtungszusammensetzung kann die Menge an Bindemittel (A) in der erfindungsgemäßen Beschichtungszusammensetzung mindestens 10 Gew.-%, beispielsweise 15 bis 35 Gew.-%, mehr bevorzugt 20 bis 30 Gew.-%, mehr bevorzugt 22 bis 28 Gew.-%, mehr bevorzugt 24 bis 26 Gew.-%, bezogen auf das Gesamtgewicht der Beschichtungszusammensetzung, betragen.

In jeder der vor- oder nachstehenden Ausführungsformen der erfindungsgemäßen Beschichtungszusammensetzung kann das Gewichtsverhältnis des Bindemittels (A) zu dem Härter (B) in der erfindungsgemäßen Beschichtungszusammensetzung mindestens 1:1, beispielsweise 2:1 bis 50:1 oder 2:1 bis 20:1, bevorzugt 3:1 bis 15:1, mehr bevorzugt 4:1 bis 10:1, mehr bevorzugt 5:1 bis 8:1, mehr bevorzugt 6:1 bis 7:1, betragen.

In jeder der vor- oder nachstehenden Ausführungsformen der erfindungsgemäßen Beschichtungszusammensetzung kann das Gewichtsverhältnis der Partikel (C) zu dem Bindemittel (A) in der erfindungsgemäßen Beschichtungszusammensetzung mindestens 1:1, beispielsweise 1,5:1 bis 3:1, bevorzugt 2:1 bis 2,5:1, mehr bevorzugt 2,2:1 bis 2,4:1, mehr bevorzugt 2,3:1, betragen. Allgemein ist es bevorzugt, dass die Menge an Partikeln (C) in der erfindungsgemäßen Beschichtungszusammensetzung mindestens 35 Gew.-%, vorzugsweise 38 bis 70 Gew.-%, mehr bevorzugt 41 bis 65 Gew.-%, mehr bevorzugt 44 bis 64 Gew.-%, mehr bevorzugt 47 bis 63 Gew.-%, mehr bevorzugt 50 bis 62 Gew.-%, mehr bevorzugt 53 bis 61 Gew.-%, mehr bevorzugt 55 bis 60 Gew.-%, mehr bevorzugt 57 bis 59 Gew.-%, bezogen auf das Gesamtgewicht der Beschichtungszusammensetzung, beträgt.

Für jede der vor- oder nachstehenden Ausführungsformen der erfindungsgemäßen Beschichtungszusammensetzung kann die Pigmentvolumenkonzentration (PVK) weniger als 50% (vorzugsweise weniger als 48%, mehr bevorzugt weniger als 46%, mehr bevorzugt weniger als 44%, mehr bevorzugt weniger als 42%, mehr bevorzugt weniger als 40%, beispielsweise 20 bis 48%, mehr bevorzugt 24 bis 46%, mehr bevorzugt 28 bis 44%, mehr bevorzugt 30 bis 42%, mehr bevorzugt 32 bis 40%) betragen.

In jeder der vor- oder nachstehenden Ausführungsformen der erfindungsgemäßen Beschichtungszusammensetzung kann die Menge an Katalysator in der erfindungsgemäßen Beschichtungszusammensetzung 0 bis 5,0 Gewichtsteile, vorzugsweise 1,0 bis 4,0 Gewichtsteile, mehr bevorzugt 2,0 bis 3,5 Gewichtsteile, mehr bevorzugt 2,5 bis 3,0 Gewichtsteile, mehr bevorzugt 2,6 bis 2,8 Gewichtsteile, bezogen auf 100 Gewichteile an Bindemittel (A), betragen. Allgemein ist es wünschenswert, dass, bezogen auf das Gesamtgewicht der Beschichtungszusammensetzung, der Katalysator in der erfindungsgemäßen Beschichtungszusammensetzung in einer Menge von 0 bis 1,5 Gew.-%, vorzugsweise 0,4 bis 1,0 Gew.-%, mehr bevorzugt 0,6 bis 0,8 Gew.-% vorhanden ist.

In jeder der vor- oder nachstehenden Ausführungsformen der erfindungsgemäßen Beschichtungszusammensetzung kann die Gesamtmenge an Rheologiemodifizierungsmitteln in der erfindungsgemäßen Beschichtungszusammensetzung 0 bis 5,0 Gewichtsteile, vorzugsweise 1,0 bis 4,0 Gewichtsteile, mehr bevorzugt 2,0 bis 3,5 Gewichtsteile, mehr bevorzugt 2,5 bis 3,4 Gewichtsteile, mehr bevorzugt 2,8 bis 3,2 Gewichtsteile, mehr bevorzugt 2,9 bis 3,1 Gewichtsteile, bezogen auf 100 Gewichteile an Partikeln (C), betragen. Allgemein ist es wünschenswert, dass, bezogen auf das Gesamtgewicht der Beschichtungszusammensetzung, die einen oder mehreren Rheologiemodifizierungsmittel

in der erfindungsgemäßen Beschichtungszusammensetzung in einer Gesamtmenge von 0 bis 3,5 Gew.-%, vorzugsweise 0,2 bis 3,0 Gew.-%, mehr bevorzugt 0,4 bis 2,5 Gew.-%, mehr bevorzugt 0,5 bis 2,0 Gew.-%, mehr bevorzugt 0,6 bis 1,0 Gew.-%, vorhanden sind.

In jeder der vor- oder nachstehenden Ausführungsformen der erfindungsgemäßen Beschichtungszusammensetzung kann die Menge an Lösungsmittel, die durch Bestandteile der Beschichtungszusammensetzung (d.h. die Bestandteile (A), (B), (C) und/oder die optionalen Bestandteile) in die Beschichtungszusammensetzung eingebracht werden, weniger als 10 Gew.-%, mehr bevorzugt weniger als 8 Gew.-%, mehr bevorzugt weniger als 6 Gew.-%, bezogen auf das Gesamtgewicht der Beschichtungszusammensetzung, betragen. In jeder der vor- oder nachstehenden Ausführungsformen der erfindungsgemäßen Beschichtungszusammensetzung kann die Menge an sonstigem Lösungsmittel in der erfindungsgemäßen Beschichtungszusammensetzung 0 bis 10 Gew.-%, beispielweise 2 bis 8 Gew.-%, vorzugsweise 4 bis 6 Gew.-%, bezogen auf das Gesamtgewicht der Beschichtungszusammensetzung, betragen. In jeder der vor- oder nachstehenden Ausführungsformen der erfindungsgemäßen Beschichtungszusammensetzung kann die Gesamtmenge an Lösungsmitteln in der erfindungsgemäßen Beschichtungszusammensetzung beispielsweise 0 bis 16 Gew.-%, vorzugsweise 2 bis 15 Gew.-%, mehr bevorzugt 4 bis 14 Gew.-%, mehr bevorzugt 6 bis 13 Gew.-%, mehr bevorzugt 8 bis 12 Gew.-%, mehr bevorzugt 9 bis 11 Gew.-%, bezogen auf das Gesamtgewicht der Beschichtungszusammensetzung, betragen.

In jeder der vor- oder nachstehenden Ausführungsformen der erfindungsgemäßen Beschichtungszusammensetzung ist es insbesondere bevorzugt, dass die Konzentration an flüchtigen organischen Verbindungen (VOC) in der Beschichtungszusammensetzung (d.h. Menge an VOC in g pro Volumen an Beschichtungszusammensetzung in l) weniger als 500 g/l (vorzugsweise weniger als 450 g/l, mehr bevorzugt weniger als 400 g/l, mehr bevorzugt weniger als 350 g/l, mehr bevorzugt weniger als 300 g/l, mehr bevorzugt weniger als 250 g/l, mehr bevorzugt weniger als 200 g/l) beträgt.

In jeder der vor- oder nachstehenden Ausführungsformen der erfindungsgemäßen Beschichtungszusammensetzung kann die Menge an Trocknungsmittel in der erfindungsgemäßen Beschichtungszusammensetzung 0 bis 10,0 Gewichtsteile, vorzugsweise 2,0 bis 8,0 Gewichtsteile, mehr bevorzugt 4,0 bis 6,0 Gewichtsteile, bezogen auf 100 Gewichteile an Lösungsmittel, betragen. Allgemein ist es wünschenswert, dass, bezogen auf das Gesamtgewicht der Beschichtungszusammensetzung, das Trocknungsmittel in der erfindungsgemäßen Beschichtungszusammensetzung in einer Menge von 0 bis 1,5 Gew.-%, vorzugsweise 0,3 bis 1,0 Gew.-%, mehr bevorzugt 0,4 bis 0,8 Gew.-%, mehr bevorzugt 0,5 bis 0,6 Gew.-%, vorhanden ist.

In jeder der vor- oder nachstehenden Ausführungsformen der erfindungsgemäßen Beschichtungszusammensetzung kann die Gesamtmenge an Füllstoffen in der erfindungsgemäßen Beschichtungszusammensetzung 0 Gewichtsteile betragen (d.h. die erfindungsgemäße Beschichtungszusammensetzung enthält keine Füllstoffe) oder sie kann bis 15,0 Gewichtsteile, vorzugsweise 0,5 bis 4,0 Gew.-%, mehr bevorzugt 1,0 bis 3,0 Gew.-%, mehr bevorzugt 1,5 bis 2,0 Gew.-%, bezogen auf das Gesamtgewicht der Beschichtungszusammensetzung, betragen.

Beispielsweise können die einzelnen Bestandteile in den in der nachstehenden Tabelle A angegebenen allgemeinen, bevorzugten und mehr bevorzugten Mengen bzw. Verhältnissen in der erfindungsgemäßen Beschichtungszusammensetzung vorhanden sein (wobei die folgenden Abkürzungen verwendet werden: BM: Bindemittel (A), das auf einem oder mehreren Organosilicium-Verbindungen $S_1$ basiert; HA: Härter (B), der auf einem oder mehreren Organosilicium-Verbindungen $S_2$ basiert; PA: Partikel (C); PVK: Pigmentvolumenkonzentration; GG BZ: Gesamtgewicht der erfindungsgemäßen Beschichtungszusammensetzung; GT: Gewichtsteile; Rheo: Rheologiemodifizierungsmittel; VOL: Volumen an Beschichtungszusammensetzung in l):

Tabelle A

| Bestandteil | Menge | | | Bezug |
|---|---|---|---|---|
| | allgemein | bevorzugt | mehr bevorzugt | |
| BM [Gew.-%] | ≥ 10 | 15 bis 35 | 24 bis 26 | GG BZ |
| Verhältnis BM zu HA | 1 oder mehr: 1 | 2:1 bis 50:1 | 6:1 bis 7:1 | - |
| PA | | | | |
| [Gew.-%] | ≥ 35 | 38 bis 70 | 57 bis 59 | GG BZ |
| Verhältnis PA zu BM | 1 oder mehr: 1 | 1,5:1 bis 3:1 | 2,2:1 bis 2,4:1 | - |
| PVK [%] | < 50 | < 48 | 32 bis 40 | - |
| Katalysator (Kat) | | | | |
| [GT] | 0 bis 5,0 | 1,0 bis 4,0 | 2,6 bis 2,8 | 100 GT BM |

(fortgesetzt)

| Bestandteil | Menge | | | Bezug |
|---|---|---|---|---|
| | allgemein | bevorzugt | mehr bevorzugt | |
| [Gew.%] | 0 bis 3,5 | 0,5 bis 3,0 | 1,5 bis 2,0 | GG BZ |
| Rheo. | | | | |
| [GT] | 0 bis 5,0 | 1,0 bis 4,0 | 2,9 bis 3,1 | 100 GT Kat |
| [Gew.-%] | 0 bis 3,5 | 0,2 bis 3,0 | 0,6 bis 1,0 | GG BZ |
| Lösungsmittel (LM) | | | | |
| eingebracht [Gew.-%] | ≤ 10 | ≤ 8 | ≤ 6 | GG BZ |
| sonstige [Gew.-%] | 0 bis 10 | 2 bis 8 | 4 bis 6 | GG BZ |
| gesamt [Gew.-%] | 0 bis 16 | 2 bis 15 | 9 bis 11 | GG BZ |
| VOC [g/l] | < 500 | < 450 | < 300 | VOL |
| Trocknungsmittel | | | | |
| [GT] | 0 bis 10,0 | 2,0 bis 8,0 | 4,0 bis 6,0 | 100 GT LM |
| [Gew.-%] | 0 bis 1,5 | 0,3 bis 1,0 | 0,4 bis 0,8 | GG BZ |
| Füllstoff [Gew.-%] | 0 bis 15,0 | 0,5 bis 4,0 | 1,5 bis 2,0 | GG BZ |

Die vorstehend angegebenen Mengen bzw. Verhältnisse beziehen sich vorzugsweise auf den Fall, dass die erfindungsgemäße Beschichtungszusammensetzung als 1-Komponentenzusammensetzung vorliegt, können aber auch als Grundlage für 2- oder Mehrkomponentenzusammensetzungen herangezogen werden. Falls die erfindungsgemäße Beschichtungszusammensetzung als 2-Komponentenzusammensetzung vorliegt, können die zwei Komponenten die Bestandteile wie folgt enthalten. Beispielsweise kann Komponente (1) das Bindemittel (A) und die Partikel (C) umfassen, wobei die Menge an Bindemittel (A) in der Komponente (1) mindestens 10 Gew.-%, beispielsweise 15 bis 40 Gew.-%, mehr bevorzugt 20 bis 35 Gew.-%, mehr bevorzugt 24 bis 30 Gew.-%, bezogen auf das Gesamtgewicht der Komponente (1), betragen kann. Die Partikel (C) können in der Komponente (1) in einer Menge von mindestens 35 Gew.-%, vorzugsweise 40 bis 75 Gew.-%, mehr bevorzugt 45 bis 70 Gew.-%, mehr bevorzugt 50 bis 65 Gew.-%, mehr bevorzugt 55 bis 64 Gew.-%, mehr bevorzugt 57 bis 63 Gew.-%, mehr bevorzugt 58 bis 62 Gew.-%, mehr bevorzugt 59 bis 61 Gew.-%, bezogen auf das Gesamtgewicht der Komponente (1), vorhanden sein. Das Gewichtsverhältnis der Partikel (C) zu dem Bindemittel (A) in der Komponente (1) kann mindestens 1:1, beispielsweise 1,5:1 bis 3:1, bevorzugt 2:1 bis 2,5:1, mehr bevorzugt 2,2:1 bis 2,4:1, mehr bevorzugt 2,3:1, betragen. Es ist bevorzugt, dass die Pigmentvolumenkonzentration (PVK) in der Komponente (1) weniger als 50% (vorzugsweise weniger als 48%, mehr bevorzugt weniger als 46%, mehr bevorzugt weniger als 44%, mehr bevorzugt weniger als 42%, mehr bevorzugt weniger als 40%, beispielsweise 20 bis 48%, mehr bevorzugt 24 bis 46%, mehr bevorzugt 28 bis 44%, mehr bevorzugt 30 bis 42%, mehr bevorzugt 32 bis 40%) beträgt. Falls die Komponente (1) ein oder mehrere Rheologiemodifizierungsmittel enthält, können diese in den vorstehend angegebenen Mengen (z.B. bis zu 5,0 Gewichtsteile, vorzugsweise 1,0 bis 4,0 Gewichtsteile, mehr bevorzugt 2,0 bis 3,5 Gewichtsteile, mehr bevorzugt 2,5 bis 3,4 Gewichtsteile, mehr bevorzugt 2,8 bis 3,2 Gewichtsteile, mehr bevorzugt 2,9 bis 3,1 Gewichtsteile, bezogen auf 100 Gewichteile an Partikeln (C), und/oder in einer Gesamtmenge von bis zu 3,5 Gew.-%, vorzugsweise 0,4 bis 3,0 Gew.-%, mehr bevorzugt 0,5 bis 2,0 Gew.-%, mehr bevorzugt 0,6 bis 1,0 Gew.-%, bezogen auf das Gesamtgewicht der Komponente (1)), vorhanden sein. Falls die Komponente (1) ein oder mehrere Lösungsmittel enthält, können diese in den vorstehend angegebenen Mengen (z.B. bis zu 10 Gew.-% (eingebrachte Lösungsmittel) und/oder bis zu 16 Gew.-% (alle Lösungsmittel), jeweils bezogen auf das Gesamtgewicht der Komponente (1)) vorhanden sein. Es ist insbesondere bevorzugt, dass die Konzentration an flüchtigen organischen Verbindungen (VOC) in der Komponente (1) (d.h. Menge an VOC in g pro Volumen an Komponente (1) in l) weniger als 500 g/l (vorzugsweise weniger als 450 g/l, mehr bevorzugt weniger als 400 g/l, mehr bevorzugt weniger als 350 g/l, mehr bevorzugt weniger als 300 g/l, mehr bevorzugt weniger als 250 g/l, mehr bevorzugt weniger als 200 g/l) beträgt. Falls die Komponente (1) einen oder mehrere Füllstoffe enthält, können diese in den vorstehend angegebenen Mengen (z.B. bis zu 15 Gew.-% (z.B. 0,5 bis 4,0 Gew.-%, mehr bevorzugt 1,0 bis 3,0 Gew.-%, mehr bevorzugt 1,5 bis 2,0 Gew.-%), bezogen auf das Gesamtgewicht der Komponente (1)) vorhanden sein. Die Komponente (2) kann den Härter (B), gegebenenfalls in Kombination mit einem Katalysator enthalten, wobei die Menge an Härter in der Komponente (2) beispielsweise mindestens 70 Gew.-% (wie 75 bis 98 Gew.-%, vorzugsweise 80 bis 90 Gew.-%, mehr bevorzugt 83 bis

87 Gew.-%), bezogen auf das Gesamtgewicht der Komponente (2), betragen kann. Falls die Komponente (2) einen Katalysator enthält, so kann dieser in einer Menge von bis zu 25 Gew.-% (z.B. 1 bis 24 Gew.-%, vorzugsweise 10 bis 20 Gew.-%, mehr bevorzugt 13 bis 18 Gew.-%), bezogen auf das Gesamtgewicht der Komponente (2), vorhanden sein. Falls die Komponente (2) ein oder mehrere Lösungsmittel enthält, können diese in den vorstehend angegebenen Mengen (z.B. bis zu 10 Gew.-% (eingebrachte Lösungsmittel) und/oder bis zu 16 Gew.-% (alle Lösungsmittel), jeweils bezogen auf das Gesamtgewicht der Komponente (2)) vorhanden sein. Es ist insbesondere bevorzugt, dass die Konzentration an flüchtigen organischen Verbindungen (VOC) in der Komponente (2) (d.h. Menge an VOC in g pro Volumen an Komponente (2) in l) weniger als 500 g/l (vorzugsweise weniger als 450 g/l, mehr bevorzugt weniger als 400 g/l, mehr bevorzugt weniger als 350 g/l, mehr bevorzugt weniger als 300 g/l, mehr bevorzugt weniger als 250 g/l, mehr bevorzugt weniger als 200 g/l) beträgt. In einer der Komponenten (1) und (2) oder in beiden kann ein Trocknungsmittel in den vorstehend angegebenen Mengen (z.B. bis 10,0 Gewichtsteile, vorzugsweise 2,0 bis 8,0 Gewichtsteile, bezogen auf 100 Gewichteile an Lösungsmittel und/oder bis zu 1,5 Gew.-%, vorzugsweise 0,3 bis 1,0 Gew.-%, bezogen auf das Gesamtgewicht der Komponente (1) oder (2)) vorhanden sein.

Beispielsweise können die einzelnen Bestandteile in den in der nachstehenden Tabelle B angegebenen allgemeinen, bevorzugten und mehr bevorzugten Mengen in der Komponente (1) bzw. (2) der erfindungsgemäßen Beschichtungszusammensetzung vorhanden sein (wobei folgende zusätzliche Abkürzungen verwendet werden: Kom(1): Gesamtgewicht der Komponente (1); Kom(2): Gesamtgewicht der Komponente (2)):

Tabelle B

| | Menge | | | Bezug |
|---|---|---|---|---|
| | allgemein | bevorzugt | mehr bevorzugt | |
| *Komponente (1)* | | | | |
| BM [Gew.-%] | ≥ 10 | 15 bis 40 | 24 bis 30 | Kom(1 ) |
| PA | | | | |
| [Gew.-%] | ≥ 35 | 40 bis 75 | 59 bis 61 | GG BZ |
| Verhältnis PA zu BM | 1 oder mehr: 1 | 1,5:1 bis 3:1 | 2,2:1 bis 2,4:1 | - |
| PVK [%] | < 50 | < 48 | 32 bis 40 | - |
| Lösungsmittel | | | | |
| eingebrachte [Gew.-%] | ≤ 10 | ≤ 8 | ≤ 6 | Kom(1 ) |
| sonstige [Gew.-%] | 0 bis 10 | 2 bis 8 | 4 bis 6 | Kom(1 ) |
| gesamt [Gew.-%] | 0 bis 16 | 2 bis 15 | 9 bis 11 | Kom(1 ) |
| Rheo | | | | |
| [GT] | 0 bis 5,0 | 1,0 bis 4,0 | 2,9 bis 3,1 | 100 GT PA |
| [Gew.-%] | 0 bis 3,5 | 0,4 bis 3,0 | 0,6 bis 1,0 | Kom(1 ) |
| VOC [g/l] | ≤ 500 | ≤ 450 | ≤ 300 | Kom(1 ) |
| Trocknungsmittel | | | | |
| [GT] | 0 bis 10,0 | 2,0 bis 8,0 | 4,0 bis 6,0 | 100 GT LM |
| [Gew.-%] | 0 bis 2,0 | 0,2 bis 1,6 | 0,6 bis 0,8 | Kom(1 ) |
| | | | | |
| *Komponente (2)* | | | | |
| HA [Gew.-%] | ≥ 70 | 75 bis 98 | 83 bis 87 | Kom(2) |
| Kat [Gew.-%] | 0 bis 25 | 1 bis 24 | 13 bis 18 | Kom(2) |
| Lösungsmittel | | | | |
| eingebrachte [Gew.-%] | ≤ 10 | ≤ 8 | ≤ 6 | Kom(2) |
| sonstige [Gew.-%] | 0 bis 10 | 2 bis 8 | 4 bis 6 | Kom(2) |
| gesamt [Gew.-%] | 0 bis 16 | 2 bis 15 | 9 bis 11 | Kom(2) |

(fortgesetzt)

| *Komponente (2)* | | | | |
|---|---|---|---|---|
| VOC [g/l] | < 500 | < 450 | < 300 | Kom(2) |

Zur Herstellung der erfindungsgemäßen Beschichtungszusammensetzung werden die Bestandteile (A), (B) und (C) sowie gegebenenfalls ein oder mehrere optionale Bestandteile mittels Verfahren, die dem Fachmann bekannt sind, gemischt (z.B. mit Hilfe eines Dissolvers oder einer ähnlichen Rührvorrichtung), so dass eine Dispersion (insbesondere eine homogene Dispersion) erreicht wird. Zur Einstellung der Thixotropie und/oder Viskosität der erfindungsgemäßen Beschichtungszusammensetzung können ein oder mehrere Rheologiemodifizierungsmittel und/oder ein oder mehrere Lösungsmittel zugesetzt werden. Zur Erzeugung einer Dispersion (insbesondere einer homogenen Dispersion) kann es hilfreich sein, den Mischvorgang bei einer Temperatur, die über der Raumtemperatur (ca. 20°C) liegt, z.B. bei 25 bis 80°C (vorzugsweise 30 bis 75°C, mehr bevorzugt 35 bis 70°C, mehr bevorzugt 40 bis 65°C, mehr bevorzugt 45 bis 60°C, mehr bevorzugt 50 bis 58°C), durchzuführen. Falls die erfindungsgemäße Beschichtungszusammensetzung als 2- oder Mehrkomponentenzusammensetzung vorliegt, können die einzelnen Komponenten in einer Weise, die ähnlich zu der vorstehend beschriebenen ist, hergestellt werden. So kann beispielsweise eine 2-Komponentenzusammensetzung dadurch hergestellt werden, dass die Bestandteile der Komponente (1) (z.B. das Bindemittel (A) und die Partikel (C), gegebenenfalls zusammen mit einem oder mehreren Rheologiemodifizierungsmitteln und/oder einem oder mehreren Lösungsmitteln und/oder einem Trocknungsmittel und/oder einem oder mehreren Füllstoffen) wie vorstehend beschrieben gemischt werden und die Bestandteile der Komponente (2) (z.B. der Härter (B), gegebenenfalls zusammen mit einem Katalysator und/oder einem oder mehreren Lösungsmitteln) getrennt von der Komponente (1) wie vorstehend beschrieben gemischt werden. Vor Auftragung z.B. auf eine metallische Oberfläche werden dann die Komponenten derart gemischt, dass sich eine erfindungsgemäße Beschichtungszusammensetzung in der Form einer 1-Komponentenzusammensetzung ergibt. Das Verhältnis von Komponente (1) (die z.B. das Bindemittel (A) und die Partikel (C), gegebenenfalls zusammen mit einem oder mehreren Rheologiemodifizierungsmitteln und/oder einem oder mehreren Lösungsmitteln und/oder einem Trocknungsmittel und/oder einem oder mehreren Füllstoffen enthält) zu Komponente (2) (die z.B. den Härter (B), gegebenenfalls zusammen mit einem Katalysator und/oder einem oder mehreren Lösungsmitteln enthält) wird vorzugsweise derart gewählt, dass das Gewichtsverhältnis von Bindemittel (A) zu Härter (B) nach dem Mischen der Komponenten (1) und (2) mindestens 1:1, beispielsweise 2:1 bis 50:1 oder 2:1 bis 20:1, bevorzugt 3:1 bis 15:1, mehr bevorzugt 4:1 bis 10:1, mehr bevorzugt 5:1 bis 8:1, mehr bevorzugt 6:1 bis 7:1, beträgt.

Die Topfzeit der erfindungsgemäßen Beschichtungszusammensetzung beträgt vorzugsweise 2 bis 6 h, mehr bevorzugt 2,5 bis 5, mehr bevorzugt 3 bis 4 h.

Metalle weisen die Eigenschaft auf, dass deren Kristallgitter (Metallgitter) durch die Metallbindung zusammengehalten wird, d.h. durch die Wechselwirkung zwischen den Elektronen und Metallionen, wobei die Metallionen im Kristallgitter in ein sogenanntes Elektronengas eingebettet sind, das sich nahezu frei bewegen kann. Daher sind auch an der Oberfläche von Metallen Elektronen frei verfügbar, wodurch diese Oberflächen Korrosionsvorgängen unterworfen sind. Die Korrosion von Metallen liegt unter anderem darin begründet, dass sie dazu neigen, in einem energieärmeren, thermodynamisch stabileren Zustand (z.B. den Ionenzustand durch Abgabe von Elektronen, insbesondere bei Kontakt mit einem Elektrolyten) überzugehen. Faktoren, die die Anfälligkeit von Metallen gegenüber Korrosion beeinflussen, beinhalten unter anderem, wie leicht ein spezifisches Metall oxidierbar ist und es Elektronen abgibt. Abbildung 1 zeigt z.B. typische Vorgänge, die an einer Eisenoberfläche ablaufen, die der Atmosphäre ausgesetzt ist. Zum einen werden Elektronen aus einem Eisenatom freigesetzt (Teilreaktion an der Lokalanode: $Fe \rightarrow Fe^{2+} + 2\ e^-$), wobei die entstehenden Elektronen bei Anwesenheit von Sauerstoff und Wasser zu Hydroxidionen umgesetzt werden (Kathode: $O_2 + 2\ H_2O + 4\ e^- \rightarrow 4\ OH^-$). Letztere setzen sich dann mit den Eisen(II)ionen (zu $Fe(OH)_2$) und weiterem Sauerstoff über Eisen(III)hydroxid zu Rost um ($2\ Fe^{2+} + O_2 + 2\ H_2O + 2\ OH^- \rightarrow 2\ Fe(OH)_3 \rightarrow 2\ FeO(OH) + 2\ H_2O$). Eine elektrochemische Korrosion kann somit dadurch verhindert werden, indem man (i) den Sauerstoff aus dem Reaktionsgemisch entzieht (z.B. durch den Zusatz eines Reduktionsmittels und/oder von Verbindungen, die Sauerstoff inhibieren oder einfangen), (ii) Wasser/Elektrolyt von der Oberfläche ausschließt (z.B. durch Zusatz einer feuchtigkeitsreaktiven Verbindung (z.B. Isocyanat) und/oder durch Zugabe von Barrierepigmenten und/oder den Zusatz von Ionentauschern) und/oder (iii) die Alkalität des Reaktionssystems erhöht, was zur Verschiebung des Gleichgewichts führen würde (z.B. durch Zugabe stark basischer Verbindungen; jedoch kann dies auch zur Zerstörung des Bindemittels in einer die basische Verbindung enthaltenen Zusammensetzung zum Aufbringen der basischen Verbindung als Beschichtungsfilm führen, wodurch es zu einem Haftverlust der Beschichtung kommen kann). Allgemein kann also prinzipiell eine Korrosion dadurch ausgeschlossen werden, dass eine Metalloberfläche mit einer Beschichtung versehen wird, um die zur Korrosion erforderlichen Verbindungen (Sauerstoff, Wasser, Elektrolyt) von der Oberfläche fernzuhalten (Barrierewirkung). Darüber hinaus kann der Korrosionsschutz dadurch verbessert werden, dass in die Beschichtung ein "aktiver" Schutz (kathodisch und/oder anodisch) eingebaut wird. Als kathodischer Schutz können beispielsweise Verbindungen mit einem negativeren Potential

als das Metall, das beschichtet werden soll, verwendet werden (z.B. Zn-Staub für Eisenoberflächen oder Mg-Staub für Aluminiumoberflächen). Als anodischer Schutz können beispielsweise Verbindungen verwendet werden, die (i) schwerlösliche und/oder dichte Niederschläge (d.h. Schutzschichten) ausbilden (z.B. Zinkphosphat) und/oder (ii) Komplexe ausbilden können (z.B. Cr(III)-Verbindungen, Zinkphosphat). Jedoch gilt grundsätzlich bei diesen herkömmlichen Zusammensetzungen, dass (1) Zusammensetzungen, die gute Barriereeigenschaften aufweisen, häufig nur schwach gegenüber einer Unterwanderung und/oder Unterrostung schützen, und (2) Zusammensetzungen, die hohen aktiven Korrosionsschutz verleihen, dazu führen, dass sich Blasen ausbilden und es zu einer Ablösung der Beschichtung kommt. Daher müssen beide Mechanismen (Barrierewirkung und aktiver Korrosionsschutz) ausgewogen sein. Dies ist nun durch die erfindungsgemäße Beschichtungszusammensetzung möglich, die verschiedene Korrosionsschutzmechanismen kombiniert: zum einen weist die Zn-Mg-Legierung ein negativeres Potential als $Fe/Fe^{2+}$ oder $Al/Al^{3+}$ auf, wodurch ein kathodischer Schutz erzielt werden kann; zum anderen tritt ein Verdichtungseffekt auf (durch Abnahme der Dichte bei der Entstehung von schwerlöslichen Metallsalzen ausgehend von Zn-Mg-Legierung kommt es zu einer Volumenvergrößerung), wodurch ein anodischer Schutz erzielt werden kann. Auch ist es durch die Verwendung von Partikeln (C) in lamellarer Form möglich, einen passiven Korrosionsschutz (durch Verlängerung des Diffusionsweges) zu erzielen.

Daher wird in einem zweiten Aspekt die Verwendung einer erfindungsgemäßen Beschichtungszusammensetzung (wie im ersten Aspekt beschrieben) zur Beschichtung einer metallischen Oberfläche, insbesondere zur Ausbildung einer Korrosionsschutzbeschichtung auf einer metallischen Oberfläche, bereitgestellt. Vor dem Auftragen werden die Bestandteile der erfindungsgemäßen Beschichtungszusammensetzung vermischt (beispielsweise wie vorstehend bei der Herstellung der erfindungsgemäßen Beschichtungszusammensetzung beschrieben; liegt die erfindungsgemäße Beschichtungszusammensetzung z.B. als 2- oder Mehrkomponentenzusammensetzung vor, werden zunächst die 2 oder mehreren Komponenten derart gemischt, dass eine erfindungsgemäße Beschichtungszusammensetzung in der Form einer 1-Komponentenzusammensetzung entsteht). Die erfindungsgemäße Beschichtungszusammensetzung kann auf die metallische Oberfläche in einer jeglichen, dem Fachmann bekannten Form aufgebracht werden, beispielsweise durch Spritzen, Rollen, Streichen, Gießen, Walzen, Tauchen, Drucken oder einem anderen Standardverfahren. Allgemein sollte die Auftragung der erfindungsgemäßen Beschichtungszusammensetzung bei einer Temperatur von mehr als 0°C (z.B. mindestens 5°C, mehr bevorzugt mindestens 10°C) und einer Luftfeuchtigkeit von maximal 90% (z.B. maximal 85%, mehr bevorzugt maximal 80%) erfolgen. Der auf der metallischen Oberfläche durch die erfindungsgemäße Beschichtungszusammensetzung ausgebildete Film (sogenannter Beschichtungsfilm) kann sodann aktiv (z.B. durch Trocknung) und/oder passiv ausgehärtet werden. In einer Ausführungsform umfasst die Trocknung ein Erwärmen auf maximal 100°C (z.B. 30 bis 90°C, bevorzugt 40 bis 80°C, mehr bevorzugt 45 bis 75°C, mehr bevorzugt 50 bis 70°C, mehr bevorzugt 55 bis 65°C), beispielsweise für 1,0 bis 24,0 h, vorzugsweise 1,5 bis 20,0 h, mehr bevorzugt 2,0 bis 10,0 h, mehr bevorzugt 2,5 bis 5,0 h, mehr bevorzugt 3,0 bis 4,0 h. Eine passive Aushärtung kann bei Raumtemperatur (20°C) erfolgen, beispielsweise in 1,0 bis 24,0 h, vorzugsweise 1,5 bis 20,0 h, mehr bevorzugt 2,0 bis 10,0 h, mehr bevorzugt 2,5 bis 5,0 h, mehr bevorzugt 3,0 bis 4,0 h. Vorzugsweise beträgt die Schichtdicke der durch einmaliges Auftragen der erfindungsgemäßen Beschichtungszusammensetzung und Aushärtung erzeugten Beschichtung (Trockenschichtdicke) 20 bis 50 μm, mehr bevorzugt 25 bis 45 μm, mehr bevorzugt 30 bis 40 μm. Der Zyklus aus Auftragen der erfindungsgemäßen Beschichtungszusammensetzung und Aushärten kann ein- oder mehrmals (z.B. 2, 3, 4 oder 5-mal) wiederholt werden, um die gewünschte Gesamtschichtdicke (z.B. 20 bis 200 μm, mehr bevorzugt 30 bis 180 μm, mehr bevorzugt 40 bis 160 μm, mehr bevorzugt 45 bis 140 μm, mehr bevorzugt 50 bis 120 μm, mehr bevorzugt 55 bis 100 μm, mehr bevorzugt 60 bis 80 μm) zu erreichen. Sofern erforderlich, kann vor dem erstmaligen Auftragen der erfindungsgemäßen Beschichtungszusammensetzung die metallische Oberfläche einer Vorbehandlung unterzogen werden. Diese Vorbehandlung kann beispielsweise ein Schleifen (und/oder Strahlen) und/oder ein Entfetten der metallischen Oberfläche umfassen. Des Weiteren kann auf die Beschichtung, die durch den letzten Zyklus aus Auftragen der erfindungsgemäßen Beschichtungszusammensetzung auf die metallischen Oberfläche und Aushärten des Beschichtungsfilms erzeugt wird, eine Deckbeschichtung ausgebildet werden. Die Deckbeschichtung kann durch Auftragen einer dem Fachmann bekannten Deckbeschichtungszusammensetzung (z.B. eine lösungsmittelhaltige oder wasserbasierende 2-Komponenten-Deckbeschichtungszusammensetzung) in an sich bekannter Weise ausgebildet werden. Beispielsweise kann die Deckbeschichtung durch Auftragen eines auf Wasser basierenden oder lösungsmittelhaltigen 2-Komponenten-Polyurethan-Decklacks (z.B. Mipa WPU 2400-05 oder -20 oder -50 oder -90 oder PU 240-10 oder PU 240-50 oder PU 240-90) und anschließendem Aushärten (passiv und/oder aktiv, je nach Herstellerangabe) erzeugt werden. Die Gesamtschicke aus der Beschichtung, die durch den einen oder die mehreren Zyklen aus Auftragen der erfindungsgemäßen Beschichtungszusammensetzung auf die metallischen Oberfläche und Aushärten des Beschichtungsfilms erzeugt wird, und der Deckbeschichtung beträgt vorzugsweise 40 bis 250 μm, mehr bevorzugt 50 bis 220 μm, mehr bevorzugt 60 bis 200 μm, mehr bevorzugt 80 bis 180 μm, mehr bevorzugt 90 bis 160 μm, mehr bevorzugt 100 bis 150 μm, mehr bevorzugt 110 bis 140 μm.

In einem dritten erfindungsgemäßen Aspekt wird ein Verfahren zur Beschichtung einer metallischen Oberfläche bereitgestellt, das die Schritte (a) eines Aufbringens einer erfindungsgemäßen Beschichtungszusammensetzung (wie im ersten Aspekt beschrieben) auf zumindest einen Teil der metallischen Oberfläche und gegebenenfalls (b) eines

Aushärtens der Beschichtungszusammensetzung umfasst. In einer Ausführungsform kann vor Schritt (a) ein Mischen der Bestandteile der erfindungsgemäßen Beschichtungszusammensetzung erfolgen (beispielsweise wie vorstehend bei der Herstellung der erfindungsgemäßen Beschichtungszusammensetzung beschrieben; liegt die erfindungsgemäße Beschichtungszusammensetzung z.B. als 2- oder Mehrkomponentenzusammensetzung vor, werden zunächst die 2 oder mehreren Komponenten derart gemischt, dass eine erfindungsgemäße Beschichtungszusammensetzung in der Form einer 1-Komponentenzusammensetzung entsteht). Schritt (a) kann in einer jeglichen, dem Fachmann bekannten Form durchgeführt werden, beispielsweise durch Spritzen, Rollen, Streichen, Gießen, Walzen, Tauchen, Drucken oder einem anderen Standardverfahren. Allgemein sollte die Auftragung der erfindungsgemäßen Beschichtungszusammensetzung bei einer Temperatur von mehr als 0°C (z.B. mindestens 5°C, mehr bevorzugt mindestens 10°C) und einer Luftfeuchtigkeit von maximal 90% (z.B. maximal 85%, mehr bevorzugt maximal 80%) erfolgen. Schritt (b) kann aktiv (z.B. durch Trocknen) und/oder passiv erfolgen. In einer Ausführungsform umfasst das Trocknen ein Erwärmen auf maximal 100°C (z.B. 30 bis 90°C, bevorzugt 40 bis 80°C, bevorzugt 45 bis 75°C, bevorzugt 50 bis 70°C, bevorzugt 55 bis 65°C), beispielsweise für 1,0 bis 24,0 h, vorzugsweise 1,5 bis 20,0 h, mehr bevorzugt 2,0 bis 10,0 h, mehr bevorzugt 2,5 bis 5,0 h, mehr bevorzugt 3,0 bis 4,0 h. Ein passives Aushärten kann bei Raumtemperatur (20°C) erfolgen, beispielsweise in 1,0 bis 24,0 h, vorzugsweise 1,5 bis 20,0 h, mehr bevorzugt 2,0 bis 10,0 h, mehr bevorzugt 2,5 bis 5,0 h, mehr bevorzugt 3,0 bis 4,0 h. Vorzugsweise beträgt die Schichtdicke der durch einmaliges Auftragen der erfindungsgemäßen Beschichtungszusammensetzung und Aushärtung erzeugten Beschichtung (Trockenschichtdicke) 20 bis 50 $\mu$m, mehr bevorzugt 25 bis 45 $\mu$m, mehr bevorzugt 30 bis 40 $\mu$m. Der Zyklus aus Auftragen der erfindungsgemäßen Beschichtungszusammensetzung und Aushärten kann ein- oder mehrmals (z.B. 2, 3, 4 oder 5-mal) wiederholt werden, um die gewünschte Gesamtschichtdicke (z.B. 20 bis 200 $\mu$m, mehr bevorzugt 30 bis 180 $\mu$m, mehr bevorzugt 40 bis 160 $\mu$m, mehr bevorzugt 45 bis 140 $\mu$m, mehr bevorzugt 50 bis 120 $\mu$m, mehr bevorzugt 55 bis 100 $\mu$m, mehr bevorzugt 60 bis 80 $\mu$m) zu erreichen. Sofern erforderlich, kann vor Schritt (a) (d.h. insbesondere vor dem erstmaligen Auftragen der erfindungsgemäßen Beschichtungszusammensetzung auf die metallische Oberfläche) ein Vorbehandeln der metallischen Oberfläche erfolgen. Dieses Vorbehandeln kann beispielsweise ein Schleifen (und/oder Strahlen) und/oder ein Entfetten der metallischen Oberfläche umfassen. Des Weiteren kann nach Schritt (b) (d.h. insbesondere nach dem letzten Zyklus aus Auftragen der erfindungsgemäßen Beschichtungszusammensetzung auf die metallischen Oberfläche und Aushärten des Beschichtungsfilms) ein Ausbilden einer Deckbeschichtung auf der Beschichtung, die durch den letzten Zyklus aus Auftragen der erfindungsgemäßen Beschichtungszusammensetzung auf die metallischen Oberfläche und Aushärten des Beschichtungsfilms erzeugt wird, erfolgen. Das Ausbilden der Deckbeschichtung kann durch Auftragen einer dem Fachmann bekannten Deckbeschichtungszusammensetzung (z.B. eine lösungsmittelhaltige oder wasserbasierende 2-Komponenten-Deckbeschichtungszusammensetzung) in an sich bekannter Weise durchgeführt werden. Beispielsweise kann die Deckbeschichtung durch Auftragen eines auf Wasser basierenden oder lösungsmittelhaltigen 2-Komponenten-Polyurethan-Decklacks (z.B. Mipa WPU 2400-05 oder -20 oder -50 oder -90 oder PU 240-10 oder PU 240-50 oder PU 240-90) und anschließendem Aushärten (passiv und/oder aktiv, je nach Herstellerangabe) erzeugt werden. Die Gesamtschicke aus der Beschichtung, die durch den einen oder die mehreren Zyklen aus Auftragen der erfindungsgemäßen Beschichtungszusammensetzung auf die metallischen Oberfläche und Aushärten des Beschichtungsfilms erzeugt wird, und der Deckbeschichtung beträgt vorzugsweise 40 bis 250 $\mu$m, mehr bevorzugt 50 bis 220 $\mu$m, mehr bevorzugt 60 bis 200 $\mu$m, mehr bevorzugt 80 bis 180 $\mu$m, mehr bevorzugt 90 bis 160 $\mu$m, mehr bevorzugt 100 bis 150 $\mu$m, mehr bevorzugt 110 bis 140 $\mu$m.

In jeder der vor- oder nachstehend beschriebenen Ausführungsformen des erfindungsgemäßen zweiten und dritten Aspekts kann die metallische Oberfläche die Oberfläche eines jeglichen Metalls sein. Es ist jedoch anzumerken, dass sich möglicherweise nicht jede erfindungsgemäße Beschichtungszusammensetzung für jede metallische Oberfläche in gleich guter Weise eignet. Der Fachmann ist aber in der Lage, mit Hilfe seines Fachwissens, der Offenbarung der vorliegenden Anmeldung sowie eventuell durchzuführender Experimente festzustellen, welche erfindungsgemäße Beschichtungszusammensetzung für welche spezifische metallische Oberfläche am besten geeignet ist. Vorzugsweise wird die metallische Oberfläche aus der Gruppe, bestehend aus Aluminium, Stahl, Legierungen aus Aluminium und/oder Eisen, mit einem Überzug versehenes Aluminium, mit einem Überzug versehener Stahl und mit einem Überzug versehene Legierungen aus Aluminium und/oder Eisen, ausgewählt, mehr bevorzugt kann die metallische Oberfläche eine Oberfläche aus Aluminium, Stahl oder einer Legierung aus Aluminium und/oder Eisen, mehr bevorzugt eine Oberfläche aus Aluminium oder Stahl sein. Vorzugsweise sind die metallischen Oberflächen diejenigen, die im Leichtbau und/oder Luftfahrzeugbereich verwendet werden.

In einem vierten erfindungsgemäßen Aspekt wird eine Beschichtung, insbesondere eine Korrosionsschutzbeschichtung, bereitgestellt, die durch Aushärten einer erfindungsgemäßen Beschichtungszusammensetzung erhältlich ist. Vorzugsweise wird die Beschichtung, insbesondere die Korrosionsschutzbeschichtung, wie vorstehend beschrieben hergestellt und/oder weist die Merkmale auf, wie sie vorstehend im Zusammenhang mit der erfindungsgemäßen Beschichtung (erster Aspekt) und deren Verwendung zum Beschichten einer metallischen Oberfläche (zweiter und dritter Aspekt) beschrieben wurden. Beispielsweise kann die Beschichtung, insbesondere die Korrosionsschutzbeschichtung, eine Schichtdicke von (i) 20 bis 50 $\mu$m, mehr bevorzugt 25 bis 45 $\mu$m, mehr bevorzugt 30 bis 40 $\mu$m (wenn z.B. nur ein

Zyklus aus Auftragen der erfindungsgemäßen Beschichtungszusammensetzung und Aushärten des Beschichtungsfilms erfolgt) oder (ii) 20 bis 200 μm, mehr bevorzugt 30 bis 180 μm, mehr bevorzugt 40 bis 160 μm, mehr bevorzugt 45 bis 140 μm, mehr bevorzugt 50 bis 120 μm, mehr bevorzugt 55 bis 100 μm, mehr bevorzugt 60 bis 80 μm (wenn z.B. zwei oder mehr Zyklen aus Auftragen der erfindungsgemäßen Beschichtungszusammensetzung und Aushärten des Beschichtungsfilms erfolgen) aufweisen. In einer Ausführungsform weist die Beschichtung, insbesondere die Korrosionsschutzbeschichtung, auf einer ihrer Seiten eine Deckschicht (z.B. eine lösungsmittelhaltige oder wasserbasierende 2-Komponenten-Deckbeschichtungszusammensetzung wie vorstehend beschrieben) auf. In dieser Ausführungsform kann die Gesamtschichtdicke 40 bis 250 μm, mehr bevorzugt 50 bis 220 μm, mehr bevorzugt 60 bis 200 μm, mehr bevorzugt 80 bis 180 μm, mehr bevorzugt 90 bis 160 μm, mehr bevorzugt 100 bis 150 μm, mehr bevorzugt 110 bis 140 μm betragen. Ein schematischer Aufbau von beispielhaften Beschichtungen (insbesondere Korrosionsschutzbeschichtungen) des vierten Aspekts zusammen mit einer Deckschicht und einer metallischen Oberfläche ist in Abbildung 9 (vgl. Beschichtungen 2 und 4) gezeigt, wobei auch herkömmliche Beschichtungen (1 und 3) zum Vergleich dargestellt sind.

In einem fünften erfindungsgemäßen Aspekt wird ein Gegenstand bereitgestellt, der eine metallische Oberfläche umfasst, auf der zumindest teilweise eine Beschichtung (insbesondere eine Korrosionsschutzbeschichtung) des vierten Aspekts angeordnet ist. Der Gegenstand mit der Beschichtung, insbesondere mit der Korrosionsschutzbeschichtung), kann wie im Zusammenhang mit dem 2 und dritten Aspekt beschrieben hergestellt werden. Die metallische Oberfläche des Gegenstands kann die Oberfläche eines jeglichen Metalls sein. Wie vorstehend angemerkt, ist es möglich, dass sich nicht jede erfindungsgemäße Beschichtungszusammensetzung für jede metallische Oberfläche in gleich guter Weise eignet. Der Fachmann ist aber in der Lage, mit Hilfe seines Fachwissens, der Offenbarung der vorliegenden Anmeldung sowie eventuell durchzuführender Experimente festzustellen, welche erfindungsgemäße Beschichtungszusammensetzung für welche spezifische metallische Oberfläche am besten geeignet ist. Vorzugsweise wird die metallische Oberfläche aus der Gruppe, bestehend aus Aluminium, Stahl, Legierungen aus Aluminium und/oder Eisen, mit einem Überzug versehenes Aluminium, mit einem Überzug versehener Stahl und mit einem Überzug versehene Legierungen aus Aluminium und/oder Eisen, ausgewählt, mehr bevorzugt kann die metallische Oberfläche eine Oberfläche aus Aluminium, Stahl oder einer Legierung aus Aluminium und/oder Eisen, mehr bevorzugt eine Oberfläche aus Aluminium oder Stahl sein. Vorzugsweise ist der Gegenstand einer, der im Leichtbau und/oder Luftfahrzeugbereich verwendet wird (z.B. ein Teil eines Flugzeugflügels).

*Prüfungen*

Die Beschichtungszusammensetzungen und daraus hergestellten Beschichtungen bzw. beschichteten metallischen Oberflächen können hinsichtlich ihrer Eigenschaften (Korrosionsschutz und mechanische Eigenschaften) mit den nachstehenden Prüfungen getestet werden.

*Salzsprühtest nach DIN EN ISO 9227*

Während des Tests befinden sich die zu prüfenden Substrate in einer Kammer, in der bei einer konstanten Temperatur (z.B. 35°C) kontinuierlich eine 5%ige Kochsalzlösung mit kontrolliertem pH-Wert (z.B. in einem Bereich von 6,5 bis 7,2) vernebelt wird. Der Nebel schlägt sich auf den zu prüfenden Substraten nieder, worauf somit ein korrosiv wirkender Salzwasserfilm ausgebildet wird. Typische Prüfdauern betragen beispielsweise 96 h bis 720 h und richten sich nach der zu erwartenden Korrosionsbeständigkeit der zu prüfenden Substrate. Nach Abschluss der Salzsprühnebelprüfung werden die zu prüfenden Substrate mit entionisiertem Wasser zur Entfernung von lose anhaftenden Korrosionsprodukten abgespült. Daraufhin wird visuell oder unter Verwendung mikroskopischer Verfahren der Korrosionsangriff auf die zu prüfenden Substrate beurteilt. Z.B. leitet sich die Korrosionsbeständigkeit eines mit einem Korrosionsschutzmittel versehenen Stahlproduktes von der Zeit ab, die ein Prüfling im Test übersteht, ohne dass das Grundmetall korrodiert bzw. Rost visuell sichtbar wird. Wie in der DIN EN ISO 9227 angegeben, werden der Rostgrad sowie die Blasengröße und -menge nach DIN EN ISO 4628 bestimmt.

*Kondenswasserprüfung (QCT-Test) nach DIN EN ISO 6270-2*

Der QCT-Test kann z.B. in einem QCT Weathering Tester der Firma Q-Lab durchgeführt werden. Bei dem Test werden die zu prüfenden Substrate in einer bestimmten Größe (z.B. 150 mm x 100 mm) in das Testgerät derart eingebaut, so dass ihre Gutseite nach innen gewandt ist. Das in dem Tester befindliche Wasser wird so erhitzt, dass die Innentemperatur im Testgerät eine Temperatur von 50°C erreicht. Dabei mischt sich der Wasserdampf mit Luft und füllt die Kammer, so dass eine Luftfeuchtigkeit von 100% erreicht wird. Auf diese Weise stellen die zu prüfenden Substrate das Dach des Testgerätes dar, und die zu prüfenden Substrate werden durch die umgebende Raumluft auf der Rückseite gekühlt. Die dabei entstehende Temperaturdifferenz bewirkt, dass der Wasserdampf sich gleichmäßig auf der Gutseite der zu prüfenden Substrate niederschlägt. Das Kondensat ist destilliertes Wasser, welches mit gelöstem Sauerstoff

gesättigt ist. Ein kleiner Teil des Wasserdampfes tritt durch Diffusion durch die Kanäle auf beiden Seiten der QCT-Einheit aus, so dass der Wasserdampf ständig durch Luft ersetzt wird und auf diese Weise ein konstantes Wasser-Luft-Gemisch im Gerät herrscht.

*Filiformkorrosion nach DIN EN ISO 4623-2 (nur Aluminium)*

Die zu prüfenden Substrate werden nach einem festgelegten Verfahren geritzt, anschließend mit Chloriden in Form von Salzlösungen oder Salzsäuredämpfen angeimpft und über eine bestimmte Prüfdauer (vom Anwendungsfall abhängig) bei konstanter Temperatur und Luftfeuchtigkeit (z.B. 40°C und ca. 80% relativer Luftfeuchtigkeit) konditioniert. Die Auswertung kann manuell oder durch ein automatisiertes Verfahren erfolgen. Die Auswertung kann an den beschichteten Proben erfolgen. Sind die Fäden sehr klein oder schwer zu erkennen, wird die Auswertung an Substraten vorgenommen, deren Beschichtung entfernt wurde. Die Fadenlänge wird dadurch ermittelt, dass der Abstand zwischen der mechanischen Schädigung (Ritzspur) und dem Fadenkopf unter 90° gemessen wird, wobei Krümmungen des Fadens vernachlässigt werden. Die Fadenhäufigkeit wird durch Zählen der Fäden entlang der Ritzspur bestimmt. Z.B. wird die Fadenhäufigkeit (H) links und rechts von der Ritzspur ermittelt, wobei jeweils 5 mm am Ritzanfang und -ende unberücksichtigt bleiben. Grundsätzlich sollten alle Korrosionsfäden entlang der Ritzspur (längs / quer) sowie links und rechts je zu prüfendem Substrat betrachtet werden, wobei jedoch nur diese Ritzspur auszuwerten ist, die die größte Schädigung auf diesem Substrat aufweist. Es wird ein Mittelwert aus Fadenlänge und Fadenhäufigkeit (H) gebildet und daraus die Kennzahl (F) für den Filiformangriff ermittelt.

$$F = H \times l$$

$$H = Z/L$$

l = mittlere Fadenlänge (mm)
Z= Anzahl der Fäden
L= Länge der Ritzspur (mm)

*Tiefungsprüfung (DIN EN 13523-6)*

Durch diese Verfahren wird die Haftfestigkeit einer Beschichtung auf einem Metallsubstrat nach Eindrücken bei langsamer Verformung bestimmt. In der zu prüfende Beschichtung wird ein Gitterschnitt erzeugt. Nach erfolgter Verformung (wobei die für die Tiefung aufgebrachte Kraft maximal 80% der Risskraft des Grundmaterials betragen soll) werden die nicht mehr oder nur noch schlecht haftenden Teile der Beschichtung aus dem Bereich des Gitterschnittes entfernt. Für Beschichtungen mit einer Dicke von weniger als 60 $\mu$m kann dies durch Abziehen mit einem Klebeband (z.B. mit einer Klebkraft von 10 $\pm$ 1 N / 25 $mm^2$ nach IEC 60 454-2) erfolgen, während bei Beschichtungen mit einer Dicke von $\geq$ 60 $\mu$m die Entfernung mittels Pinzette durchgeführt werden kann. Die Haftfestigkeit der Beschichtung kann als Verhältnis der Fläche, von der sich die Beschichtung abgelöst hat, und der Gesamtfläche des Gitterschnittes bestimmt werden.

*Beständigkeit*

Zur Prüfung des Unterwanderungsgrades, der ein Maß für die Beständigkeit einer auf einem Metall aufgebrachten Beschichtung ist, wird eine Ritzlinie in die Beschichtung dadurch erzeugt, dass die Korrosionsschutzmittelbeschichtung mit einem Schnitt (z.B. mit Hilfe eines Messers) bis zum Grundmetall eingeritzt wird. Während der Korrosionsprüfung korrodiert das Grundmetall entlang der Ritzlinie und die Beschichtung wird durch den fortschreitenden Korrosionsvorgang während der Prüfung mehr oder weniger stark unterwandert.

*Haftung (z.B. nach DIN EN ISO 2409)*

Zur Prüfung der Haftung der Beschichtung, die sich nach Auftragung der Beschichtungszusammensetzung auf einem Metall ausbildet, wird ein Gitterschnitt (Gt) dadurch erzeugt, dass mehrere Ritzlinien parallel und über Kreuz geführt in die Beschichtung eingebracht werden. Nach Abschluss der Salzsprühnebelprüfung (oder auch Klimaprüfung) wird mit einem Klebestreifen, der eine definierte Haftkraft aufweist, die Haftung der Beschichtung geprüft.

*Lösungsm ittelem issionstest*

Die Lösungsmittelemission wird anhand der flüchtigen Bestandteile der Beschichtungszusammensetzungen berechnet, unter der Annahme, dass die Beschichtungszusammensetzungen vorschriftsgemäß hergestellt und auf Substrate aufgetragen werden. Zur Berechnung werden die Angaben der Sicherheitsdatenblätter (der Bestandteile der jeweiligen Beschichtungszusammensetzung) über Festkörpergehalt, Dichte und flüchtige Bestandteile sowie die Angaben in der Verarbeitungsvorschrift zur Verarbeitung (Verdünnungszugabe und Mischungsverhältnis mit der Härterkomponente) verwendet.

*Witterungsbeständigkeit (UV-A)*

Die Beschichtungen werden nach DIN EN ISO 11507 mit einer Prüfdauer von 1000 h durch UV-Strahlung und Wasser beansprucht. Es können Lampen vom Typ 2, UV-A (340), verwendet werden. Jeweils vor, nach 500 h und nach 1000 h Bewitterung erfolgt die farbmetrische Bestimmung des Farbabstands nach der CIELAB-Formel nach DIN 6174 zur Beurteilung der Farbveränderung ($\Delta E^*$).

Gegenwärtig werden für den Korrosionsschutz von Metallen, insbesondere von Aluminiumbauteilen und Stahlbauteilen, chrom(VI)-haltige Washprimer in Kombination mit Korrosionsschutzgrundierungen auf Epoxidharzbasis oder 2K-Zinkstaubfarben auf Epoxidharzbasis (hohe Dichte des Lackfilms ungünstig für Leichtbau; geringe Elastizität; schlechte Spritznebelaufnahme und schlechte Zwischenhaftung) verwendet.

Wie in den nachstehenden Beispielen gezeigt, weisen die erfindungsgemäßen Zusammensetzungen folgende Vorteile gegenüber gegenwärtig erhältlichen Beschichtungszusammensetzungen auf:

- Verzicht auf physiologisch bedenkliche Inhaltsstoffe (wie Cr(VI) und/oder Bisphenol A-Verbindungen)
- verbesserte mechanische Eigenschaften im Vergleich zu Zinkstaub (v.a. Elastizität)
- Kombination verschiedener Korrosionsschutzmechanismen:
    - anodischer und kathodischer Korrosionsschutz
    - Verdichtungseffekt
    - Barrierewirkung (Lamellenstruktur)
    - 2 unabhängige Härtungsmechanismen (davon ein Härtungsmechanismus mit Luftfeuchtigkeit, dadurch zusätzlicher Schutz feuchter Untergründe)
- Verarbeitungssicherheit (staubtrocken in ca. 1,5 h, überlackierbar in 4 h, grifffest in 4-5 h, montagefest in 24 h; Topfzeit von 4 h)
- geringere Dichte der Beschichtung (insbesondere für Leichtmetallsubstrate relevant)
- Reduzierung der Anzahl an Schichten im Vergleich zum Zweischichtsystem (vgl. z.B. Abbildung 9)
- UV-stabil, dadurch keine Unterkreidung
- witterungsbeständig
- starke Reduzierung von Lösungsmittel (um ca. 85%) und somit auch Reduzierung von Lösungsmittelemissionen
- schlagzähe Beschichtung (insbesondere wenn zusätzlich eine Deckbeschichtung (Decklack) vorhanden ist)

Die nachfolgenden Beispiele dienen zur Veranschaulichung der vorliegenden Erfindung. Diejenigen Beispiele, die nicht unter die angehängten Patentansprüche fallen, sind lediglich zu Vergleichszwecken angegeben.

## BEISPIELE

### Beispiel 1:

Ausgehend von einer Zinkstaubgrundierung (Vergleichszusammensetzung 24) wurde untersucht, ob sich durch Änderung der Partikelform von Staub/Körnern zu Plättchen die Eigenschaften deutlich verändern.

Vergleichszusammensetzung V24 (Zinkstaub)

85 Gewichtsteile Epoxyharz auf Basis von Bisphenol A Typ 1 wurden mit 20 Gewichtsteilen Xylol, 3 Gewichtsteilen Trocknungsmittel (SylosivA3), 5 Gewichtsteilen Rheologiemodifizierungsmittel 1 (Bentone) und 2 Gewichtsteilen Rheologiemodifizierungsmittel 2 (Byk P 104) versetzt und in einem Dissolver bei 300 U/min 5 min gemischt. Nach Zugabe von 6 Gewichtsteilen Rheologiemodifizierungsmittel 3 (N20), 25 Gewichtsteilen Talk (M20L) und 1 Gewichtsteil Rheologiemodifizierungsmittel 4 (Luvotix R-RF) wurde weitere 5 min bei 1200 U/min gemischt. Es wurden 450 Gewichtsteile

Zinkstaub zugegeben und 10 min bei 1200 U/min und 52 bis 55°C gemischt. Zum Abschluss wurden 20 Gewichtsteile Cyclohexanon, 15 Gewichtsteile Methylisobutylketon und 23 Gewichtsteile Xylol hinzugegeben.

Vergleichszusammensetzung V25

Vergleichszusammensetzung V24 wurde wiederholt, wobei jedoch Zinkstaub durch Zinklamellen vom Typ "AT" ersetzt wurde.

Vergleichszusammensetzung V26

Vergleichszusammensetzung V24 wurde wiederholt, wobei jedoch Zinkstaub durch Zinklamellen vom Typ "GTT" ersetzt wurde.

Vergleichszusammensetzung V27

Vergleichszusammensetzung V24 wurde wiederholt, wobei jedoch die 450 Gewichtsteile Zinkstaub auf Volumenanteil bezogen durch 190 Gewichtsteile Zink-Magnesium-Lamellen (STAPA 15 ZnMg26; Eckart) ersetzt wurden.

Die Vergleichszusammensetzungen V24, V25, V26 und V27 wurden mit Amin-Härter versetzt, um entsprechende Beschichtungszusammensetzungen zu ergeben, die wiederum verwendet wurden, um damit unterschiedliche Metalle (Fe, Al, Zn) zu beschichten. Bei den mechanischen Eigenschaften ist in erster Linie die Bewertung der Haftung (durch Gitterschnitt-Prüfung) und der Elastizität (durch Tiefungsprüfung) der Beschichtungen durchgeführt worden. Die Verarbeitungseigenschaften bei Spritzapplikation werden durch die Bewertung der Zerstäubung, der Spritznebelaufnahme und der erhaltenen Oberflächengüte hinsichtlich Rauigkeit beschrieben.

Die Vergleichszusammensetzungen V24 bis V27 sind alle schwierig zu lackieren und die daraus resultierenden Beschichtungen weisen raue Oberflächen auf. Bei den Vergleichszusammensetzungen V25 bis V27 muss mehr Verdünnung zugesetzt werden. Bei der Haftung zeigt die Vergleichszusammensetzung V27 mit der ZnMg-Legierung die besten Ergebnisse. Die Tiefung war bei Verwendung der Vergleichszusammensetzungen V25 bis V27 ähnlich und besser im Vergleich zu der Verwendung der Vergleichszusammensetzung V24. Die Ergebnisse der Korrosionsversuche (Trocknung der Beschichtung: 2 h bei 60°C, 6 d bei RT) sind in der nachstehenden Tabelle 1 gezeigt.

Tabelle 1

| | V24 | V25 | V26 | V27 |
|---|---|---|---|---|
| Schichtdicke [μm] | 110 | 105 | 150 | 170 |
| Rostgrad | | | | |
| nach 90,5 h | 0 | 0 | 0 | 0 |
| nach 210,0 h | 0 | 0 | 0 | 0 |
| nach 495,0 h | 0 | 0 | 0 | 1 |
| nach 831,5 h | 0 | 0 | 0 | 2 |
| Blasengröße | | | | |
| nach 90,5 h | 0 | 0 | 0 | 0 |
| nach 210,0 h | 1 | 0 | 0 | 1 |
| nach 495,0 h | 3 | 1 | 1 | 3 |
| nach 831,5 h | 4 | 2 | 2 | 3 |
| Blasenmenge | | | | |
| nach 90,5 h | 0 | 0 | 0 | 0 |
| nach 210,0 h | 1 | 0 | 0 | 1 |
| nach 495,0 h | 4 | 3 | 3 | 3 |
| nach 831,5 h | 4 | 5 | 5 | 3 |

Beispiel 2

Es wurde untersucht, ob sich die Partikelkonzentration und/oder Pigmentvolumenkonzentration (PVK) bei plättchenförmigen Partikeln reduzieren lässt bei gleichbleibender Korrosionsschutzwirkung.

Vergleichszusammensetzung V1

151 Gewichtsteile Epoxyharz auf Basis von Bisphenol A Typ 1 wurden mit 20 Gewichtsteilen Xylol, 3 Gewichtsteilen Trocknungsmittel (SylosivA3), 5 Gewichtsteilen Rheologiemodifizierungsmittel 1 (Bentone) und 2 Gewichtsteilen Rheologiemodifizierungsmittel 2 (Byk P 104) versetzt und in einem Dissolver bei 300 U/min 5 min gemischt. Nach Zugabe von 6 Gewichtsteilen Rheologiemodifizierungsmittel 3 (N20), 25 Gewichtsteilen Talk (M20L) und 1 Gewichtsteil Rheologiemodifizierungsmittel 4 (Luvotix R-RF) wurde weitere 5 min bei 1200 U/min gemischt. Es wurden 450 Gewichtsteile Zinklamellen vom Typ "AT" zugegeben und 10 min bei 1200 U/min und 52 bis 55°C gemischt. Zum Abschluss wurden 20 Gewichtsteile Cyclohexanon, 15 Gewichtsteile Methylisobutylketon, 14,5 Gewichtsteile iso-Butanol, 14,5 Gewichtsteile Methoxypropanol und 84 Gewichtsteile Xylol hinzugegeben. Somit ergab sich eine reduzierte Partikelkonzentration (55,49 Gew.-%), ein erhöhter Bindemittelanteil (13,96 Gew.%) und eine reduzierte Pigmentvolumenkonzentration (PVK: 33,5) im Vergleich zu der Vergleichszusammensetzung V25 (Partikelkonzentration: 68,70 Gew.-%; Bindemittelanteil: 9,73 Gew.-%; PVK: 53,3). Die Herstellung entsprechender Beschichtungszusammensetzungen, die Beschichtung von Metallen sowie die Auswertung der Eigenschaften der Beschichtungen wurden wie in Beispiel 1 beschrieben durchgeführt.

Im Vergleich zu V25 ergab sich für V1 eine Verbesserung hinsichtlich der Spritznebelaufnahme, der Oberflächenrauigkeit, der Haftung (Gt = 0 für Fe, Al, Zn) und der Elastizität auf 2,5 mm (Tiefung), jedoch eine Verschlechterung des Korrosionsschutzes (erhöhte Blasenbildung; siehe nachstehende Tabelle 2).

Tabelle 2

| | Al (Legiert 2024) | Al | Stahl |
|---|---|---|---|
| Rostgrad | | | |
| nach 144,4 h | 0 | 0 | 0 |
| nach 308,3 h | 0 | 0 | 0 |
| nach 642,3 h | 0 | 0 | 1 |
| nach 880,5 h | 0 | 0 | 2 |
| nach 1160,5 h | 0 | 0 | 3 |
| Blasengröße | | | |
| nach 144,4 h | 1 | 1 | 1 |
| nach 308,3 h | 3 | 3 | 2 |
| nach 642,3 h | 4 | 5 | 3 |
| nach 880,5 h | 4 | 5 | 4 |
| nach 1160,5 h | 5 | 5 | 5 |
| Blasenmenge | | | |
| nach 144,4 h | 1 | 1 | 1 |
| nach 308,3 h | 5 | 5 | 3 |
| nach 642,3 h | 5 | 5 | 5 |
| nach 880,5 h | 5 | 5 | 5 |
| nach 1160,5 h | 5 | 5 | 5 |

Beispiel 3

Es wurde untersucht, ob sich die Partikelkonzentration und/oder Pigmentvolumenkonzentration (PVK) bei plättchenförmigen Zink-Magnesium-Lamellen reduzieren lässt bei gleichbleibender Korrosionsschutzwirkung.

Vergleichszusammensetzung V5

100 Gewichtsteile Epoxyharz auf Basis von Bisphenol A Typ 1 wurden mit 26,6 Gewichtsteilen Xylol, 3 Gewichtsteilen Trocknungsmittel (SylosivA3), 5 Gewichtsteilen Rheologiemodifizierungsmittel 1 (Bentone) und 3 Gewichtsteilen Rheologiemodifizierungsmittel 2 (Byk P 104) versetzt und in einem Dissolver bei 300 U/min 5 min gemischt. Nach Zugabe von 7,98 Gewichtsteilen Rheologiemodifizierungsmittel 3 (N20) wurde weitere 5 min bei 1200 U/min gemischt. Es wurden 500 Gewichtsteile Zink-Magnesium-Lamellen (STAPA 15 ZnMg26; Eckart) zugegeben und 10 min bei 1200 U/min und 52 bis 55°C gemischt. Zum Abschluss wurden 26,6 Gewichtsteile Cyclohexanon, 16,5 Gewichtsteile Methoxypropanol, 16,5 Gewichtsteile iso-Butanol, 19,95 Gewichtsteile Methylisobutylketon und 119,95 Gewichtsteile Xylol hinzugegeben.

Vergleichszusammensetzung V5.2

98 Gewichtsteile Epoxyharz auf Basis von Bisphenol A Typ 1 wurden mit 15,85 Gewichtsteilen Butylacetat, 1,59 Gewichtsteilen Trocknungsmittel (SylosivA3), 1,6 Gewichtsteilen Rheologiemodifizierungsmittel 1 (Solthix A250) und 1,6 Gewichtsteilen Rheologiemodifizierungsmittel 2 (Byk P 104) versetzt und in einem Dissolver bei 300 U/min 5 min gemischt. Nach Zugabe von 4,2 Gewichtsteilen Rheologiemodifizierungsmittel 3 (N20) wurde weitere 5 min bei 1200 U/min gemischt. Es wurden 264 Gewichtsteile Zink-Magnesium-Lamellen (STAPA 15 ZnMg26; Eckart) zugegeben und 10 min bei 1200 U/min und 52 bis 55°C gemischt. Zum Abschluss wurden 5,2 Gewichtsteile Butylacetat hinzugegeben.

Die Herstellung entsprechender Beschichtungszusammensetzungen, die Beschichtung von Metallen sowie die Auswertung der Eigenschaften der Beschichtungen wurden wie in Beispiel 1 beschrieben durchgeführt.

Tabelle 3

| | V5 | V5.2 |
|---|---|---|
| Gewichtsanteil Festkörper | | |
| ZnMg | 47,7% | 42,3% |
| Bindemittel | 13,5% | 21,4% |
| Lösungsmittel | 36,8% | 34,8% |
| Additive | 2,0% | 2,0% |
| Dichte [g/cm$^3$] | 1,57 | 1,46 |
| Volumenanteil | | |
| Bindemittel | 11,3% | 17,9% |
| Partikel | 12,9% | 11,4% |
| PVK | 53,3% | 39,0% |
| Tiefung [mm] | 1,6 | 3,7 |
| Korrosionsschutz | | |
| auf Al legiert 2024, SST | | |
| Rostgrad | 0 (nach 1160,5 h) | 0 (nach 1001 h) |
| Blasengröße | 1 (nach 880,5 h) | 0 (nach 1001 h) |
| Blasenmenge | 1 (nach 880,5 h) | 0 (nach 1001 h) |
| auf Al legiert 2024, KK | | |
| Rostgrad | 0 (nach 926,9 h) | 0 (nach 1001 h) |
| Blasengröße | 1 (nach 926,9 h) | 3 (nach 1001 h) |

(fortgesetzt)

| | | |
|---|---|---|
| auf Al legiert 2024, KK | | |
| Blasenmenge | 1 (nach 926,9 h) | 1 (nach 1001 h) |

Ergebnis:

Die Elastizität und die Tiefung waren bei geringerem Anteil an Zink-Magnesium-Lamellen besser. Im Gegensatz zur Zinklamelle (Vergleichszusammensetzung V1 in Beispiel 2) bleibt bei der Zink-Magnesium-Lamelle der Korrosionsschutz gut, wenn die Pigmentvolumenkonzentration bis auf den Wert von 39% reduziert wird. Die Spritznebelaufnahme konnte durch Reduzierung der PVK nicht wesentlich verbessert werden.

Beispiel 4

Es wurde untersucht, ob durch Austausch des Bindemittelsystems (von einem Epoxyharz auf Basis von Bisphenol A zu einem Epoxy-Siloxan) weitere Verbesserungen bei Applikation, Haftung und Elastizität erreicht werden können.

Als Zusammensetzung, die als Bindemittelsystem ein Epoxyharz auf Basis von Bisphenol A enthielt, wurde die Vergleichszusammensetzung V5.2 aus Beispiel 3 verwendet.

Beschichtungszusammensetzung V6

180 Gewichtsteile Epoxy-Siloxan (Silikopon EF) wurden mit 27 Gewichtsteilen Butylacetat, 2,7 Gewichtsteilen Trocknungsmittel (SylosivA3), 2,7 Gewichtsteilen Rheologiemodifizierungsmittel 1 (Bentone) und 2,7 Gewichtsteilen Rheologiemodifizierungsmittel 2 (Byk P 104) versetzt und in einem Dissolver bei 300 U/min 5 min gemischt. Nach Zugabe von 7,2 Gewichtsteilen Rheologiemodifizierungsmittel 3 (N20) wurde weitere 5 min bei 1200 U/min gemischt. Es wurden 450 Gewichtsteile Zink-Magnesium-Lamellen (STAPA 15 ZnMg26; Eckart) zugegeben und 10 min bei 1200 U/min und 52 bis 55°C gemischt. Zum Abschluss wurden 9 Gewichtsteile Butylacetat hinzugegeben.

Die Herstellung entsprechender Beschichtungszusammensetzungen, die Beschichtung von Metallen sowie die Auswertung der Eigenschaften der Beschichtungen wurden wie in Beispiel 1 beschrieben durchgeführt. Die Ergebnisse sind in der folgenden Tabelle 4 aufgelistet. Bei der Berechnung der Anteile wurde eine Dichte des Harzes von 1,2 g/cm$^3$ und eine Dichte der Partikel von 3,7 g/cm$^3$ angenommen.

Tabelle 4

| | V5.2 | V6 |
|---|---|---|
| Gewichtsanteil Festkörper | | |
| ZnMg | 42,3% | 57,90% |
| Bindemittel | 21,4% | 29,90% |
| Lösungsmittel | 34,8% | 10,20% |
| Additive | 2,00% | 2,00% |
| Dichte [g/cm3] | 1,46 | 1,79 |
| VOC [g/l] | 506,4 | 182,6 |
| Volumenanteil | | |
| Bindemittel | 17,9% | 24,92% |
| Partikel | 11,4% | 15,65% |
| PVK | 39,0% | 38,58% |
| Tiefung [mm] | 3,7 | 2,6 |
| Korrosionsschutz | | |
| auf Al, SST | | |
| Rostgrad | 0 (nach 1001 h) | 0 (nach 1091,2 h) |

(fortgesetzt)

| | | |
|---|---|---|
| Korrosionsschutz | | |
| auf Al, SST | | |
| Blasengröße | 0 (nach 1001 h) | 0 (nach 1091,2 h) |
| Blasenmenge | 0 (nach 1001 h) | 0 (nach 1091,2 h) |
| auf Al, KK | | |
| Rostgrad | 0 (nach 1001 h) | 0 (nach 1091,2 h) |
| Blasengröße | 1 (nach 1001 h) | 0 (nach 1091,2 h) |
| Blasenmenge | 1 (nach 1001 h) | 0 (nach 1091,2 h) |
| auf Stahl, SST | | |
| Rostgrad | 0 (nach 1001 h) | 0 (nach 1091,2 h) |
| Blasengröße | 0 (nach 1001 h) | 0 (nach 1091,2 h) |
| Blasenmenge | 0 (nach 1001 h) | 0 (nach 1091,2 h) |
| auf Stahl, KK | | |
| Rostgrad | 0 (nach 1001 h) | 0 (nach 1091,2 h) |
| Blasengröße | 5 (nach 1001 h) | 0 (nach 1091,2 h) |
| Blasenmenge | 1 (nach 1001 h) | 0 (nach 1091,2 h) |
| auf Al, legiert 2024, SST | | |
| Rostgrad | 0 (nach 1001 h) | 0 (nach 1091,2 h) |
| Blasengröße | 0 (nach 1001 h) | 0 (nach 1091,2 h) |
| Blasenmenge | 0 (nach 1001 h) | 0 (nach 1091,2 h) |
| auf Al, legiert 2024, KK | | |
| Rostgrad | 0 (nach 1001 h) | 0 (nach 1091,2 h) |
| Blasengröße | 3 (nach 1001 h) | 0 (nach 1091,2 h) |
| Blasenmenge | 1 (nach 1001 h) | 0 (nach 1091,2 h) |

Die Beschichtungen, die auf der Vergleichszusammensetzung V5.2 bzw. V5 (siehe Beispiel 3) basierten, waren rau, während die auf der Zusammensetzung V6 basierende Beschichtung von allen getesteten am besten war. Bei der Tiefung ergab die auf der Zusammensetzung V6 basierende Beschichtung bessere Ergebnisse (2,6 mm) als die auf der Vergleichszusammensetzung V5 basierende Beschichtung (1,6 mm). Die Haftung war bei den auf den Zusammensetzungen V6, V5 und V5.2 basierenden Beschichtungen ohne Beanstandung (Gt = 0 für alle getesteten Metalle). Der Korrosionsschutz war bei den auf den Vergleichszusammensetzungen V5 und V5.2 basierenden Beschichtungen besser als bei der auf der Vergleichszusammensetzung V27 basierenden Beschichtung (siehe Beispiel 1), jedoch schlechter als bei der auf der Zusammensetzung V6 basierenden Beschichtung, obwohl die Pigmentvolumenkonzentration (PVK) der Zusammensetzung V6 wesentlich geringer war als die Pigmentvolumenkonzentration der VergleichszusammensetzungV5 bzw. V27. Im Vergleich zur Vergleichszusammensetzung V5.2 mit gleicher Pigmentvolumenkonzentration waren bei auf der Zusammensetzung V6 basierenden Beschichtungen die Korrosionsschutzeigenschaften besser, vor allem hinsichtlich der Blasenbildung beim Kondenswassertest.

Beispiel 5

Der Korrosionsschutz von Beschichtungen, die auf der erfindungsgemäßen Beschichtungszusammensetzung basieren, wurde mit dem von herkömmlichen Beschichtungszusammensetzungen verglichen. Hierzu wurden entsprechende Salzsprühtests (nach DIN EN ISO 9227), Kondenswassertests (QCT-Tests) nach DIN EN ISO 6270-2 sowie Filiformkorrosionstests nach DIN EN ISO 4623-2 durchgeführt, wobei die folgenden Zusammensetzungen verwendet wurden, um entsprechend beschichtete Metalle (Aluminium bzw. Stahl) herzustellen, die dann den jeweiligen Tests

unterzogen wurden:

- Vergleichszusammensetzung V24 (enthält Zinkstaub; siehe Beispiel 1) als Kontrolle 1
- erfindungsgemäße Beschichtungszusammensetzung BZ 1 (siehe Beispiel 4) oder
- herkömmlicher Chrom(VI)-Primer + 2K-EP-Grundierung als Kontrolle 2.

Der Chrom(VI)-Primer war eine säurehärtende 2K-Grundierung auf Basis von Polyvinylbutyral mit einem Anteil an Zinkchromat ($ZnCrO_4$) von 5 Gew.-%. Die verwendete 2K-EP-Grundierung basiert auf Epoxyharz des Bisphenol-A-Typs mit Amin-funktionellem Härter. Die beschichteten Metalle wiesen somit entweder eine Schicht (Kontrolle 1 bzw. BZ1) oder zwei Schichten (Kontrolle 2: Chrom(VI)-Primer direkt auf dem Metall, darüber die 2K-EP-Grundierung) auf.

Für die Salzsprühtests wurden die beschichteten Metalle, wie in der DIN EN ISO 9227 beschrieben, in einer Kammer gelagert, in der bei einer konstanten Temperatur von 35°C kontinuierlich eine 5%ige Kochsalzlösung mit kontrolliertem pH-Wert von 6,5 bis 7,2 vernebelt wurde. Die Prüfdauern betrugen bis zu 1160 h. Danach wurden die zu prüfenden Substrate mit entionisiertem Wasser zur Entfernung von lose anhaftenden Korrosionsprodukten abgespült und es wurde der Korrosionsangriff auf die zu prüfenden Substrate nach DIN EN ISO 4628 beurteilt. Die Ergebnisse der Salzsprühtests sind in den Abbildungen 2a bis 2c gezeigt, wobei Abbildung 2c zwei bespielhafte Prüflinge zeigt, die mit entweder Kontrolle 1 (links) oder erfindungsgemäßer Beschichtungszusammensetzung (rechts) beschichtet worden waren, jeweils eine Ritzlinie aufwiesen und Salzsprühtests für 1160 h unterzogen wurden. Wie aus den Abbildungen 2a bis 2c ersichtlich, war der Korrosionsschutz unter Verwendung der Vergleichszusammensetzung V24 (Kontrolle 1), die Zinkstaub enthält, wesentlich schlechter als bei der erfindungsgemäßen Beschichtungszusammensetzung (BZ1) oder der Kontrolle 2 (herkömmlicher Chrom(VI)-Primer). Somit konnte gezeigt werden, dass die erfindungsgemäße Beschichtungszusammensetzung einen besseren Korrosionsschutz als eine herkömmliche Zinkstaubfarbe verleiht und einen zumindest gleichwertigen Korrosionsschutz wie eine herkömmliche chromathaltige Beschichtung erreicht.

Die Kondenswassertests (QCT-Tests) wurden, wie vorstehend beschrieben, nach DIN EN ISO 6270-2 durchgeführt (die Prüfdauern betrugen bis zu 1160 h) und die Ergebnisse dieser Tests sind in den Abbildungen 3a bis 3c gezeigt. Wie in den Salzsprühtests ist ersichtlich, dass der Korrosionsschutz unter Verwendung der Vergleichszusammensetzung V24 (Kontrolle 1), die Zinkstaub enthält, wesentlich schlechter war als bei der erfindungsgemäßen Beschichtungszusammensetzung (BZ1) oder der Kontrolle 2 (herkömmlicher Chrom(VI)-Primer).

Der Filiformkorrosionstest wurde, wie vorstehend beschrieben, nach DIN EN ISO 4623-2 durchgeführt und zwei beispielhafte Prüflinge sind in den Abbildungen 4a und 4b gezeigt. Es ist ersichtlich, dass die auf der erfindungsgemäßen Beschichtungszusammensetzung basierende Beschichtung mindestens gleich gute Ergebnisse in dem Filiformkorrosionstest erzielt wie eine Beschichtung, die auf einer herkömmlichen, Zinkstaub-haltigen Beschichtungszusammensetzung (Kontrolle 1) beruht.

<u>Beispiel 6</u>

Weitere Eigenschaften (Tiefung, spezifisches Gewicht, VOC-Gehalt und Farbveränderungen) von Beschichtungen, die auf der erfindungsgemäßen Beschichtungszusammensetzung basieren, wurden mit denen von herkömmlichen Beschichtungszusammensetzungen verglichen. Hierzu wurden beschichtete Metalle wie in Beispiel 5 beschrieben hergestellt und die Eigenschaften der hergestellten Beschichtungen bestimmt (zur Bestimmung des spezifischen Gewichts der Kontrolle 2, wurde deren Dichte als der gemittelte Wert aus dem Chrom(VI)-Primer und der 2K-EP-Grundierung genommen). Die Ergebnisse dieser Versuche sind in den Abbildungen 5 bis 8 gezeigt.

Wie aus den Abbildungen 5 und 6 ersichtlich, ist die auf der erfindungsgemäßen Beschichtungszusammensetzung (BZ1) basierende Beschichtung hinsichtlich Haftfestigkeit (Abb. 5) und spezifischem Gewicht (Abb. 6) der herkömmlichen, Zinkstaub-haltigen Beschichtungszusammensetzung (Kontrolle 1) überlegen und erreicht ähnliche gute Ergebnisse wie eine herkömmliche chromathaltige Beschichtung (Kontrolle 2).

Abbildung 7 zeigt, dass der VOC-Gehalt der auf der erfindungsgemäßen Beschichtungszusammensetzung (BZ1) basierenden Beschichtung wesentlich geringer ist als der VOC-Gehalt von Zinkstaub-haltigen, chromathaltigen Beschichtungen oder 2K-EP-Grundierungen (Kontrollen 1 und 2). Somit konnte gezeigt werden, dass im Vergleich zu Beschichtungszusammensetzungen, die herkömmlich verwendet werden, die Lösungsmittelemissionen stark gesenkt werden können, wenn die erfindungsgemäße Beschichtungszusammensetzung verwendet wird.

Abbildung 8 zeigt, dass die Farbveränderung ($\Delta E^*$) der auf der erfindungsgemäßen Beschichtungszusammensetzung (BZ1) basierenden Beschichtung wesentlich geringer ist als die Farbveränderung von Zinkstaub-haltigen oder chromathaltigen Beschichtungen (Kontrollen 1 und 2). Somit konnte gezeigt werden, dass im Vergleich zu Beschichtungszusammensetzungen, die herkömmlich verwendet werden, die erfindungsgemäße Beschichtungszusammensetzung Vorteile bezüglich UV-Stabilität und Witterungsbeständigkeit aufweist.

**Patentansprüche**

1. Beschichtungszusammensetzung, umfassend:

   (A) ein Bindemittel, das auf einem oder mehreren Organosilicium-Verbindungen $S_1$ basiert,
   (B) einen Härter, der auf einem oder mehreren Organosilicium-Verbindungen $S_2$ basiert, und
   (C) Partikel einer Legierung, die Zn und Mg umfasst,

   wobei die Beschichtungszusammensetzung im Wesentlichen frei von Wasser, chromhaltigen Verbindungen und Bisphenol A-Verbindungen ist, das heißt, dass in der Beschichtungszusammensetzung die Gesamtmenge an Wasser, die Gesamtmenge an chromhaltigen Verbindungen und die Gesamtmenge an Bisphenol A-Verbindungen jeweils weniger als 1 Gew.-%, bezogen auf das Gesamtgewicht der Beschichtungszusammensetzung, beträgt.

2. Beschichtungszusammensetzung nach Anspruch 1, wobei die Partikel (C) eine lamellare Form aufweisen.

3. Beschichtungszusammensetzung nach Anspruch 1 oder 2, wobei das molare Verhältnis von Zn zu Mg in der Legierung 3:1 bis 1:3 beträgt.

4. Beschichtungszusammensetzung nach einem der Ansprüche 1 bis 3, wobei die Organosilicium-Verbindungen $S_1$ ausgewählt werden aus Silikonharzen, die neben Alkoxygruppen mindestens eine funktionelle Gruppe aufweisen, die fähig ist, mit dem Härter (B) zu reagieren.

5. Beschichtungszusammensetzung nach Anspruch 4, wobei die funktionelle Gruppe, die fähig ist, mit dem Härter (B) zu reagieren, ausgewählt wird aus der Gruppe, bestehend aus Amino-, Carboxyl-, Epoxy-, Glykol-, Mercapto-, Hydroxy-, Alkoxysilyl-, Acryloxy-, Methacryloxy-, Ureido- und Vinylgruppen.

6. Beschichtungszusammensetzung nach einem der Ansprüche 1 bis 5, wobei die Organosilicium-Verbindungen $S_2$ eine der nachstehenden allgemeinen Formeln aufweisen:

   $$R^3_rSiY_{4-r} \qquad (I)$$

   $$(R^3)_s(Y)_{3-s}Si\text{-}R^4\text{-}Si(R^3)_t(Y)_{3-t} \qquad (II)$$

   worin

   $R^3$ jeweils unabhängig ausgewählt wird aus organischen monovalenten Resten, wobei mindestens ein Rest $R^3$ eine funktionelle Gruppe aufweist, die fähig ist, mit dem Bindemittel (A) zu reagieren;
   Y jeweils unabhängig ausgewählt wird aus hydrolysierbaren monovalenten Resten;
   $R^4$ ausgewählt wird aus der Gruppe, bestehend aus organischen divalenten Resten, -O- und -NH-;
   r eine ganze Zahl von 1 bis 3 ist;
   s 1 oder 2 ist, und
   t eine ganze Zahl von 1 bis 3 ist.

7. Beschichtungszusammensetzung nach Anspruch 6, wobei die funktionelle Gruppe, die fähig ist, mit dem Bindemittel (A) zu reagieren, ausgewählt wird aus der Gruppe, bestehend aus Carboxyl-, Amino-, Epoxy-, Glykol-, Hydroxy-, Alkoxysilyl-, Mercapto-, Acryloxy-, Methacryloxy-, Ureido- und Vinylgruppen.

8. Beschichtungszusammensetzung nach einem der Ansprüche 1 bis 7, wobei die Organosilicium-Verbindungen $S_1$ eine Organosilicium-Verbindung, in der der organische Rest mindestens eine Epoxygruppe aufweist, umfassen und die Organosilicium-Verbindungen $S_2$ eine Organosilicium-Verbindung, in der der organische Rest mindestens eine Aminogruppe aufweist, umfassen.

9. Beschichtungszusammensetzung nach einem der Ansprüche 1 bis 8, wobei der Gehalt des Bindemittels (A) in der Beschichtungszusammensetzung mindestens 10 Gew.-%, beispielsweise 20 bis 35 Gew.-%, beträgt und/oder der Gehalt der Partikel (C) in der Beschichtungszusammensetzung mindestens 30 Gew.-%, beispielsweise 40 bis 85 Gew.-%, beträgt, und/oder das Verhältnis des Bindemittels (A) zu dem Härter (B) mindestens 1:1, beispielsweise 2:1 bis 50:1, beträgt.

**10.** Beschichtungszusammensetzung nach einem der Ansprüche 1 bis 9, die ferner einen Katalysator zur Beschleunigung der Reaktion zwischen dem Bindemittel (A) und dem Härter (B) enthält.

**11.** Beschichtungszusammensetzung nach Anspruch 10, wobei der Katalysator ausgewählt ist aus der Gruppe, bestehend aus Lewis-Säuren und Zinn-Verbindungen.

**12.** Verwendung einer Beschichtungszusammensetzung nach einem der Ansprüche 1 bis 11 zur Beschichtung einer metallischen Oberfläche.

**13.** Verfahren zur Beschichtung einer metallischen Oberfläche, umfassend die Schritte:

- Aufbringen einer Beschichtungszusammensetzung nach einem der Ansprüche 1 bis 11 auf zumindest einen Teil der metallischen Oberfläche und
- gegebenenfalls Aushärten der Beschichtungszusammensetzung.

**14.** Verwendung nach Anspruch 12 oder Verfahren nach Anspruch 13, wobei die Beschichtungszusammensetzung auf maximal 100°C erwärmt wird.

**15.** Verwendung nach Anspruch 12 oder 14 oder Verfahren nach Anspruch 13 oder 14, wobei die metallische Oberfläche ausgewählt wird aus der Gruppe, bestehend aus Aluminium, Stahl, Legierungen aus Aluminium und/oder Eisen, mit einem Überzug versehenem Aluminium, mit einem Überzug versehenem Stahl und mit einem Überzug versehenen Legierungen aus Aluminium und/oder Eisen.

## Claims

**1.** A coating composition, comprising:

(A) a binder based on one or more organosilicon compounds $S_1$;
(B) a hardener based on one or more organosilicon compounds $S_2$; and
(C) particles of an alloy comprising Zn and Mg,

wherein the coating composition is essentially free of water, chromium-containing compounds and bisphenol A compounds, i.e., the total amount of water, the total amount of chromium-containing compounds and the total amount of bisphenol A compounds in the coating composition in each case is less than 1% by weight, based on the total weight of the coating composition.

**2.** The coating composition according to claim 1, wherein the particles (C) have a lamellar form.

**3.** The coating composition according to claim 1 or 2, wherein the molar ratio of Zn to Mg in the alloy is 3:1 to 1:3.

**4.** The coating composition according to one of claims 1 to 3, wherein the organosilicon compounds $S_1$ are selected from silicone resins having, besides alkoxy groups, at least one functional group able to react with the hardener (B).

**5.** The coating composition according to claim 4, wherein the functional group able to react with the hardener (B) is selected from the group consisting of amino, carboxyl, epoxy, glycol, mercapto, hydroxy, alkoxysilyl, acryloxy, methacryloxy, ureido, and vinyl groups.

**6.** The coating composition according to one of claims 1 to 5, wherein the organosilicon compounds $S_2$ have one of the following general formulas:

$$R^3_rSiY_{4-r} \qquad (I)$$

$$(R^3)_s(Y)_{3-s}Si\text{-}R^4\text{-}Si(R^3)_t(Y)_{3-t} \qquad (II)$$

wherein

$R^3$ is each independently selected from organic monovalent moieties, wherein at least one moiety $R^3$ has a

functional group able to react with the binder (A);
Y is each independently selected from hydrolysable monovalent moieties;
$R^4$ is selected from the group consisting of organic divalent moieties, -O- and -NH-;
r is an integer from 1 to 3;
s is 1 or 2; and
t is an integer from 1 to 3.

7. The coating composition according to claim 6, wherein the functional group able to react with the binder (A) is selected from the group consisting of carboxyl, amino, epoxy, glycol, hydroxy, alkoxysilyl, mercapto, acryloxy, methacryloxy, ureido, and vinyl groups.

8. The coating composition according to one of claims 1 to 7, wherein the organosilicon compounds $S_1$ comprise an organosilicon compound, in which the organic moiety has at least one epoxy group, and the organosilicon compounds $S_2$ comprise an organosilicon compound, in which the organic moiety has at least one amino group.

9. The coating composition according to one of claims 1 to 8, wherein the content of the binder (A) in the coating composition is at least 10% by weight, for example 20 to 35% by weight, and/or the content of the particles (C) in the coating composition is at least 30% by weight, for example 40 to 80% by weight, and/or the ratio of the binder (A) to the hardener (B) is at least 1:1, for example 2:1 to 50:1.

10. The coating composition according to one of claims 1 to 9, further containing a catalyst for accelerating the reaction between the binder (A) and the hardener (B).

11. The coating composition according to claim 10, wherein the catalyst is selected from the group consisting of Lewis acids and tin compounds.

12. Use of a coating composition according to one of claims 1 to 11 for coating a metallic surface.

13. A method for coating a metallic surface, comprising the steps:

- applying a coating composition according to one of claims 1 to 11 on at least a part of the metallic surface; and
- optionally curing the coating composition.

14. The use according to claim 12 or the method according to claim 13, wherein the coating composition is heated to a maximum of 100°C.

15. The use according to claim 12 or 14 or the method according to claim 13 or 14, wherein the metallic surface is selected from the group consisting of aluminium, steel, alloys of aluminium and/or iron, coated aluminium, coated steel, and coated alloys of aluminium and/or iron.

**Revendications**

1. Composition de revêtement, comprenant :

(A) un liant, qui est à base d'un ou de plusieurs composé(s) organosilicié(s) $S_1$,
(B) un durcisseur, qui est à base d'un ou de plusieurs composé(s) organosilicié(s) $S_2$, et
(C) des particules d'un alliage qui comprend Zn et Mg,

la composition de revêtement étant essentiellement exempte d'eau, de composés contenant du chrome et de composés à base de bisphénol A, c'est-à-dire que dans la composition de revêtement la quantité totale d'eau, la quantité totale de composés contenant du chrome et la quantité totale de composés à base de bisphénol A valent chacune moins de 1 % en poids, par rapport au poids total de la composition de revêtement.

2. Composition de revêtement selon la revendication 1, dans laquelle les particules (C) présentent une forme lamellaire.

3. Composition de revêtement selon la revendication 1 ou 2, dans laquelle le rapport molaire de Zn à Mg dans l'alliage vaut de 3:1 à 1:3.

**4.** Composition de revêtement selon l'une quelconque des revendications 1 à 3, dans laquelle les composés organosiliciés $S_1$ sont choisis parmi des résines silicone qui en plus de groupes alcoxy comportent au moins un groupe fonctionnel qui est apte à réagir avec le durcisseur (B).

**5.** Composition de revêtement selon la revendication 4, dans laquelle le groupe fonctionnel qui est apte à réagir avec le durcisseur (B) est choisi dans l'ensemble constitué par les groupes amino, carboxy, époxy, glycol, mercapto, hydroxy, alcoxysilyle, acryloxy, méthacryloxy, uréido et vinyle.

**6.** Composition de revêtement selon l'une quelconque des revendications 1 à 5, dans laquelle les composés organosiliciés $S_2$ présentent l'une des formules générales suivantes :

$$R^3_rSiY_{4-r} \qquad (I)$$

$$(R^3)_s(Y)_{3-s}Si\text{-}R^4\text{-}Si(R^3)_t(Y)_{3-t} \qquad (II),$$

dans lesquelles

$R^3$ est choisi chaque fois indépendamment parmi des radicaux organiques monovalents, au moins un radical $R^3$ comportant un groupe fonctionnel qui est apte à réagir avec le liant (A) ;
Y est choisi chaque fois indépendamment parmi des radicaux monovalents hydrolysables ;
$R^4$ est choisi dans l'ensemble constitué par des radicaux organiques divalents, -O- et -NH- ;
r est un nombre entier valant de 1 à 3 ;
s est 1 ou 2, et
t est un nombre entier valant de 1 à 3.

**7.** Composition de revêtement selon la revendication 6, dans laquelle le groupe fonctionnel qui est apte à réagir avec le liant (A) est choisi dans l'ensemble constitué par les groupes carboxy, amino, époxy, glycol, hydroxy, alcoxysilyle, mercapto, acryloxy, méthacryloxy, uréido et vinyle.

**8.** Composition de revêtement selon l'une quelconque des revendications 1 à 7, dans laquelle les composés organosiliciés $S_1$ comprennent un composé organosilicié dans lequel le radical organique comporte au moins un groupe époxy, et les composés organosiliciés $S_2$ comprennent un composé organosilicié dans lequel le radical organique comporte au moins un groupe amino.

**9.** Composition de revêtement selon l'une quelconque des revendications 1 à 8, dans laquelle la concentration du liant (A) dans la composition de revêtement vaut au moins 10 % en poids, par exemple 20 à 35 % en poids et/ou la concentration des particules (C) dans la composition de revêtement vaut au moins 30 % en poids, par exemple 40 à 85 % en poids, et/ou le rapport du liant (A) au durcisseur (B) vaut au moins 1:1, par exemple 2:1 à 50:1.

**10.** Composition de revêtement selon l'une quelconque des revendications 1 à 9, qui contient encore un catalyseur pour l'accélération de la réaction entre le liant (A) et le durcisseur (B).

**11.** Composition de revêtement selon la revendication 10, dans laquelle le catalyseur est choisi dans l'ensemble constitué par les acides de Lewis et les composés à base d'étain.

**12.** Utilisation d'une composition de revêtement selon l'une quelconque des revendications 1 à 11 pour le revêtement d'une surface métallique.

**13.** Procédé pour la revêtement d'une surface métallique, comprenant les étapes consistant à :

- appliquer une composition de revêtement selon l'une quelconque des revendications 1 à 11 sur au moins une partie de la surface métallique et
- éventuellement faire durcir la composition de revêtement.

**14.** Utilisation selon la revendication 12 ou procédé selon la revendication 13, dans laquelle/lequel on chauffe la composition de revêtement à au maximum 100 °C.

**15.** Utilisation selon la revendication 12 ou 14 ou procédé selon la revendication 13 ou 14, dans laquelle/lequel on

choisit la surface métallique dans l'ensemble constitué par l'aluminium, l'acier, les alliages d'aluminium et/ou de fer, l'aluminium muni d'un revêtement, l'acier muni d'un revêtement et les alliages d'aluminium et/ou de fer munis d'un revêtement.

**Abb. 1**

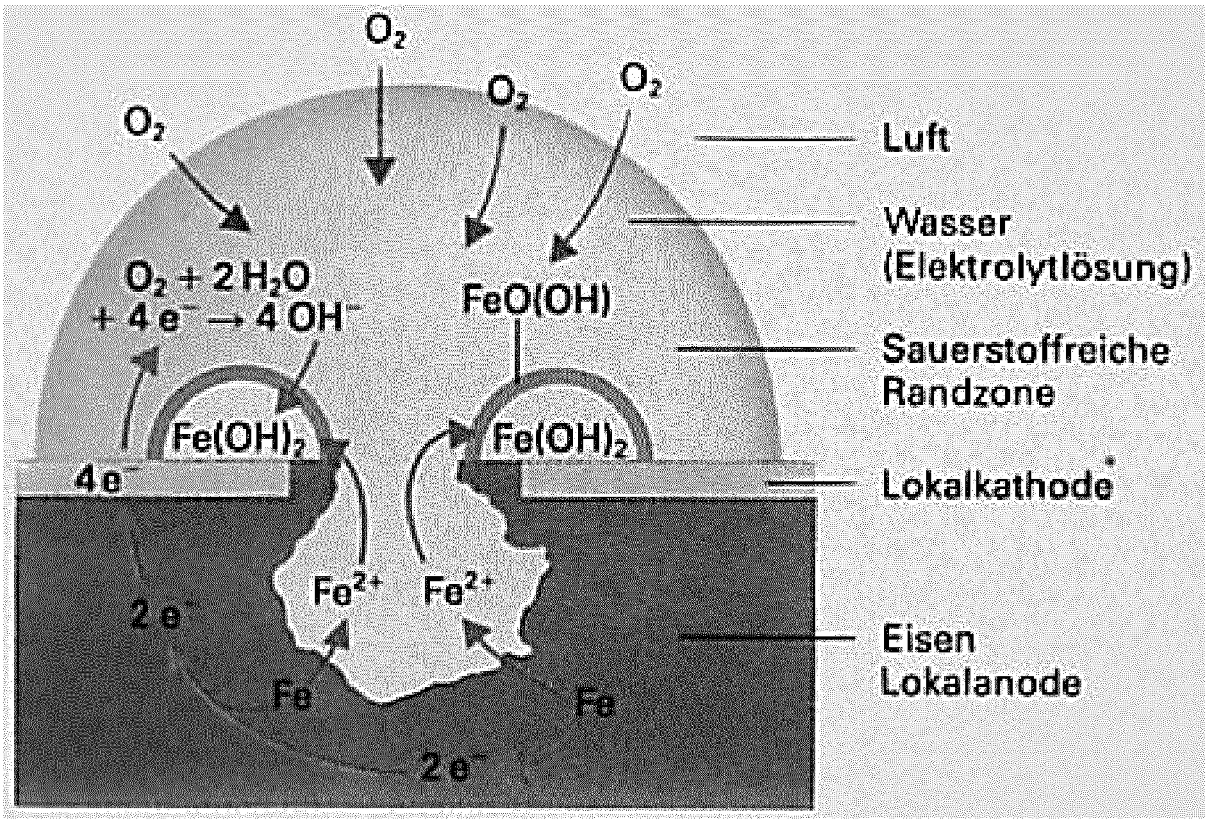
O2
O2
O2
O2
O2 + 2 H2O
+ 4 e⁻ → 4 OH⁻
FeO(OH)
Fe(OH)2
Fe(OH)2
4 e⁻
Fe2+
Fe2+
2 e⁻
Fe
Fe
2 e⁻
Luft
Wasser
(Elektrolytlösung)
Sauerstoffreiche
Randzone
Lokalkathode
Eisen
Lokalanode

Abb. 2

a)

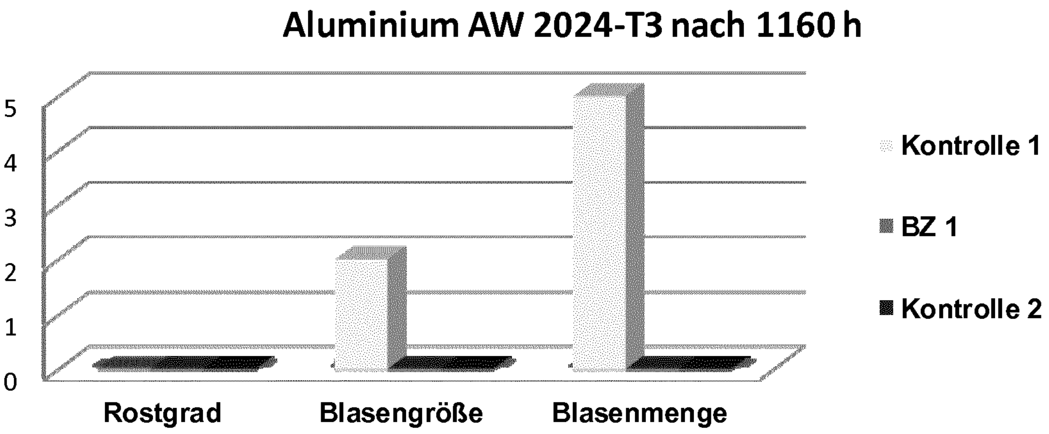
Aluminium AW 2024-T3 nach 1160 h
5
4
3
2
1
0
Kontrolle 1
BZ 1
Kontrolle 2
Rostgrad
Blasengröße
Blasenmenge

b)

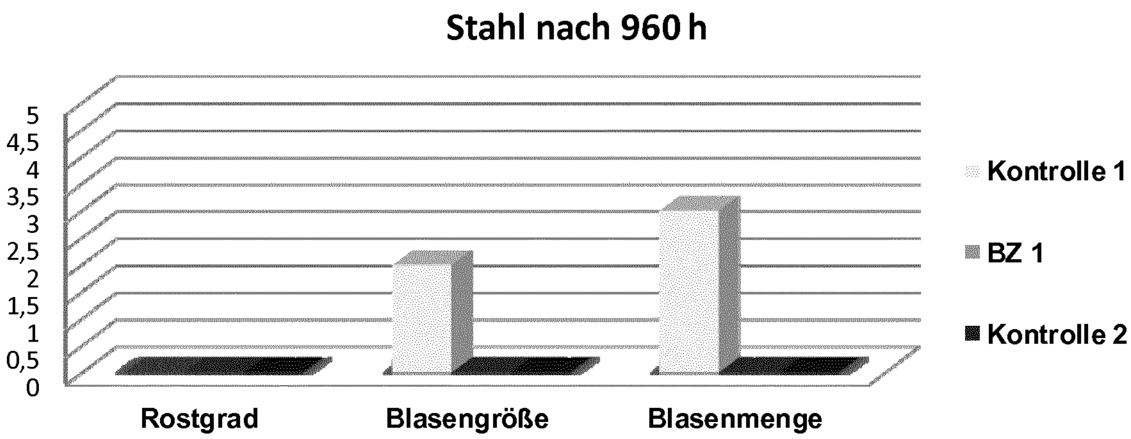
Stahl nach 960 h
5
4,5
4
3,5
3
2,5
2
1,5
1
0,5
0
Kontrolle 1
BZ 1
Kontrolle 2
Rostgrad
Blasengröße
Blasenmenge

c)

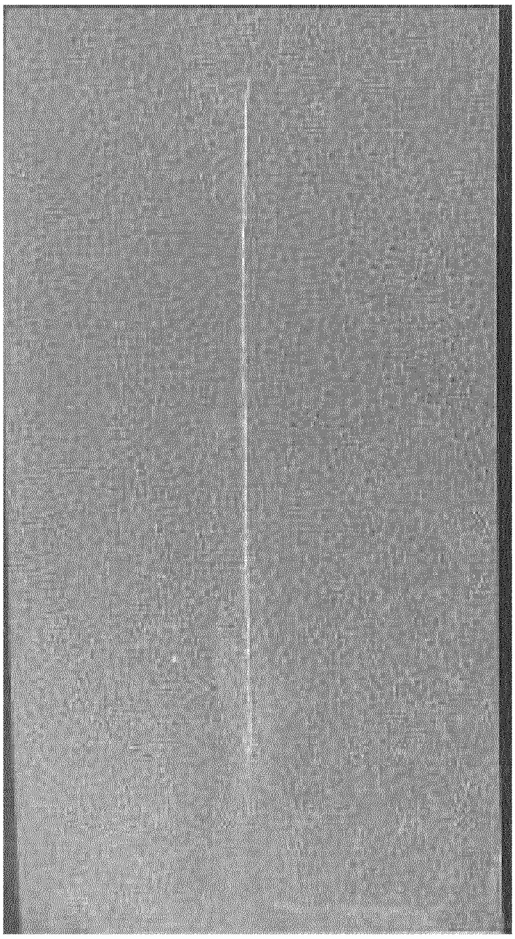

Kontrolle 1

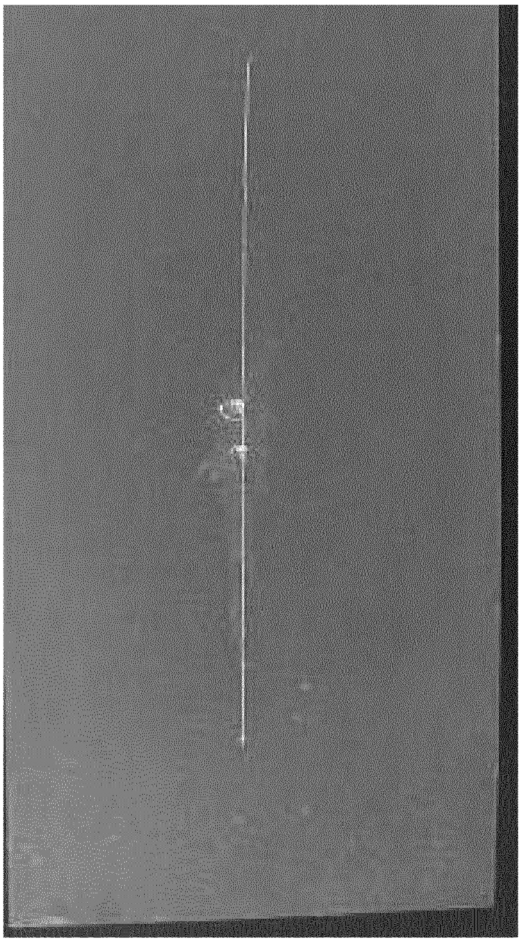

Erfindungsgemäße
Beschichtung

Abb. 3

a)

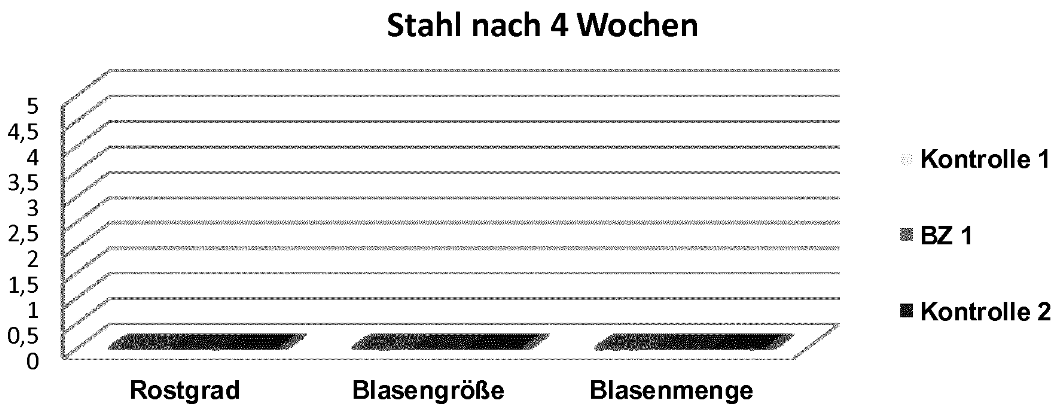
Stahl nach 4 Wochen
5
4,5
4
3,5
3
2,5
2
1,5
1
0,5
0
Rostgrad
Blasengröße
Blasenmenge
Kontrolle 1
BZ 1
Kontrolle 2

b)

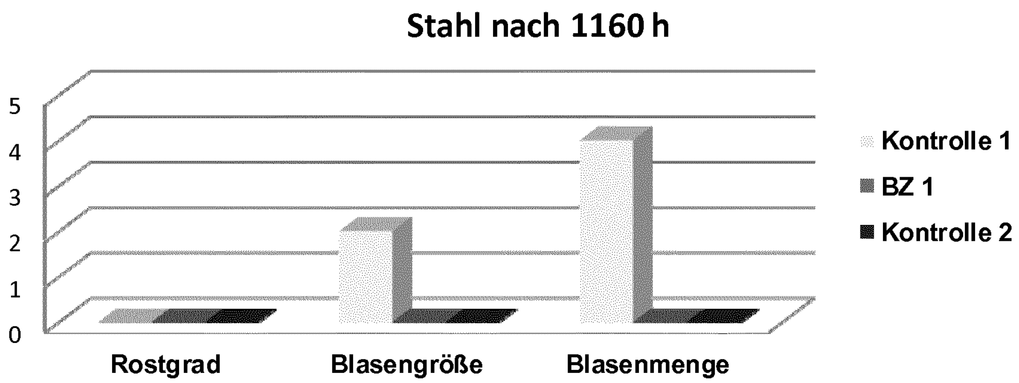
Stahl nach 1160 h
5
4
3
2
1
0
Rostgrad
Blasengröße
Blasenmenge
Kontrolle 1
BZ 1
Kontrolle 2

c)

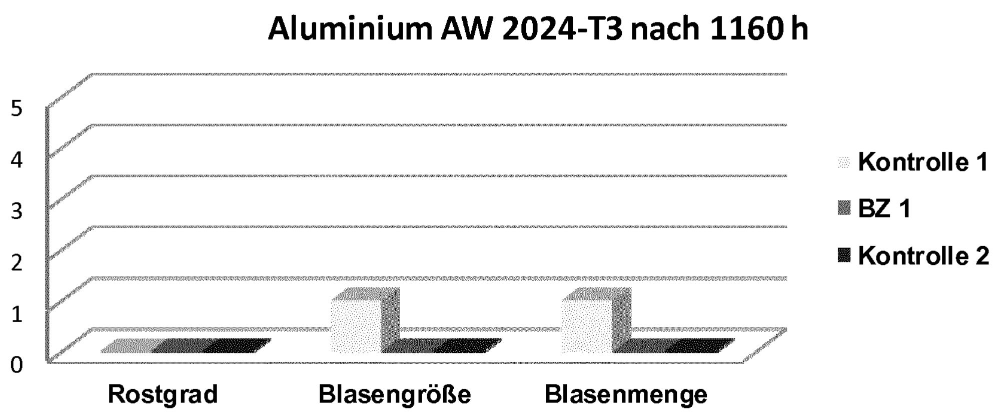
Aluminium AW 2024-T3 nach 1160 h
5
4
3
2
1
0
Rostgrad
Blasengröße
Blasenmenge
Kontrolle 1
BZ 1
Kontrolle 2

Abb. 4

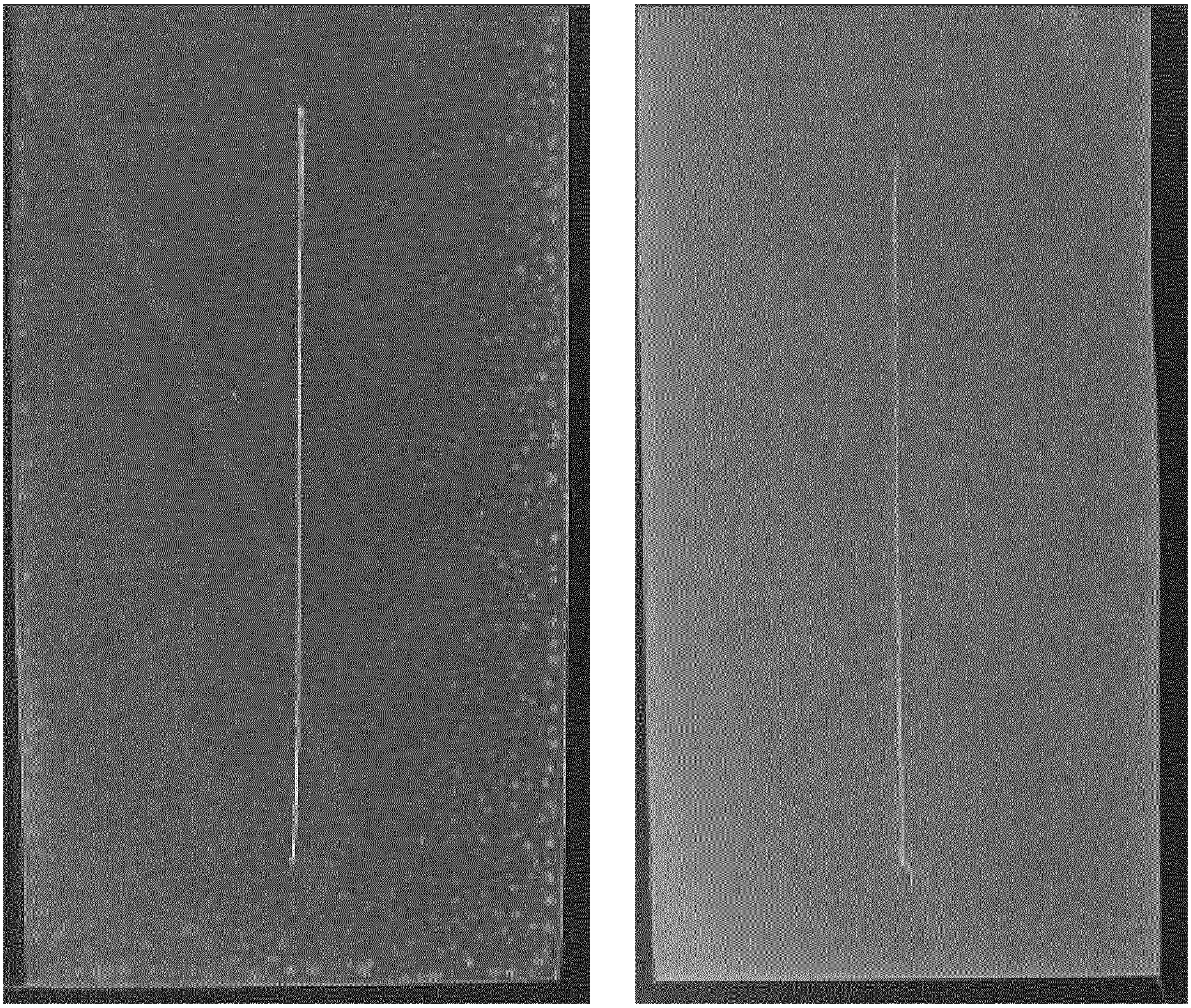

Kontrolle 1

Erfindungsgemäße Beschichtung

Abb. 5

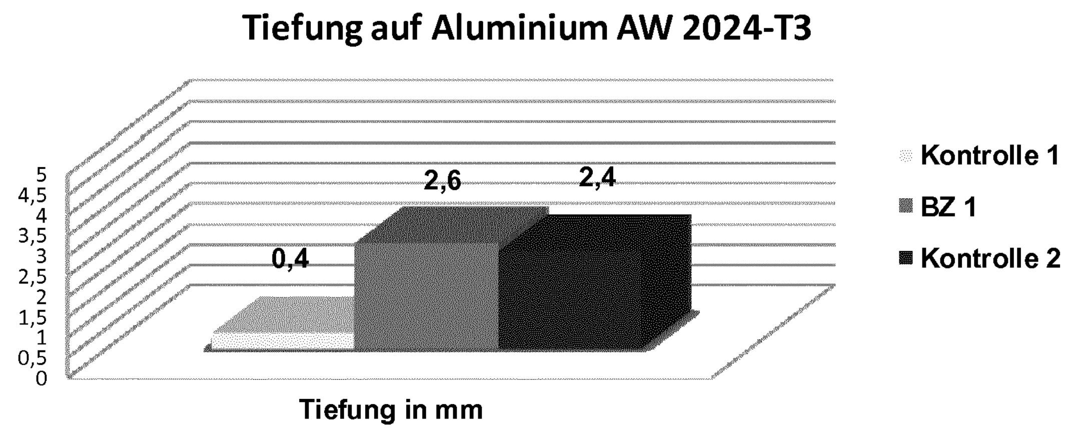
Tiefung auf Aluminium AW 2024-T3
5
4,5
4
3,5
3
2,5
2
1,5
1
0,5
0
0,4
2,6
2,4
Tiefung in mm
Kontrolle 1
BZ 1
Kontrolle 2

Abb. 6

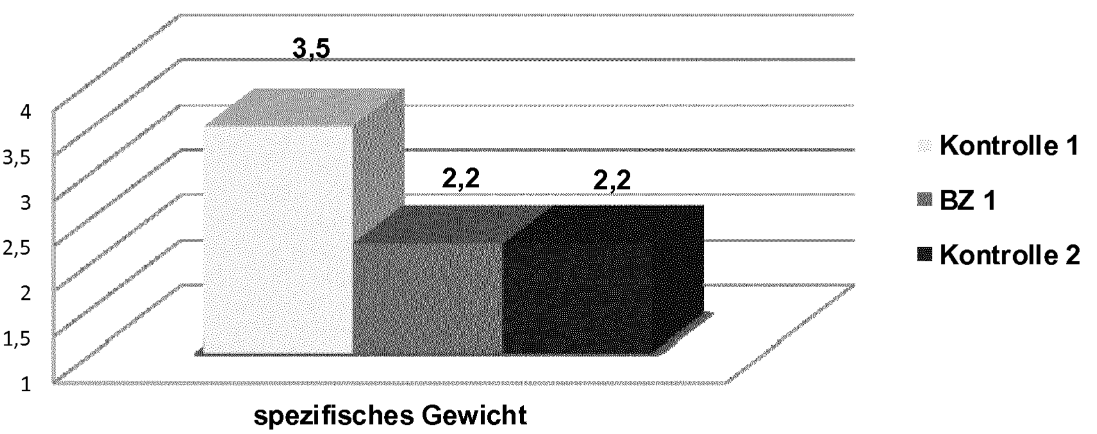
4
3,5
3
2,5
2
1,5
1
3,5
2,2
2,2
spezifisches Gewicht
Kontrolle 1
BZ 1
Kontrolle 2

Abb. 7

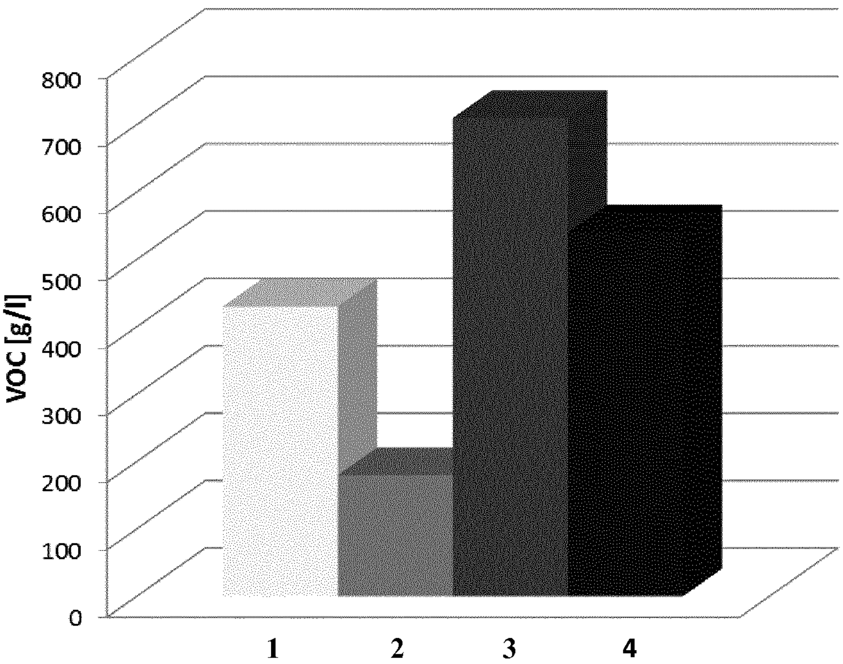
800
700
600
500
400
300
200
100
0
VOC [g/l]
1
2
3
4

Abb. 8

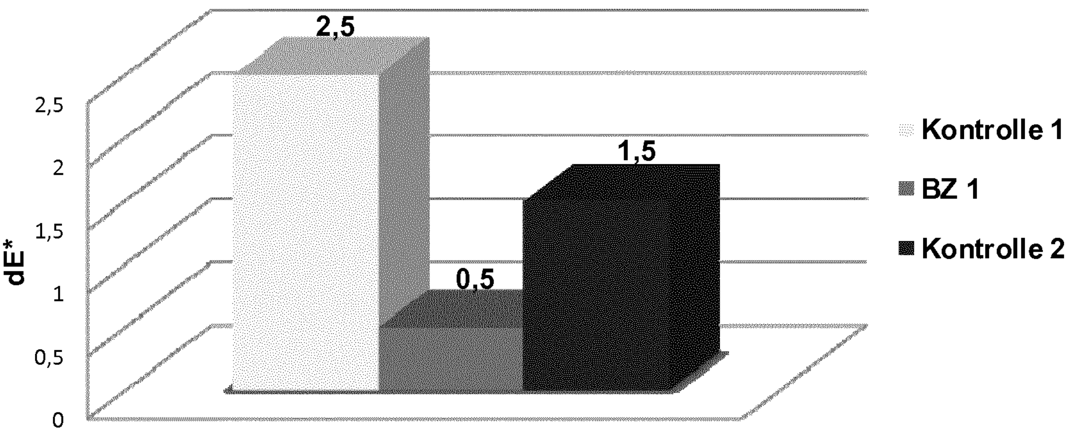
2,5
2
1,5
1
0,5
0
dE*
2,5
0,5
1,5
Kontrolle 1
BZ 1
Kontrolle 2

Abb. 9

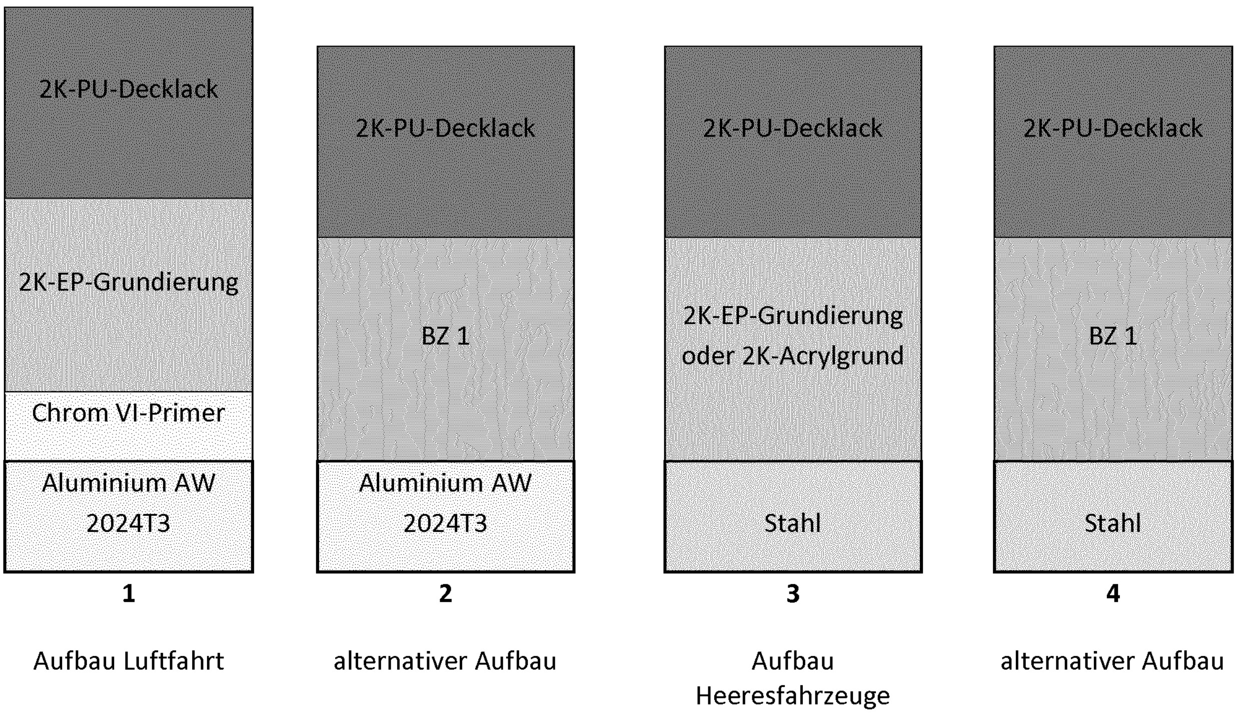
2K-PU-Decklack
2K-EP-Grundierung
Chrom VI-Primer
Aluminium AW 2024T3
1
Aufbau Luftfahrt
2K-PU-Decklack
BZ 1
Aluminium AW 2024T3
2
alternativer Aufbau
2K-PU-Decklack
2K-EP-Grundierung oder 2K-Acrylgrund
Stahl
3
Aufbau Heeresfahrzeuge
2K-PU-Decklack
BZ 1
Stahl
4
alternativer Aufbau

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102009052399
- DE 3412648 C
- EP 1174467 A2
- US 20020028296 A


### In der Beschreibung aufgeführte Nicht-Patentliteratur


- Organikum. Deutscher Verlag der Wissenschaften, 1990
- **STREITWIESER/HEATHCOOK.** Organische Chemie. VCH, 1990
- **BEYER/WALTER.** Lehrbuch der Organischen Chemie. S. Hirzel Verlag Stuttgart, 1988
- **CAREY/SUNDBERG.** Organische Chemie. VCH, 1995
- **MARCH.** Advanced Organic Chemistry. John Wiley & Sons, 1985
- Römpp Chemie Lexikon. Georg Thieme Verlag, 1989